# EUROPÄISCHE PATENTSCHRIFT

(11) **EP 3 811 559 B1**
(45) Veröffentlichungstag und Bekanntmachung des Hinweises auf die Patenterteilung: **02.11.2022**
(21) Anmeldenummer: 19732623.4
(22) Anmeldetag: 19.06.2019
(51) Int. Cl.: H04L 9/08, H04L 9/32, G06F 21/31

(54) **AUTOMATISCHES ADAPTIVES KALIBRIEREN VON AUTHENTIFIZIERUNGSANFORDERUNGEN**
AUTOMATIC ADAPTIVE CALIBRATION OF AUTHENTICATION REQUIREMENTS
ÉTALONNAGE ADAPTATIF AUTOMATIQUE DE DEMANDES D'AUTHENTIFICATION

(30) Priorität: 21.06.2018 DE 102018114961
(43) Veröffentlichungstag der Anmeldung: 28.04.2021
(73) Patentinhaber: Bundesdruckerei GmbH, 10969 Berlin (DE); neXenio GmbH, 10117 Berlin (DE)
(72) Erfinder: ROLAND, Maximilian Müller, 12159 Berlin (DE); SCHULTZ, Stephan, 14471 Berlin (DE); MIRTSCHIN, Marvin, 14473 Potsdam (DE); WEIDMANN, Vera, 14473 Potsdam (DE); LOWITZKI, Leon, 14473 Potsdam (DE); HENNIG, Patrick, 10437 Berlin (DE); BERGER, Philipp, 10627 Berlin (DE); SCHNJAKIN, Maxim, 10245 Berlin (DE)
(74) Vertreter: Richardt Patentanwälte PartG mbB
(86) Internationale Anmeldenummer: PCT/EP2019/066299
(87) Internationale Veröffentlichungsnummer: WO 2019/243474

(56) Entgegenhaltungen:
- WO-A1-2015/127256
- ALZUBAIDI ABDULAZIZ ET AL: "Authentication of Smartphone Users Using Behavioral Biometrics", IEEE COMMUNICATIONS SURVEYS & TUTORIALS, Bd. 18, Nr. 3, 19. August 2016 (2016-08-19), Seiten 1998-2026, XP011620867, DOI: 10.1109/COMST.2016.2537748 [gefunden am 2016-08-19]

## Beschreibung

Die Erfindung betrifft ein Verfahren zum automatischen adaptiven Kalibrieren von Authentifizierungsanforderungen für ein Authentifizieren eines Nutzers sowie ein mobiles tragbares Telekommunikationsgerät, einen Server und ein System zum Ausführen des Verfahrens.

Mobile, tragbare Telekommunikationsgerät sind fest im Alltag des Menschen integriert und kaum mehr wegzudenken. Um Zugriff auf ein solches Gerät oder über ein solches Gerät auf andere Systems zu erlangen, muss sich ein Nutzer üblicherweise über eine persönliche Identifikationsnummer (PIN), ein Passwort oder gegebenenfalls einen Fingerabdruck authentifizieren. Angesichts der Vielzahl an PINgesicherten Geräten und Anwendungen, welche Nutzer alltäglich verwenden, und der damit verbundenen Vielzahl zu merkenden PINs kommt es leicht vor, dass ein Nutzer eine PIN vergisst. Passwörter, die oftmals frei wählbar sind, sind entweder zu kurz und leicht zu merken, was jedoch den Nachteil hat, dass sie schneller zu erraten sind und somit nur ein geringes Maß an Sicherheit bieten. Passwörter, welche ein hohes Maß an Sicherheit bieten, sind demgegenüber oft lang und komplex. Insbesondere die Verwendung von Groß- und Kleinschreibung, sowie von Zahlen und/oder Sonderzeichen gestaltet die Eingabe sicherer Passwörter oft aufwendig. Dies gilt umso mehr, wenn es sich bei dem mobilen tragbaren Telekommunikationsgerät beispielsweise um ein Smartphone handelt, bei welchem die Eingabe über ein Touch-Display mit eingeblendeten Tastenfeldern erfolgt. Oftmals liegt dabei zudem eine Mehrfachbelegung der Tastenfelder vor und/oder die Größe der eingeblendeten Tastenfelder ist kleiner als die Fingerkuppen des Nutzers. Fingerabdrucksensoren haben den Nachteil, dass der Nutzer extra einen vorbestimmten Finger auf diesem platzieren muss. Hält er das mobile, tragbare Telekommunikationsgerät in der falschen Hand kann der Fingerabdrucksensoren den Nutzer oftmals bereits nicht mehr erkennen. Ferner gibt es zahlreiche Situationen, in denen ein Fingerabdrucksensor nicht richtig funktioniert, wie etwa falls der Nutzer schmutzige oder feuchte Finger hat, ganz zu schweigen davon, wenn der Nutzer Handschuhe trägt.

Eine Alternative können verhaltensbasierte Authentifizierungsverfahren bieten, bei welchen sich der Nutzer durch für ihn charakteristische Verhaltensmerkmale identifiziert. Bei verhaltensbasierten Ansätzen besteht jedoch das Problem, dass das Verhalten eines Nutzers Schwankungen unterworfen sein kann, diese können sowohl durch den Nutzer selbst als auch durch Umgebungsfaktoren beeinflusst werden. Werden die Voraussetzungen für eine erfolgreiche Authentifizierung zu hoch angesetzt, so kann diese dazu führen, dass der registrierte Nutzer, obwohl es sich um die richtige Person handelt, aufgrund der zuvor genannten Schwankungen fälschlicher Weise nicht erkannt wird. Werden die Voraussetzungen dagegen zu niedrig angesetzt, besteht die Gefahr, dass falsche Personen, deren Verhalten zufällig Ähnlichkeiten mit dem Verhalten des registrierten Nutzers aufweisen fälschlicher Weise als der registrierte Nutzer authentifiziert werden.

Die WO 2015/127256 A1 beschreibt ein mobiles Gerät, welches eine kontinuierliche Authentifizierung mit einer authentifizierenden Entität durchführt. Das mobile Gerät enthält einen Satz biometrischer und nicht biometrischer Sensoren und einen Prozessor. Der Prozessor ist dazu konfiguriert, Sensordaten von dem Satz von Sensoren zu empfangen, Authentifizierungsinformationen aus den empfangenen Sensordaten zu bilden und die Authentifizierungsinformationen kontinuierlich zu aktualisieren.

"Authentication of Smartphone Users Using Behavioral Biometrics" von Alzubaidi Abdulaziz et al. in IEEE Communications Surveys & Tutorials, Band 18, Nr. 3, Seiten 1998 bis 2026 beschreibt potenzielle Risiken, die bei einem Diebstahl von oder einem Zugriff auf Smartphones auftreten können. Das Konzept einer kontinuierlichen Authentifizierung wird erörtert und aktuelle Ansätze und Mechanismen der Verhaltensbiometrie in Bezug auf Methodik, zugehörige Datensätze und Bewertungsansätze werden analysiert.

Der Erfindung liegt demgegenüber die Aufgabe zugrunde, ein verbessertes Verfahren zur Authentifizierung eines Nutzers zu ermöglichen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum automatischen adaptiven Kalibrieren von Authentifizierungsanforderungen für ein Authentifizieren eines aktuellen Nutzers eines mobilen tragbaren Telekommunikationsgeräts.

Das Verfahren umfasst ein Bereitstellen eines Programmmoduls, welches eine wahrscheinlichkeitsbasierte Entscheidungsstruktur implementiert. Bei der wahrscheinlichkeitsbasierten Entscheidungsstruktur handelt es sich beispielsweise um ein bayessches Netzwerk.

Das Programmmodul ist konfiguriert zum Empfangen von Eingangsdaten, welche ein potentielles Schadenszenario, ein potentielles Angriffsszenario, ein oder mehrere ausgeführte Authentifizierungsverfahren sowie einen aus den ein oder mehreren ausgeführten Authentifizierungsverfahren resultierenden Konfidenzwert für eine Identität des aktuellen Nutzers des mobilen tragbaren Telekommunikationsgeräts mit einem registrierten Nutzer identifizieren.

Es wird ein aktuelles Schadensrisiko bestimmt. Bei dem aktuellen Schadensrisiko handelt es sich um einen von der wahrscheinlichkeitsbasierten Entscheidungsstruktur unter Verwendung einer Kombination aus dem empfangenen Konfidenzwert, einem von der wahrscheinlichkeitsbasierten Entscheidungsstruktur für das potentielle Schadenszenario bestimmten Erwartungswert für einen potentiellen Schaden, im Falle einer fehlerhaften Authentifizierung des aktuellen Nutzers, und einer von der wahrscheinlichkeitsbasierten Entscheidungsstruktur für das potentielle Angriffsszenario bestimmten Angriffswahrscheinlichkeit berechneten Wert.

Es wird eine Prognose für potentielle Schadensrisikos im Falle eines Ausführens von ein oder mehreren vordefinierten zusätzlichen Authentifizierungsverfahren erstellt unter Verwendung von vordefinierten Erwartungswerten für potentielle Erhöhungen des Konfidenzwerts durch die ein oder mehreren vordefinierten zusätzlichen Authentifizierungsverfah ren.

Es wird eine Prognose für potentielle Authentifizierungsaufwände im Falle eines Ausführens von ein oder mehreren vordefinierten zusätzlichen Authentifizierungsverfahren erstellt unter Verwendung von vordefinierten Erwartungswerten für potentielle Erhöhungen des Authentifizierungsaufwands durch die ein oder mehreren Authentifizierungsverfahren.

Es wird eine Auswahl von Authentifizierungsverfahren erstellt, welche zumindest die ein oder mehreren ausgeführten Authentifizierungsverfahren umfasst, unter Berücksichtigung der ein oder mehreren vordefinierten zusätzlichen Authentifizierungsverfahren. Als Auswahlkriterium wird dabei verwendet, dass für die Auswahl von Authentifizierungsverfahren eine Kombination aus Schadensrisiko und Authentifizierungsaufwand minimiert ist.

Schließlich werden Ausgabedaten, welche die Auswahl von Authentifizierungsverfahren identifizieren.

Das Verfahren umfasst ferner ein Ausführen von ein oder mehreren verhaltensbasierten Authentifizierungsverfahren unter Verwendung des mobilen tragbaren Telekommunikationsgeräts zum Authentifizieren des aktuellen Nutzers.

Die Eingangsdaten werden durch das Programmmodul empfangen. Die Eingangsdaten identifizieren das potentielle Schadenszenario, das potentielle Angriffsszenario, die ein oder mehreren ausgeführten verhaltensbasierten Authentifizierungsverfahren und den aus den ein oder mehreren ausgeführten verhaltensbasierten Authentifizierungsverfahren resultierenden Konfidenzwert.

In Antwort auf das Empfangen der Eingangsdaten, werden die Ausgabedaten durch das Programmmodul ausgegeben, welche die Auswahl von Authentifizierungsverfahren identifizieren.

Falls die Auswahl von Authentifizierungsverfahren identisch mit den ein oder mehreren ausgeführten verhaltensbasierten Authentifizierungsverfahren ist, wird ein Authentifizierungssignal erzeugt, welches eine erfolgreiche Authentifizierung des aktuellen Nutzers unter Verwendung des mobilen tragbaren Telekommunikationsgeräts bestätigt.

Falls die Auswahl ein oder mehrere erste zusätzliche Authentifizierungsverfahren der vordefinierten zusätzlichen Authentifizierungsverfahren umfasst, werden die ausgewählten ein oder mehreren ersten zusätzlichen Authentifizierungsverfahren unter Verwendung des mobilen tragbaren Telekommunikationsgeräts zum Authentifizieren des aktuellen Nutzers ausgeführt.

Ausführungsformen können den Vorteil haben, dass sie es ermöglichen eine automatische Kalibrierung von Authentifizierungsanforderungen, d.h. Sicherheitsniveaus, für die Authentifizierung von Nutzern basierend auf einer erwarteten Schadensgröße, einer Angriffswahrscheinlichkeit, dem Aufwand für die Authentifizierung sowie einem Nutzerverhalten mit einer wahrscheinlichkeitsbasierten Entscheidungsstruktur, wie beispielsweise einem bayesschen Netzwerk.

Ein beispielhafter Anwendungsfall kann etwa ein Nutzer sein, welcher sich gegenüber einem mobilen tragbaren Telekommunikationsgerät oder gegenüber einem anderen System authentifizieren, welches beispielsweise eine Schließsystem zur Zugangskontrollsteuert. Zusätzliche Sicherheitsinteraktionen oder Sicherheitsabfragen, d.h. zusätzliche Authentifizierungsverfahren, reduzieren im Allgemeinen die Benutzerfreundlichkeit des mobilen tragbaren Telekommunikationsgerät bzw. des Systems, da der Authentifizierungsaufwand erhöht wird. Dies gilt insbesondere, wenn der Ausgangspunkt eine verhaltensbasiertes Authentifizierungsverfahren ist und es sich bei den zusätzlichen Sicherheitsinteraktionen oder Sicherheitsabfragen um verhaltensunabhängige Authentifizierungsverfahren handelt, wie etwa ein Erfassen biometrischer Merkmale, ein Abfragen einer PIN, PUK oder TAN, oder um Fragen zu persönlichen Fakten des Nutzer, wie vollständiger Name, Geburtsdatum, Anschrift, Vorlieben, Details zu seiner Familie, Beziehungen, Ereignisse aus der persönlichen Geschichte des Nutzers etc. All diese verhaltensunabhängige Authentifizierungsverfahren erfordern eine oder mehrere zusätzliche Interaktionen des Nutzers mit dem mobilen tragbaren Telekommunikationsgerät. Diese Interaktionen benötigen zusätzliche Zeit und zwingen den Nutzer übliches Verhalten zu unterbrechen.

Andererseits vermögen solche zusätzlichen Sicherheitsinteraktionen oder Sicherheitsabfragen jedoch die Genauigkeit der Authentifizierungsentscheidung zu erhöhen. Fehlentscheidungen beim Authentifizieren können sowohl falsch-positive Entscheidungen sein, bei welchen ein Nutzer fälschlich authentifiziert wird, obwohl es sich bei diesem nicht um den zu authentifizierenden, registrierten Nutzer handelt, als auch falsch-negative Entscheidungen sein, bei welchen ein Nutzer fälschlich nicht authentifiziert, obwohl es sich bei diesem tatsächlich um den zu authentifizierenden, registrierten Nutzer handelt. Bei einer Authentifizierung handelt es sich im Allgemeinen stets um einen graduellen Prozess. Je mehr Aufwand betrieben wird, desto höher ist der erreichbare Authentifizierungsgrad, d.h. desto höher ist die Sicherheit, dass es sich bei der Authentifizierung um eine korrekte Authentifizierung handelt. Zu beachten gilt, dass unterschiedliche Systeme und Anwendungen, beispielsweise Zugangskontrollen zu unterschiedlichen Einrichtungen oder Bereichen, unterschiedlichen Anforderung bzgl. des notwendigen Authentifizierungsgrads an eine Authentifizierung stellen.

Ausführungsformen ermöglichen es demgegenüber ein verbessertes Authentifizierungsverfahren basierend auf einem zu erwarteten Schaden, im Falle einer fehlerhaften Authentifizierung, einerseits und einem möglichen Nutzen in Form eines möglichst geringen Authentifizierungsaufwands andererseits zu implementieren. Hierbei kalibrieren Ausführungsformen automatisch die Anforderungen, d.h. Sicherheitsniveaus, welche an eine erfolgreiche Authentifizierung gestellt werden unter Abwägung des zu erwarteten Schadens sowie des Notwendigen Authentifizierungsaufwands.

Ausführungsformen können beispielsweise zur Authentifizierung zum Zwecke der Identifikation mithilfe einer auf dem mobilen tragbaren Telekommunikationsgerät ausgeführten Anwendung, wie etwa einer Smartphone App im Falle eines Smartphones, oder zur Authentifizierung gegenüber einer Zugangskontrolleinrichtung, wie etwa einer Schließvorrichtung einer Tür, im Zuge einer Zugangskontrolle. Eine Kalibrierung der für eine positive Authentifizierungsentscheidung zu erfüllenden Authentifizierungsvoraussetzungen erfolgt hierbei automatisch.

Minimale Ähnlichkeitsniveaus von Identitätsinformationen zum Authentifizieren von Nutzern für verschiedene Szenarien mit unterschiedlichen Risikostufen sind nur schwer im Vorhinein zu spezifizieren. Andererseits scheidet eine Anpassung von Hand ebenfalls aus. Ein zu hoher Schwellenwert als Voraussetzung für eine erfolgreiche Authentifizierung erzeugt zu viele falsch-positive Authentifizierungen, bei welchen z.B. Nutzern durch eine Zugangskontrolleinrichtung Zugang gewährt, obwohl diese eigentlich nicht zugangsberechtigt sind. Ein zu niedrig gewählter Schwellenwert erzeugt wiederum zu viele falsch-negative Authentifizierungen, bei welchen z.B. Nutzern der Zugang durch eine Zugangskontrolleinrichtung verwehrt wird, obwohl diese eigentlich zugangsberechtigt sind. Zu strikte Authentifizierungsanforderungen, d.h. Sicherheitsniveaus, resultieren in unnötig vielen Sicherheitsinteraktionen, wie etwa zusätzlichen Abfrage von PINs oder Passwörtern, welche über eine Tastatur und/oder einen Touch-Display eingegeben werden müssen, wodurch die Benutzerfreundlichkeit deutlich reduziert wird. Ersten führt dies zu Verzögerungen, zweitens muss der Nutzer seine Tätigkeiten unterbrechen, um beispielsweise PIN oder Passwort einzugeben. Zu schwache Authentifizierungsanforderungen, d.h. Sicherheitsniveaus, mit zu wenigen Sicherheitsinteraktionen drohen andererseits in zu vielen falsch-positiven Authentifizierungen zu resultieren. Der Risiko-Aufwands-Trade-Off, d.h. das Verhältnis zwischen Schadensrisiko und Authentifizierungsaufwand, kann sich ständig dynamisch über die Zeit ändern, etwa aufgrund von Änderung des Kontextes. Eine ständige, Kalibrierung der Authentifizierungsvoraussetzungen, etwa im Sekundentakt, für individuelle Nutzer ist manuell für den Administrator realistischer Weise nicht zu bewältigen.

Erwartete Schadenswerte bei falscher Authentifikation, d.h. Erwartungswert für einen potentiellen Schaden je nach Kontext, Angriffswahrscheinlichkeiten je nach Kontext, Authentifizierungsaufwände aufgrund von authentifizierungsspezifischen Nutzerinteraktionen, wie etwa durch zusätzliche Nutzerabfragen, und weitere Kontextinformationen an werden beispielsweise vorgegeben. Ein Nutzer authentifiziert sich mit einem mobilen tragbaren Telekommunikationsgerät, beispielsweise bei einer App, mittels verhaltensbasierter Authentifizierung und gegebenenfalls weiterer Sicherheitsinteraktionen zur verhaltensunabhängigen Authentifizierung, wie etwa PIN, Fingerabdruck, Gesichtserkennung. Basierend auf den Kontextinformationen, erwarteten Schadensgrößen, Authentifizierungsaufwand und Angriffsrisiko wird nach Ausführungsformen für verschiedene Authentifizierungsverfahren unter Berücksichtigung der zu erwartenden Konfidenzwerte ein Schadensrisiko und Authentifizierungsaufwand und wählt eine optimale Kombination von Authentifizierungsverfahren aus, für welche die Kombination aus Schadensrisiko und Authentifizierungsaufwand minimiert ist. Für die Berechnung des Schadensrisikos wird eine der wahrscheinlichkeitsbasierte Entscheidungsstruktur, z.B. ein bayessches Netzwerk, eingesetzt, welches unter Verwendung bedingter Wahrscheinlichkeiten der Knoten, die Einflussgrößen des Schadensrisikos repräsentiert, auf dessen Basis eine Entscheidung für eine bzw. Auswahl einer optimalen Kombination von Authentifizierungsverfahren getroffen wird. Basierend auf vorhandenen Informationen und Apriori-Wahrscheinlichkeitsverteilungen werden in dem bayessches Netzwerk Aposteriori-Verteilungen berechnet und das erwartete Schadensrisiko berechnet. Ferner wird der notwendige Authentifizierungsaufwand für die ein oder mehreren betrachteten Authentifizierungsverfahren bestimmt. Basierend aus der ermittelten Kombination von Schadensrisiko und Authentifizierungsaufwand wird automatisch entschieden, ob ein Heranziehen eines zusätzlichen Authentifizierungsverfahrens, d.h. ein Boosting durch eine zusätzliche Sicherheitsinteraktion, etwa die Eingabe einer PIN oder eines Fingerabdrucks, vorteilhaft ist und angefordert werden sollte. Zugleich wird automatisch entschieden, ob die bisher ausgeführten Authentifizierungsverfahren für eine Authentifizierung des aktuellen der Nutzer ausreichend sind und dieser authentifiziert werden soll oder nicht. Diese automatische Entscheidung richtet sich nach dem Minimum der Kombination von Schadensrisiko und notwendigem Authentifizierungsaufwand.

Ein bayessches Netzwerk ist ein gerichteter azyklischer Graph, in dem die Knoten Zufallsvariablen und die Kanten bedingte Abhängigkeiten zwischen den Variablen beschreiben. Jedem Knoten des Netzes ist eine bedingte Wahrscheinlichkeitsverteilung der durch ihn repräsentierten Zufallsvariable gegeben, die Zufallsvariablen an den Elternknoten zuordnet. Ein bayessches Netz dient dazu, die gemeinsame Wahrscheinlichkeitsverteilung aller beteiligten Variablen unter Ausnutzung bekannter bedingter Unabhängigkeiten möglichst kompakt zu repräsentieren. Dabei wird die bedingte (Un)abhängigkeit von Untermengen der Variablen mit A-priori-Wissen kombiniert.

Nach Ausführungsformen umfasst das Auswahlkriterium als zusätzliche Randbedingung, einen zulässigen Höchstwert für das Schadensrisiko, wobei beim Minimieren der Kombinationen aus Schadensrisiko und Authentifizierungsaufwand, lediglich solche Schadensrisikos berücksichtigt werden, welche kleiner gleich dem zulässigen Höchstwert sind. Ausführungsformen können den Vorteil haben, dass sichergestellt werden kann, dass das Schadensrisiko den zulässigen Höchstwert nicht überschreitet, selbst wenn dies einen höheren Authentifizierungsaufwand notwendig macht.

Ausführungsformen umfassen eine verhaltensbasierte Authentifizierung eines Nutzers unter Verwendung eines mobilen, tragbaren Telekommunikationsgerät. Die Grundlage der verhaltensbasierten Authentifizierung ist ein individuelles intrinsisches Verhalten des Nutzers, welches durch eine natürliche Verhaltensweise des Nutzers definiert ist. Die verhaltensbasierte Authentifizierung ermöglicht es dem Nutzer dadurch Zugriff auf sein mobiles, tragbares Telekommunikationsgerät zu erlangen, dass er sich so verhält, wie er es gewohnt ist.

Ferner sind als Boosting zusätzliche Authentifizierungsverfahren vorgesehen, bei welchen es sich entweder um weitere verhaltensbasierte oder um verhaltensunabhängige Authentifizierungsverfahren zur Authentifizierung des Nutzers handelt, falls das bereits ausgeführte verhaltensbasierte Authentifizierungsverfahren unzureichend für eine erfolgreiche Authentifizierung ist. Dies kann an Authentifizierungsanforderung, d.h. einem hohen zu genügenden Sicherheitsniveau liegen, oder an Ungenauigkeiten bei der Erfassung von Verhaltensmerkmalen. Beispielsweise umfasst die nicht verhaltensbasierte Authentifizierung eine Eingabe eines vordefinierten Authentifizierungsmerkmals, wie etwa einen Benutzernamen, ein Kennwort, ein Einmalkennwort, eine persönliche Identifikationsnummer, eine Transaktionsnummer, ein Muster und/oder ein biometrisches Merkmal.

Ausführungsformen können den Vorteil haben, dass die Anforderungen für eine erfolgreiche Authentifizierung, sprich der zu erreichende Konfidenzwert, adaptiv davon abhängig gemacht werden kann für welche Anwendung eine Authentifizierung erfolgt. Beispielsweise können Anwendungen, welche eine Kauffunktion oder eine Online-Banking-Funktion, etwa eine Online-Überweisung, umfassen, höheren Anforderungen unterliegen, da mit ihnen ein höherer potentieller Schaden im Falle einer fehlerhaften Authentifizierung verbunden ist als mit Anwendungen, welche keine solchen Funktionen umfassen. Nach Ausführungsformen können so für eine Anwendung auch adaptiv unterschiedliche Authentifizierungsanforderungen implementiert werden, abhängig von den Funktionen, welche Ausgeführt werden können. Beispielsweise werden an eine Authentifizierung im Zuge eines Aufrufens bzw. Startens einer entsprechenden Anwendung geringere Anforderungen gesetzt, als an ein

Ausführen einer Funktion innerhalb der Anwendung, wie etwa eine Überweisung. Ferner können die Authentifizierungsanforderungen auch von inhaltlichen Faktoren der Funktion abhängen, welche ausgeführt werden soll. Soll beispielsweise ein höherer Betrag überwiesen werden, steigt dadurch der mögliche Schaden und die Anforderungen an eine Authentifizierung zum Ausführen der Überweisung werden höher eingestellt als im Fall eines geringeren Betrags, bei welchem der mögliche Schaden geringer ist. Ebenso kann beispielsweise der Empfänger der Überweisung berücksichtigt werden. Handelt es sich beispielsweise um einen ausländischen Empfänger kann beispielsweise die Gefahr eines Angriffs höher anzusetzen sein, was in höhere Anforderungen an die Authentifizierung resultiert, als im Falle einer Inlandsüberweisung. Ferner kann der Kontext der Überweisung Berücksichtigung finden, unübliche Uhrzeiten oder unübliche Orte der Ausführung der Überweisung können Hinweise auf eine erhöhte Angriffswahrscheinlichkeit sein, welche höhere Authentifizierungsanforderungen erforderlich machen.

Nach Ausführungsformen ist das Programmmodul ferner konfiguriert zum Empfangen zusätzlicher Eingangsdaten durch das Programmmodul, welche die ein oder mehreren ausgeführten ersten zusätzlichen Authentifizierungsverfahren und eine aus den ein oder mehreren ausgeführten ersten zusätzlichen Authentifizierungsverfahren tatsächlich resultierende Erhöhung des Konfidenzwerts identifizieren.

Falls die aus den ein oder mehreren ausgeführten ersten zusätzlichen Authentifizierungsverfahren tatsächlich resultierende Erhöhung des Konfidenzwerts von dem vordefinierten Erwartungswert für eine potentielle Erhöhung des Konfidenzwerts durch die ein oder mehreren ausgeführten ersten zusätzlichen Authentifizierungsverfahren abweicht, wird das aktuelle Schadensrisiko unter Verwendung der empfangenen aus den ein oder mehreren ausgeführten ersten zusätzlichen Authentifizierungsverfahren tatsächlich resultierende Erhöhung des Konfidenzwerts aktualisiert.

Es wird eine aktualisierte Auswahl von Authentifizierungsverfahren erstellt, welche zumindest die ein oder mehreren ausgeführten Authentifizierungsverfahren sowie die ein oder mehreren ausgeführten ersten zusätzlichen Authentifizierungsverfahren umfasst. Hierbei wird als Auswahlkriterium verwendet, dass für die Auswahl von Authentifizierungsverfahren eine Kombination aus aktualisiertem Schadensrisiko und Authentifizierungsaufwand minimiert ist. Es werden zusätzlichen Ausgabedaten ausgegeben, welche die aktualisierte Auswahl von Authentifizierungsverfahren identifizieren.

Falls die ein oder mehreren ersten zusätzlichen Authentifizierungsverfahren unter Verwendung des mobilen tragbaren Telekommunikationsgeräts zum Authentifizieren des aktuellen Nutzers ausgeführt werden, umfass das Verfahren ferner ein Empfangen der zusätzlichen Eingangsdaten durch das Programmmodul, welche die ein oder mehreren ausgeführten ersten zusätzlichen Authentifizierungsverfahren und die aus den ein oder mehreren ausgeführten ersten zusätzlichen Authentifizierungsverfahren tatsächlich resultierende Erhöhung des Konfidenzwerts identifizieren.

In Antwort auf das Empfangen der Eingangsdaten, werden die Ausgabedaten durch das Programmmodul ausgegeben, welche die aktualisierte Auswahl von Authentifizierungsverfahren identifizieren. Falls die aktualisierte Auswahl von Authentifizierungsverfahren identisch mit einer Kombination aus den ein oder mehreren ausgeführten verhaltensbasierten Authentifizierungsverfahren und den ein oder mehreren ausgeführten ersten zusätzlichen verhaltensbasierten Authentifizierungsverfahren ist, wird ein Authentifizierungssignals erzeugt, welches eine erfolgreiche Authentifizierung des aktuellen Nutzers unter Verwendung des mobilen tragbaren Telekommunikationsgeräts bestätigt. Falls die aktualisierte Auswahl jedoch ein oder mehrere zweite zusätzliche Authentifizierungsverfahren umfasst, werden die ein oder mehreren ausgewählten zweiten zusätzlichen Authentifizierungsverfahren unter Verwendung des mobilen tragbaren Telekommunikationsgeräts zum Authentifizieren des aktuellen Nutzers ausgeführt.

Ausführungsformen können den Vorteil haben, dass sichergestellt werden kann, dass die Authentifizierungsvorgaben erfüllt werden können, selbst wenn die der Auswahl von Authentifizierungsverfahren zugrunde gelegten Erwartungswerte für die Erhöhung des Konfidenzwerts nicht erfüllt werden. Beispielsweise könnend die ein oder mehreren ersten zusätzlichen Authentifizierungsverfahren ein verhaltensabhängiges Authentifizierungsverfahren umfassen, welches jedoch aufgrund von Abweichungen des Nutzers von seinem üblichen Verhalten einen geringeren Konfidenzwert als erwartet liefert. Ebenso kann sich der Nutzer im Falle eines verhaltensunabhängigen Authentifizierungsverfahren bei einer PIN oder einem Passwort vertippen oder einen verschmutzen Finger auf einem Fingerabdrucksensor platzieren, sodass die resultierenden Übereinstimmungen mit den hinterlegten Referenzmerkmalen geringer ausfällt als zu erwarten ist. Dennoch kann eine fehlerhafte PIN, ein fehlerhaftes Passwort oder ein fehlerhafter Fingerabdruck ausreichen, um den aus einer Kombination mit den anderen ausgeführten Authentifizierungsverfahren resultierenden Konfidenzwert soweit zu erhöhen, dass die Authentifizierungsvoraussetzungen dennoch erfüllt werden. Ebenso kann festgestellt werden, dass die Fehler zu schwerwiegend sind, um die Authentifizierungsvoraussetzungen noch erfüllt zu können. In diesem Fall werden ein oder mehrere zweite zusätzliche Authentifizierungsverfahren herangezogen, um eine erfolgreiche Authentifizierung zu ermöglichen.

Nach Ausführungsformen ist die Anzahl der ausgeführten Authentifizierungsverfahren, insbesondere im Hinblick auf verhaltensunabhängige Authentifizierungsverfahren, auf eine zulässige Maximalanzahl beschränkt, um die Komplexität des Authentifizierungsverfahren zu beschränken.

Nach Ausführungsformen handelt es sich bei zumindest einem der zusätzlichen Authentifizierungsverfahren um ein bereits ausgeführtes Authentifizierungsverfahren, welches wiederholt wird. Ausführungsformen können den Vorteil haben, dass ein bereits ausgeführtes Authentifizierungsverfahren, insbesondere eins mit geringem Authentifizierungsaufwand wie etwa ein verhaltensbasierte Authentifizierungsverfahren zunächst wiederholt wird, bevor e durch ein anderes Authentifizierungsverfahren mit einem höheren Authentifizierungsaufwand ersetzt wird. Ausführungsformen können somit einen vermeiden, dass der Authentifizierungsaufwand zu sehr ansteigt infolge eines einmaligen Fehlers beim Ausführen eine der ausgewählten Authentifizierungsverfahren. Nach Ausführungsformen ist die zulässige Anzahl von Wiederholungen von Authentifizierungsverfahren beschränkt, z.B. auf ein oder zwei Mal. Ist die zulässige Anzahl erreicht und der erzielte Konfidenzwert nach wie vor unzureichend, so wird entweder ein Authentifizierungsverfahren mit höherem Authentifizierungsaufwand ausgeführt oder die Authentifizierung abgebrochen.

Nach Ausführungsformen handelt es sich bei zumindest einem der zusätzlichen Authentifizierungsverfahren um ein alternatives Authentifizierungsverfahren, welches im Zuge der Authentifizierung erstmals ausgeführt wird. Ausführungsformen können den Vorteil haben, dass Authentifizierungsverfahren, welche in der aktuellen Situation nicht funktionieren, etwa ein Bewegungsmuster des Nutzers aufgrund eines unüblichen Schuhwerks deutlich von üblichen, für den Nutzer eigentlich charakteristischen Bewegungsmuster abweicht, durch ein alternatives Authentifizierungsverfahren ersetzt werden. Somit kann sichergestellt werden, dass der Nutzer eine ausreichende Chance für eine erfolgreiche Authentifizierung hat und eine zu hohe Anzahl an falsch-negativen Authentifizierungsverfahren vermieden werden kann.

Nach Ausführungsformen handelt es sich bei zumindest einem der zusätzlichen Authentifizierungsverfahren um ein verhaltensbasiertes Authentifizierungsverfahren. Ausführungsformen können den Vorteil haben, das verhaltensbasierte Authentifizierungsverfahren im Hintergrund ablaufen und für den Nutzer kaum einen oder gar keinen Authentifizierungsaufwand erzeugen.

Nach Ausführungsformen handelt es sich bei zumindest einem der zusätzlichen Authentifizierungsverfahren um ein verhaltensunabhängig Authentifizierungsverfahren, wobei ein vordefiniertes verhaltensunabhängiges Authentifizierungsmerkmal des aktuellen Nutzers erfasst wird. Bei dem vordefinierten verhaltensunabhängigen Authentifizierungsmerkmal handelt es sich um ein Merkmal eines für den registrierten Nutzer charakteristischen Wissens, eines für den registrierten Nutzer charakteristischen Besitzes und/oder einer für den registrierten Nutzer charakteristischen biologischen Eigenschaft.

Ausführungsformen können den Vorteil haben, dass verhaltensunabhängig Authentifizierungsverfahren im Allgemeinen zwar einen höheren Authentifizierungsaufwand verursachen, zugleich hohe Konfidenzwerte erzielbar sind.

Ein vordefinierte verhaltensunabhängig Authentifizierungsmerkmal umfasst zum Nachweis eines charakteristischen Wissens beispielsweise eine alphanumerische Zeichenfolge oder ein geometrisches Muster, zum Nachweis eines charakteristischen Besitzes beispielsweise eine Kennung eines ID-Token oder zum Nachweis einer charakteristischen biologischen Eigenschaft beispielsweise einen mittels eines biometrischen Sensors erfassten Messwert der entsprechenden biologischen Eigenschaft.

Verhaltensunabhängig Authentifizierungsmerkmal können den Vorteil haben, dass sie ein effektives Boosting der Authentifizierung bereitstellen, falls eine verhaltensbasierte Authentifizierung unzureichend ist oder gar fehlgeschlagen sein sollte. Die Gründe für eine fehlgeschlagene verhaltensbasierte Authentifizierung können dabei vielfältig sein. Sie können beispielsweise in einer fehlerhaften oder ungenauen Erfassung der verhaltensbasierten Daten des Nutzers begründet sein oder in einer vorübergehenden oder nachhaltigen Änderung des Verhaltens des Nutzers. Beispielsweise umfassen die verhaltensbasierten Daten grobmotorische Bewegungsdaten des Nutzers. Bewegt sich der Nutzer auf ungewohnte Weise vorwärts, trägt der Nutzer unübliches Schuhwerk oder hat sich der Nutzer verletzt, sodass sich sein charakteristisches Bewegungsmuster vorübergehend ändert, erlaubt ihm eine zusätzliche Berücksichtigung verhaltensunabhängiger Authentifizierungsmerkmale dennoch eine sichere Authentifizierung.

Die alphanumerische Zeichenfolge oder das geometrische Muster kann der Nutzer beispielsweise über eine Nutzerschnittstelle, wie etwa ein Touch-Display, eingeben. Bei der alphanumerischen Zeichenfolge kann es nach Ausführungsformen um eine reine Zahlenfolge, eine reine Buchstabenfolge oder eine gemischte Zeichenfolge aus Zahlen, Buchstaben und/oder Sonderzeichen handeln. Ebenso kann es sich bei der alphanumerischen Zeichenfolge um eine Antwort auf eine hinterlegte Frage handeln, welche dem Nutzer zur verhaltensunabhängigen Authentifizierung angezeigt wird.

Bei dem vordefinierten verhaltensunabhängigen Authentifizierungsmerkmal kann es sich ebenso um Wissen, wie etwa eine Passwortphrase, handeln, welche der Nutzer über eine entsprechende Nutzerschnittstelle, wie etwa ein Mikrophon, mittels Spracheingabe eingibt. Dies kann beispielsweise vorteilhaft sein, wenn der Nutzer in der Handhabung des das mobile, tragbare Telekommunikationsgerät gerade eingeschränkt ist, etwa weil die Bewegungsmöglichkeiten seiner Hände eingeschränkt sind.

Ferner kann zum Zwecke einer verhaltensunabhängigen Authentifizierung die Kennung eines ID-Token durch den Nutzer bereitgestellt werden.

Unter einem ID-Token wird hier eine Vorrichtung verstanden, welche einen Identifikator (ID) bzw. eine Kennung zu Identifikationszwecke umfasst, wie beispielsweise einen sogenannten USB-Stick, eine Chipkarte, oder ein Dokument. Insbesondere wird unter einem ID-Token eine tragbare elektronische Vorrichtung verstanden, welche einen Prozessor zum Ausführen von Programminstruktionen und einen Speicher zum Speichern von Programminstruktionen umfasst, wobei der Identifikator (ID) in dem Speicher gespeichert ist und unter Verwendung des Prozessors auf Anfrage zu Nachweiszwecken bereitgestellt werden kann.

Unter einem Dokument wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln.

Nach Ausführungsformen weist der ID-Token keine eigene Energieversorgung auf. Als Energiequelle kann vielmehr eine Vorrichtung zum Ernten (energy harvesting) von Energie dienen, welche von dem Terminal an das ID Token übertragen wird, wie beispielsweise eine RFID-Antenne.

Ein Identifikator (ID), auch als Kennung bezeichnet, ist ein mit einer bestimmten Identität verknüpftes Merkmal zur eindeutigen Identifizierung eines Objekts, insbesondere eines Datenobjekts, dem der Identifikator zugeordnet ist. Ein Identifikator kann beispielsweise Zahlen, Buchstaben, Sonderzeichen sowie Kombinationen aus diesen umfassen.

Die Kennung wird dem mobilen, tragbaren Telekommunikationsgerät von dem ID-Token beispielsweise über eine drahtlose Kommunikationsschnittstelle übermittelt. Dabei kann die Kennung beispielsweise mit einem privaten kryptographischen Schlüssel eines asymmetrischen Schlüsselpaars signiert sein, welches dem Besitzer des ID-Tokens zugeordnet ist. Dieser private kryptographische Schlüssel, welcher als Signierschlüssel dient, ist beispielsweise in einem geschützten Speicherbereich eines Speichers des ID-Tokens gespeichert. Die Signatur kann durch das mobile, tragbare Telekommunikationsgerät mittels des öffentlichen kryptographischen Schlüssels des entsprechenden asymmetrischen Schlüsselpaars, welcher als Signaturprüfschlüssel dient, geprüft werden. Die Übertragung der Kennung kann verschlüsselt erfolgen, beispielsweise mittels Ende-zu-Ende-Verschlüsselung. Der öffentlichen kryptographischen Schlüssel wird beispielsweise von einem Zertifikat einer PKI umfasst, welches die Authentizität des öffentlichen Schlüssels belegt.

Unter einem Zertifikat wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein Hashwert, welcher mit einem privaten Schlüssel eines kryptographischen Schlüsselpaares verschlüsselt ist, das einem Zertifikat zugeordnet ist. Die Besonderheit einer solchen Signatur besteht darin, dass deren Urheberschaft und Zugehörigkeit zu einer bestimmten Person oder Instanz durch jeden Dritten geprüft werden kann.

Unter einer Ende-zu-Ende-Verschlüsselung wird hier eine Verschlüsselung einer Verbindung zwischen einem Sender und einem Empfänger verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer eine Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Zum Nachweis einer charakteristischen biologischen Eigenschaft des Nutzers erfasst das mobile, tragbare Telekommunikationsgerät beispielsweise ein entsprechendes biometrisches Merkmal, welches als Nachweis der biologischen Eigenschaft des Nutzers dient. Beispielsweise positioniert der Nutzer einen seiner Finger auf einem dafür vorgesehenen Fingerabdrucksensor, sodass das mobile, tragbare Telekommunikationsgerät den Fingerabdruck des Nutzers erfassen kann.

Die biometrischen Daten können durch einen Sensor zur Erfassung von biometrischen Daten erfasst werden. Dabei können die biometrischen Daten unter anderem ein Maß des Gesichts, Stimmfrequenzen des Nutzers, ein EEG-Signal des Nutzers, eine Fingerform, eine Ohrmuschelform, ein Retina- oder Irismuster, ein Fingerabdruck eines Fingers oder physiologische Daten, wie zum Beispiel der Blutdruck oder der Puls des Nutzers, insbesondere bei spezifischen Aktivitäten wie dem Laufen, sein.

In einer Ausführungsform können die biometrischen Daten, insbesondere die Maße des Gesichts, das Iris- und/oder Retinamuster und die Ohrmuschelform, erfasst werden, wenn der Nutzer ohnehin sein mobiles, tragbares Telekommunikationsgerät benutzt und/oder sich authentifizieren möchte. In dem Moment, in dem der Nutzer sein mobiles, tragbares Telekommunikationsgerät benutzt und/oder sich authentifizieren möchte, kann je nach ausgeführter Anwendung davon ausgegangen werden, dass der Nutzer auf den Bildschirm des Systems schaut. Dies ist beispielsweise bei einer Chat- oder Nachrichtenanwendung der Fall. Da handelsübliche Smartphones und andere Systeme mit Kameras ausgestattet sind, welche auch auf der Seite des Bildschirms auf dem mobilen, tragbaren Telekommunikationsgerät positioniert sind, ist es möglich, dass eine Hintergrundanwendung des mobilen, tragbaren Telekommunikationsgeräts ein Foto des Nutzers aufnimmt, während er das mobile, tragbare Telekommunikationsgerät benutzt. Dieses Foto kann ausgelesen und somit die biometrischen Daten des Nutzers erfasst werden. Sollte der Nutzer auf sein System zugreifen wollen, wird ein Foto erstellt oder es werden ein oder mehrere der zuletzt gespeicherten Fotos herangezogen und die biometrischen Daten, welche aus dem erstellten Foto bzw. den gespeicherten Fotos errechnet werden, zur Authentifizierung verwendet.

In einer weiteren Ausführungsform umfasst das mobile, tragbare Telekommunikationsgerät beispielsweise einen Drucksensor oder einen optischen Sensor zur Erfassung eines Pulsschlages, mit dem der Puls und der Blutdruck des Nutzers bestimmt werden können.

Durch die Verwendung eines direkt am Körper getragenen biometrischen Sensors, insbesondere einem biometrischen Sensor einer Smart-Watch, etwa einem Drucksensor oder optischem Sensor, ergibt sich in vorteilhafterweise, dass die biometrischen Daten ähnlich wie die verhaltensbasierten Daten kontinuierlich erfassbar sind, da der Nutzer die Smart-Watch während des regulären Gebrauchs an seinem Handgelenk trägt.

In einer weiteren Ausführungsform umfasst das mobile, tragbare Telekommunikationsgerät einen Sensor zur Erfassung eines Fingerabdrucks des Nutzers. In vorteilhaften Ausführungsformen ist der Sensor an Stellen des mobilen, tragbaren Telekommunikationsgeräts positioniert, an denen der Nutzer mit seinen Fingerspitzen das mobile, tragbare Telekommunikationsgerät festhält und/oder zu Steuerung von Funktionen regelmäßig berührt.

Durch die Verwendung eines Fingerabdrucksensors, insbesondere an einer Stelle, an der sich während des regulären Gebrauchs die Fingerspitzen des Nutzers befinden, ergibt sich in vorteilhafter Weise, dass der Fingerabdruck, welcher für jeden Menschen einzigartig ist, als Identifikationsmerkmal des Nutzers zur Authentizitätsprüfung des Nutzers beiträgt und somit die Sicherheit des Verfahrens erhöht.

Durch die Verwendung der biometrischen Daten des Nutzers zur verhaltensbasierten Authentifizierung des Nutzers gegenüber einem mobilen, tragbaren Telekommunikationsgerät ergibt sich in vorteilhafter Weise, dass die Daten, welche zur Authentifizierung herangezogen werden, höchst persönlich vom Benutzer abhängig sind. Insbesondere biometrische Daten bieten eine hohe Fälschungssicherheit, wodurch die Sicherheit der Authentifizierung gesteigert wird.

Eine verhaltensunabhängige Authentifizierung, welche sich auf einen erfolgreichen Nachweis eines Wissens, eines Besitzes oder einer biologischen Eigenschaft des Nutzers stützt, mag im Allgemeinen aus Sicht des Nutzers aufwendiger und umständlicher sein, als eine verhaltensbasierte Authentifizierung. Eine verhaltensbasierte Authentifizierung hat den Vorteil, dass sie on-the-fly erfolgen kann, d.h. die Authentifizierung erfolgt auf Basis des üblichen Verhaltens des Nutzers, ohne dass dieser hierfür irgendwelche zusätzlichen Handlungen vornehmen müsste. Da die verhaltensunabhängige Authentifizierung, wie hier vorgeschlagen, aber nur verwendet wird, wenn der resultierende Mehraufwand in einem vertretbaren Verhältnis zu der dadurch erreichten Verringerung des Schadensrisikos steht. Die entsprechende Kalibrierung der Authentifizierungsanforderungen erfolgt automatisch und an die jeweilige Authentifizierungssituation angepasst. Der zusätzliche Aufwand den die verhaltensunabhängige Authentifizierungsverfahren für den Nutzer im Vergleich zu verhaltensbasierten Authentifizierungsverfahren darstellt wird also dadurch kompensiert, dass auf die verhaltensunabhängige Authentifizierungsverfahren nur zurückgegriffen wird, falls dies tatsächlich notwendig ist. Somit kann sich vorteilhafter Weise eine verhältnismäßig geringe Anzahl an Fällen ergeben, in denen der entsprechende Mehraufwand tatsächlich anfällt. Der weit überwiegende Fall der Authentifizierungen im Alltag kann demgegenüber effizient und effektiv mittels verhaltensbasierter Authentifizierungsverfahren gehandhabt werden. Im Vergleich zu einem rein auf verhaltensunabhängigen Authentifizierungsansätzen basierenden Verfahren bieten das hier vorgeschlagene Verfahren mit seinem hybriden Ansatz die Vorteile einer höheren Effizient verbunden mit einer hohen Sicherheit.

Nach Ausführungsformen fließen in das Schadensrisiko einerseits Faktoren ein, welche den zu erwartenden Schaden, im Falle einer fehlerhaften Authentifizierung, sowie die Gefahr das tatsächlich ein Angriff vorliegt abschätzen, und andererseits Faktoren, welche das Maß an Sicherheit in Form des Konfidenzwerts abschätzen, dafür, dass es sich bei dem aktuellen Nutzer tatsächlich um den zu authentifizierenden Nutzer handelt. Je höher der Konfidenzwert, desto kleiner wird das Schadensrisiko. Somit kann über eine Wahl eines Schwellenwerts für den zu erreichenden Konfidenzwert als Voraussetzung für eine erfolgreiche Authentifizierung das Schadensrisiko angepasst werden. Ist das Schadensrisiko aufgrund eines nur geringen zu erwartenden Schadens und/oder einer nur geringen Wahrscheinlichkeit für einen Angriff bereits von Haus aus gering, so bedarf es beispielsweise keiner oder nur einer geringen Anpassung des Schwellenwerts. Dadurch, dass das Schadensrisiko nicht alleine, sondern in Kombination mit dem Authentifizierungsaufwand betrachtet wird, kann sichergestellt werden, dass die Reduktion des Schadensrisikos nicht zu ein unangemessen bzw. unverhältnismäßigen Mehraufwand für die entsprechende Authentifizierung führt.

Ausführungsformen können den Vorteil haben, dass abhängig von einem Schwellenwert für einen zu erreichenden Konfidenzwert das Sicherheitsniveau der Authentifizierung eingestellt werden kann. Muss ein hohes Sicherheitsniveau gewährleitet werden, wird der Schwellenwert so gewählt werden, dass für eine erfolgreiche Authentifizierung ein hoher Konfidenzwert notwendig ist. Ist für den vorliegenden Fall oder grundsätzlich ein niedrigeres Sicherheitsniveau ausreichend, so kann der Schwellenwert niedriger gewählt werden.

Die Verwendung eines verhaltensunabhängigen Authentifizierungsverfahren, falls ein höheres Sicherheitsniveau zu erfüllen ist, kann ferner den Vorteil haben, dass der Nutzer durch die Anfrage nach der verhaltensunabhängigen Authentifizierung explizit auf die vorliegende Ausnahmesituation hingewiesen wird und diesem intuitive verdeutlicht wird, dass eine Authentifizierungen unter höheren Sicherheitsanforderungen als üblich notwendig ist und er ein hohes Maß an Aufmerksamkeit bezüglich weiteren Handlungen an der Tag legen sollte. Das Ausführen einer solchen verhaltensunabhängigen Authentifizierung umfasst somit eine bewusste Entscheidung des Nutzers hierzu, da im Allgemeinen eine zusätzliche Aktion durch den Nutzer notwendig ist, wie etwa eine Eingabe bzw. ein Bereitstellen eines verhaltensunabhängigen Authentifizierungsmerkmals, beispielsweise muss der Nutzer eine alphanumerische Zeichenfolge eingeben, einen Finger auf einem Fingerabdrucksensor positionieren und/oder einen ID-Token bereitstellen. Es kann dadurch verhindert werden, dass sich der Nutzer unbewusst durch sein übliches Verhalten authentifiziert und damit versehentlich ein Ausführen einer Funktion des mobilen, tragbaren Telekommunikationsgeräts autorisiert, welche er eigentlich nicht ausführen möchte. Beispielsweise wird so verhindert, dass der Nutzer auf eine Authentifizierungsanfrage im Fall einer Funktion mit hohen Sicherheitsanforderungen ausversehen weiter klickt und sich durch sein Verhalten authentifiziert.

Nach Ausführungsformen wird das potentielle Schadenszenario durch Angabe eines Authentifizierungszwecks identifiziert. Ausführungsformen können den Vorteil haben, dass unterschiedlichen Authentifizierungszwecken unterschiedliche Schadensszenarien zugeordnet werden können. Beispielsweise kann ein Schadensszenario bei einer Authentifizierung gegenüber einer Banking-App und einer Messaging-App jeweils in einem Verlust von persönlichen Daten bestehen. Bei der Bank-App kann der Verlust jedoch unter Umständen weitreichende Folgen haben, weshalb dieser ein Schadensszenario mit einem höheren potentiellen Schaden zugeordnet wird als der Messaging-App. Die Authentifizierungszwecke können dabei noch weiter abgestuft sein. So kann der potentielle Schaden angehoben, wenn die Authentifizierung zum Zwecke einer Ausführung einer bestimmten Funktion erfolgt, etwa einem Ausführen einer Überweisung in der Banking-App. Der potentielle Schaden kann beispielsweise in Abhängigkeit des konkreten Überweisungsbetrags oder einer zulässigen Überweisungshöchstgrenze angehoben werden. Je höher der zu Überweisende Betrag, desto höher der potentielle Schaden. Liegt der Überweisungsbetrag unterhalb eines Minimumwerts, kann auch auf eine Anhebung verzichtet werden.

Nach Ausführungsformen empfängt das Programmmodul wiederholt Eingangsdaten, welche aktualisierte Daten zum Identifizieren des potentiellen Schadensszenarios umfassen. Das Programmmodul kann so überwachen, ob sich das potentielle Schadensszenario ändert. Ändert sich das potentielle Schadensszenario und/oder der daraus resultierende Erwartungswert für den potentiellen Schaden und damit das aktuelle Schadensrisiko, so kann das Programmmodul die Auswahl von Authentifizierungsverfahren aktualisieren und dadurch gegebenenfalls ein Ausführen zusätzlicher Authentifizierungsverfahren initiieren. Beispielsweise authentifiziert sich der aktuelle Nutzer für einen Zugriff auf sein mobiles tragbares Telekommunikationsgerät. Versucht er nun eine bestimmte App, etwa eine Banking-App zu öffnen, was einem potentiellen Schadensszenario mit einem höheren Schadensrisiko entspricht als der einfache Zugriff auf das mobile tragbare Telekommunikationsgerät, muss der Nutzer beispielsweise zusätzliche Authentifizierungsverfahren erfolgreich absolvieren. Dies kann beispielsweise auf Basis eines oder mehrerer verhaltensbasierter Authentifizierungsverfahren im Hintergrund erfolgen. Möchte der Nutzer ferner Geld überweisen und/oder einen Geldbetrag überweisen, welcher einen bestimmten Schwellenwert überschreitet, so kann diese wiederum zu einer Änderung des potentiellen Schadensszenarios und damit einer Notwendigkeit einer weitergehenden Authentifizierung führen. Somit kann das Programmmodul nicht nur im Zuge einer Authentifizierung, z.B. veranlasst durch einen Empfang einer Authentifizierungsanforderung, selbstständig durch wiederholten Empfang von aktualisierten Angaben zum Schadensszenario die Entwicklung des Schadenszenarios überwachen und steuern, ob Authentifizierungen bzw. zusätzliche Authentifizierungen veranlasst und ausgeführt werden.

Nach Ausführungsformen wird das potentielle Angriffsszenario durch ein oder mehreren Angaben zu einer Authentifizierungssituation identifiziert. Ausführungsformen können den Vorteil haben, das anhand der Authentifizierungssituation abgeschätzt werden kann, wie groß die Gefahr für einen tatsächlichen Angriff ist. Handelt es sich um eine ungewöhnliche Situation, so kann diese einem potentiellen Angriffsszenario mit einer erhöhten Angriffswahrscheinlichkeit zugeordnet werden. Die erhöhte Angriffswahrscheinlichkeit resultiert in einem erhöhten Schadensrisiko, weshalb höhere Authentifizierungsanforderungen zu erfüllen sind. Analog zum Schadenszenario empfängt das Programmmodul nach Ausführungsformen wiederholt Eingangsdaten, welche aktualisierte Daten zum Identifizieren des potentiellen Angriffsszenarios umfassen. Das Programmmodul kann somit zudem das Angriffsszenario überwachen und bei Änderungen, welche in einem geänderten Schadensrisiko resultieren, eingreifen und zusätzliche Authentifizierungen veranlassen. Die zusätzlichen Authentifizierungen mögen einen erhöhten Authentifizierungsaufwand mit sich bringen, dieser wird erhöhten Authentifizierungsaufwand ist aber gerechtfertigt im Hinblick auf das höhere Schadensrisiko.

Angaben zur Authentifizierungssituation könne beispielsweise Positionsdaten des mobilen, tragbaren Telekommunikationssystems und/oder Kalender- und Uhrzeitdaten umfassen.

Die Positionsdaten des mobilen, tragbaren Telekommunikationsgeräts werden durch ein Verfahren zur Positionsbestimmung durch einen Positionssensor des mobilen, tragbaren Telekommunikationsgeräts erfasst. Ein solches Verfahren kann zum Beispiel ein Erfassen eines GPS-Signals oder einer triangulierten Position aus WLAN-Verbindungsdaten oder Verbindungsdaten eines sonstigen Funknetzes umfassen, welches Funkzellen aufweist, wie etwa ein Mobilfunknetz.

Durch das Verwenden der Positionsdaten ergibt sich in vorteilhafter Weise, dass Abweichungen von dem regelmäßigen Aufenthaltsort des Nutzers registriert werden können, zum Beispiel zu Hause, bei der Arbeit oder an anderen Orten, die er regelmäßig aufsucht. Ein unberechtigter Nutzer, insbesondere ein Dieb, der das mobile, tragbare Telekommunikationsgerät benutzt, wird sich in der Regel nicht an den Orten aufhalten, welche der registrierte Nutzer regelmäßig aufsucht. Dadurch kann erkannt werden, ob eine Authentifizierungssituation mit einem erhöhten Angriffsrisiko vorliegt, welches eine Erhöhung der Authentifizierungsanforderungen notwendig macht. Damit können die Positionsdaten zur Verbesserung der Sicherheit der Authentifizierung beitragen.

Kalender- und/oder Uhrzeitdaten können durch eine im mobilen, tragbaren Telekommunikationsgerät implementierte Uhr oder eine externe Uhr, deren Signal durch einen Sensor, insbesondere ein Funksignal durch einen Funksensor, des mobilen, tragbaren Telekommunikationsgeräts empfangen wird, erfasst werden.

Durch die Verwendung der Kalender- und/oder Uhrzeitdaten können zeitliche Abweichungen von üblichen Routinen des Nutzers erkannt und bei der Berechnung der Angriffswahrscheinlichkeit verwendet werden. Erfolgt ein Authentifizierungsversuch zu einer unüblichen Zeit, etwa in der Nacht, oder an einem unüblichen Datum, etwa an einem Wochenende, so können dies Hinweise auf einen Angriff sein, wodurch das Angriffswahrscheinlichkeit höher anzusetzen ist.

Nach Ausführungsformen werden das aktuelle und/oder die potentiellen Schadensrisikos reduziert, wenn eine vorangegangene Authentifizierung für ein identischen oder größeres aktuelles Schadensrisiko erfolgreich ausgeführt und eine seit der vorangegangenen Authentifizierung verstrichene Zeitspanne kleiner einem vordefinierten Schwellenwert ist, wobei Reduzierung umso größer ist, je kleiner die verstrichene Zeitspanne ist und umso größer das Schadensrisiko der vorangegangenen Authentifizierung war.

Ausführungsformen können den Vorteil haben, dass wiederholte erfolgreiche Authentifizierungen in kurzen Zeitabständen, etwa im Sekunden- oder Minutentakt, zu einer hohen Wahrscheinlichkeit führen, dass es sich bei dem aktuellen Nutzer um denselben Nutzer handelt, welcher bei den unmittelbar vorangegangenen Authentifizierungen bereits erfolgreich authentifiziert wurde. Mithin kann der Authentifizierungsaufwand unter Berücksichtigung der unmittelbar vorangegangenen Authentifizierungen reduziert werden, ohne dadurch zugleich die resultierende Sicherheit unangemessen zu reduzieren.

Nach Ausführungsformen werden im Falle fehlender Eingangsdaten Eingangsdaten aus einer vorangehenden Authentifizierung verwendet, falls eine seit der vorangegangenen Authentifizierung verstrichene Zeitspanne kleiner einem vordefinierten Schwellenwert ist und wobei die aus der vorangehenden Authentifizierung verwendeten Eingangsdaten so angepasst werden, dass sie in höheren aktuellen und/oder die potentiellen Schadensrisikos resultieren, wobei die Anpassung umso größer ist, je größer die verstrichene Zeitspanne ist.

Ausführungsformen können den Vorteil haben, dass nicht für jede Authentifizierung jeweils ein vollständiger Satz Eingangsdaten benötigt wird. Der Zustand der wahrscheinlichkeitsbasierten Entscheidungsstruktur kann in diesem Fall vielmehr über die Zeit aktualisiert werden, wenn keine neuen Sicherheitsinformationen eingehen. Dabei wird beispielsweise ein Knoten x in der wahrscheinlichkeitsbasierten Entscheidungsstruktur zum Zeitpunkt t zumindest teilweise durch den Zustand des Knotens zu einem vorherigen Zeitpunkt t-1 beeinflusst. Damit kann der Vertrauensgrad der Verteilung der Zustände in den Knoten dynamisch über die Zeit aktualisiert werden, auch wenn keine neuen Informationen eintreffen.

Nach Ausführungsformen authentifiziert sich der aktuelle Nutzer gegenüber dem mobile tragbare Telekommunikationsgerät, wobei das mobile tragbare Telekommunikationsgerät das Programmodul und einen Prozessor aufweist und wobei der Prozessor des mobilen tragbaren Telekommunikationsgerät das Programmmodul ausführt.

Nach Ausführungsformen authentifiziert sich der aktuelle Nutzer über das mobile tragbare Telekommunikationsgerät gegenüber einem Server, wobei das mobile tragbare Telekommunikationsgerät eine Kommunikationsschnittstelle aufweist zur Kommunikation mit dem Server über ein Netzwerk, wobei der Server eine Kommunikationsschnittstelle zum Empfang von Konfidenzwerten von dem mobilen tragbaren Telekommunikationsgerät, einen Prozessor und das Programmodul aufweist und wobei der Prozessor des Servers das Programmmodul ausführt.

Erfüllen mehrere mögliche Kombinationen von Authentifizierungsverfahren das Auswahlkriterium, so erfolgt die Auswahl zwischen diesen gleichwertigen Optionen nach Ausführungsformen zufällig. Ausführungsformen können den Vorteil haben, dass ein Dritter, welcher sich unberechtigter Weise in den Besitz des mobilen, tragbaren Telekommunikationsgeräts bringt im Vorhinein nicht wissen kann, welche Authentifizierungsmerkmale er für eine erfolgreiche Authentifizierung vorweisen muss. Mithin wird es dem Dritten deutlich erschwert sich in den Besitz der benötigten Authentifizierungsmerkmale zu bringen bzw. diese zu fälschen. Dadurch wird die Sicherheit des Verfahrens weiter erhöht.

Nach Ausführungsformen handelt es sich bei einem ersten der ein oder mehreren verhaltensbasierten Authentifizierungsverfahren um ein Authentifizierungsverfahren zum Authentifizieren des aktuellen Nutzers anhand grobmotorischer Bewegungen handelt, wobei das mobile tragbare Telekommunikationsgerät mindestens einen Sensor, ein Grobmotorikklassifikationsmodul und einen internen Speicher aufweist, wobei der Sensor zu einer Erfassung von grobmotorischen Bewegungsdaten einer grobmotorischen Bewegung des aktuellen Nutzers des mobilen tragbaren Telekommunikationsgeräts konfiguriert ist, wobei das Grobmotorikklassifikationsmodul zu einer Klassifikation der grobmotorischen Bewegungsdaten konfiguriert und auf ein Erkennen einer grobmotorischen Bewegung eines registrierten Nutzers trainiert ist, wobei das Grobmotorikklassifikationsmodul von dem Prozessor des mobilen, tragbaren Telekommunikationsgeräts ausgeführt wird, wobei das erste verhaltensbasierte Authentifizierungsverfahren die folgenden Schritte aufweist:
- Wiederholtes Ausführen der Schritte:
   ∘ Erfassen der grobmotorischen Bewegungsdaten durch den mindestens einen Sensor des mobilen, tragbaren Telekommunikationsgeräts,
   ∘ Eingabe der grobmotorischen Bewegungsdaten in das Grobmotorikklassifikationsmodul,
   ∘ Generieren eines ersten Konfidenzwerts durch das Grobmotorikklassifikationsmodul, ob der aktuelle Nutzer ein in dem mobilen, tragbaren Telekommunikationsgerät registrierte Nutzer ist,
   ∘ Speichern des ersten Konfidenzwerts in dem Speicher des mobilen, tragbaren Telekommunikationsgeräts,
- auf eine Authentifizierungsanfrage hin, Zugreifen auf den Speicher des mobilen, tragbaren Telekommunikationsgeräts, um mindestens einen der gespeicherten ersten Konfidenzwerte aus dem Speicher auszulesen,
- Auslesen des mindestens einen ersten Konfidenzwerts und Bereitstellen als Teil der Eingangsdaten für das Programmmodul.

Viele mobile, tragbare Telekommunikationsgeräte, wie Smartphones, sind heutzutage mit Sensoren ausgestattet, welche eine Lage des entsprechenden Geräts im Raum erfassen können, wodurch sich zum Beispiel die Anzeige auf dem Bildschirm in die richtige Position relativ zur räumlichen Orientierung des Geräts drehen kann. Ein solcher Sensor ist üblicherweise ein Beschleunigungssensor, ein Gyroskop oder eine Kombination aus beiden. Es ist nicht nur möglich, mit diesem Sensor die Raumlage des mobilen, tragbaren Telekommunikationsgeräts, sondern auch eine grobmotorische Bewegung des Nutzers zu erfassen, wodurch der Sensor als Bewegungssensor verwendet werden kann.

Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Fertigkeiten der Grobmotorik sind zum Beispiel Gehen, Joggen, Rennen, Hüpfen, Fahrradfahren oder Autofahren. Auch das Bewegen des Armes, um eine Verrichtung, wie beispielsweise ein Heben eines Glases zum Trinken oder Essen, auszuführen kann ebenso wie eine Armbewegung, um ein Mobiltelefon aus der Tasche zu ziehen, als grobmotorische Bewegung aufgefasst werden. Demgegenüber gilt ein Greifen einer Tasse als feinmotorische Bewegung gilt, da die Bewegung zum Greifen mit den Fingern ausgeführt wird und feinere Muskelgruppen beansprucht. Dabei kann eine grobmotorische Bewegung insbesondere auch eine Hüftbewegung des Nutzers umfassen.

Ein jeder Mensch führt diese grobmotorischen Bewegungen auf seine eigene Art und Weise aus. Somit kann einem bestimmten Nutzer eines mobilen, tragbaren Telekommunikationsgeräts ein ganz bestimmtes, charakteristisches grobmotorisches Bewegungsprofil zugeordnet werden. Anhand dieses Bewegungsprofils ist der Nutzer identifizierbar. Die durch den Bewegungssensor erfassten Daten werden einem solchen Bewegungsprofil zugeordnet. Das mobile, tragbare Telekommunikationsgerät ist ferner mit einem Klassifikationsmodul ausgestattet, welches dazu trainiert ist, die Bewegungsmuster des Nutzers zu erkennen.

Trainieren umfasst in diesem Kontext, dass das Klassifikationsmodul durch Auswertung von Trainingsdatensätzen einerseits die Fähigkeit erlangt generische und andererseits nutzerindividuelle Bewegungsmuster zu erkennen. Ein Training zum Erkennen eines generischen Bewegungsmusters umfasst beispielsweise eine Auswertung mehrerer Trainingsdatensätze einer Nutzerkohorte, wobei jeder der Trainingsdatensätze jeweils einem der Nutzer der Nutzerkohorte zugeordnet ist und Daten zu einer für alle Nutzer der Nutzerkohorte identischen Bewegungsart umfasst. Durch die Auswertung wird ein für die identische Bewegungsart allen Nutzern gemeinsames generisches Bewegungsmuster identifiziert und zum zukünftigen Erkennen extrahiert. Ein Training zum Erkennen eines nutzerindividuellen Bewegungsmusters umfasst beispielsweise eine Auswertung von Bewegungsdaten eines individuellen Nutzers, wobei die Bewegungsdaten Bewegungsdaten einer bestimmten Bewegungsart umfassen. Durch die Auswertung wird ein für die entsprechende Bewegungsart nutzerindividuelles Bewegungsmuster identifiziert und zum zukünftigen Erkennen nutzerindividueller Bewegungsmuster extrahiert. Diese Auswertung erfolgt unter Verwendung eines generischen Bewegungsmusters für die bestimmte Bewegungsart, welches zuvor ebenfalls trainiert wurde.

Bei einer verhaltensbasierten Authentifizierung eines Nutzers unter Verwendung eines mobilen, tragbaren Telekommunikationsgeräts wird zwischen zwei Typen von Nutzern unterschieden. Einerseits ist der in dem Telekommunikationsgerät registrierte Nutzer derjenige Nutzer, den das System erkennen soll. Andererseits ist der aktuelle Nutzer derjenige Nutzer, der das System aktuell bedienen bzw. benutzen möchte, wofür er sich authentifizieren muss. Kann der aktuelle Nutzer mit dem in dem Telekommunikationsgerät registrierten Nutzer durch den Authentifizierungsprozess identifiziert werden, so wird dem aktuellen Nutzer der Zugriff auf das Telekommunikationsgerät gewährt. Stimmt der aktuelle Nutzer nicht mit dem in dem Telekommunikationsgerät registrierten Nutzer überein, so identifiziert das Telekommunikationsgerät den aktuellen Nutzer als eine andere, nicht nutzungsberechtigte Person und verweigert den Zugriff. Im Folgenden wird mit "der Nutzer" der aktuelle Nutzer des Telekommunikationsgeräts bezeichnet. Ist der in dem Telekommunikationsgerät registrierte Nutzer gemeint, ist dies explizit als "der registrierte Nutzer" gekennzeichnet.

Ein mobiles, tragbares Telekommunikationsgerät kann zum Beispiel umfassen: ein Smartphone, ein Tablet, einen Personal Digital Assistant, einen Pager, Smart-Glasses, eine Smart-Watch, ein Navigationsgerät, einen Activity Tracker, ein Gerät zur Erfassung medizinischer Daten, insbesondere physiologischer Daten wie ein Pulsmessgerät oder ein Blutdruckmessgerät. Zum Ausführen der verhaltensbasierten Authentifizierung sowie der verhaltensunabhängigen Authentifizierung ist das mobile, tragbare Telekommunikationsgerät dazu konfiguriert elektronische Daten zu verarbeiten und weist nach Ausführungsformen mindestens einen Sensor zum Erfassen einer grobmotorischen Bewegung sowie einen Sensor zum Erfassen eines verhaltensunabhängigen Authentifizierungsmerkmals auf.

Beispielsweise kann ein mobiles, tragbares Telekommunikationsgerät ein Smartphone umfassen, wobei das Smartphone einen Sensor zur Erfassung einer grobmotorischen Bewegung des Gehens sowie ein Touch-Display zur Eingabe eines für den registrierten Nutzer charakteristischen Wissens, wie etwa eine alphanumerische Zeichenfolge, aufweist. Nach weiteren Ausführungsformen weist das Smartphone zusätzlich oder alternative beispielsweise eine Kommunikationsschnittstelle zur Kommunikation mit einem ID-Token auf, sodass der registrierten Nutzer als charakteristischen Besitze den Besitz des entsprechenden ID-Token nachweisen kann. Wobei der Nachweis eine Kommunikation zwischen dem Smartphone und dem ID-Token über die entsprechende Kommunikationsschnittstelle umfasst. Nach weiteren Ausführungsformen weist das Smartphone zusätzlich oder alternative beispielsweise einen Sensor zum Erfassen eines oder mehrerer biometrischer Merkmale, wie etwa einen Fingerabdrucksensor, einen Pulsmesser oder einen Irissensor, als einer für den registrierten Nutzer charakteristischen biologischen Eigenschaft auf.

Beispielhaft kann ein mobiles, tragbares Telekommunikationsgerät ein Smartphone und/oder eine Smart-Watch umfassen, wobei das Smartphone einen Sensor zur Erfassung der grobmotorischen Bewegung des Gehens aufweist und die Smart-Watch den Puls und den Blutdruck des Nutzers misst. Anhand eines Vergleichs der Daten des Nutzers und des registrierten Nutzers kann der Nutzer als der registrierte Nutzer identifiziert werden oder nicht.

Ein solches mobiles, tragbares Telekommunikationsgerät weist zur Ausführung der verhaltensbasierten Authentifizierung eines Nutzers mindestens einen Sensor zur Erfassung von Daten einer grobmotorischen Bewegung des Nutzers, ein Grobmotorikklassifikationsmodul, ein Betriebssystem, einen Prozessor und einen internen Speicher auf. Der Sensor zur Erfassung der Daten ist dazu konzipiert, eine grobmotorische Bewegung des Nutzers zu erfassen. Das Grobmotorikklassifikationsmodul ist für die Klassifikation der Daten konfiguriert, auf das Erkennen einer grobmotorischen Bewegung des Nutzers trainiert, implementiert ein Maschinenlernverfahren und wird durch den Prozessor des mobilen, tragbaren Telekommunikationsgeräts ausgeführt, wobei das Betriebssystem dazu in der Lage ist den Zugriff auf das mobile, tragbare Telekommunikationsgerät aufgrund des Erfolgs der Authentifizierung zu steuern.

Das durch das Grobmotorikklassifikationsmodul implementierte Maschinenlernverfahren bezeichnet ein Verfahren, mit dem das Grobmotorikklassifikationsmodul in der Lage ist, sich an den Nutzer des mobilen, tragbaren Telekommunikationsgeräts anzupassen. Anpassen bezeichnet in diesem Sinne das Justieren und gegebenenfalls Neukonfigurieren von Klassifikationsparametern, anhand derer der Nutzer korrekt identifiziert werden kann. Das Maschinenlernverfahren ist nicht beschränkt auf einen bestimmten Algorithmus. Gemäß Ausführungsformen ist das Maschinenlernverfahren ein speziell für das maschinelle Lernen entwickelter Algorithmus, wie zum Beispiel, ohne darauf beschränkt zu sein, eine dichtenbasierte multidimensionale Ausreißererkennung (engl. "local outlier detection"), ein Random-Forrest-Algorithmus, ein Neuronales Netz, eine Support-Vektor-Maschine, ein Naive-Bayes-Klassifikator oder eine Rückkopplung ähnlich der Rückkopplung eines linearen oder nichtlinearen Reglers.

Die verhaltensbasierte Authentifizierung eines Nutzers unter Verwendung eines mobilen tragbaren Telekommunikationsgerät kann in zwei operative Abschnitte unterteilt werden. Abschnitt A umfasst ein wiederholtes Ausführen der folgenden Schritte:
∘ Erfassen grobmotorischer Bewegungsdaten durch den mindestens einen Sensor des mobilen, tragbaren Telekommunikationsgeräts,
∘ Eingabe der grobmotorischen Bewegungsdaten in das Grobmotorikklassifikationsmodul,
∘ Generieren mindestens eines ersten Konfidenzwerts durch das Grobmotorikklassifikationsmodul,
∘ Speichern des mindestens einen ersten Konfidenzwerts in dem Speicher des mobilen, tragbaren Telekommunikationsgeräts und
∘ Trainieren des Grobmotorikklassifikationsmoduls mit den grobmotorischen Bewegungsdaten des Nutzers, um das Grobmotorikklassifikationsmodul auf ein nutzerspezifisches grobmotorisches Bewegungsmuster zu trainieren unter der Voraussetzung, dass der Nutzer der im mobilen, tragbaren Telekommunikationsgerät registrierte Nutzer ist.

Diese Schritte werden wiederholt ausgeführt, wodurch fortlaufend Konfidenzwerte generiert und in dem Speicher des mobilen, tragbaren Telekommunikationsgeräts gespeichert werden.

Im zweiten Abschnitt B der verhaltensbasierten Authentifizierung reagiert das mobile, tragbare Telekommunikationsgerät auf eine Authentifizierungsanfrage an ein für die Authentifizierung konfiguriertes Anwendungsprogramm, welches auf dem mobilen, tragbaren Telekommunikationsgerät implementiert ist, und/oder das Betriebssystem des mobilen, tragbaren Telekommunikationsgeräts. Die Authentifizierungsanfrage kann dabei auf dem mobilen, tragbaren Telekommunikationsgerät erzeugt werden, wenn die Authentifizierung gegenüber dem mobilen, tragbaren Telekommunikationsgeräts selbst auszuführen ist. Beispielsweise wird die Authentifizierungsanfrage von dem Betriebssystem des mobilen, tragbaren Telekommunikationsgeräts generiert. Ferner kann die Authentifizierungsanfrage von einem auf dem mobilen, tragbaren Telekommunikationsgerät ausgeführten bzw. aufgerufenen Anwendungsprogramm gestellt werden. Nach weiteren Ausführungsformen empfängt das mobile, tragbare Telekommunikationsgerät die Authentifizierungsanfrage über eine Kommunikationsschnittstelle. Beispielsweise stammt die Authentifizierungsanfrage von einem externen Computersystem, wie etwa einem Server, falls die Authentifizierung unter Verwendung des mobilen, tragbaren Telekommunikationsgeräts gegenüber dem entsprechenden externen Computersystem auszuführen ist.

Ist die verhaltensbasierte Authentifizierung unzureichend zum Erfüllen der Authentifizierungsanforderungen eines konkreten Authentifizierungsfalls, so werden beispielsweise ein oder mehrere verhaltensunabhängige Authentifizierungsverfahren durchgeführt.

Die verhaltensunabhängige Authentifizierung eines Nutzers gegenüber einem mobilen tragbaren Telekommunikationsgerät erfolgt beispielsweise in einem zusätzlichen Abschnitt, d.h. einem dritten operativen Anschnitt C. Falls die verhaltensunabhängige Authentifizierung erfolgreich ist, wird ein Authentifizierungssignal erzeugt, welches eine erfolgreiche verhaltensunabhängige Authentifizierung des Nutzers signalisiert. Ist auch die verhaltensbasierte Authentifizierung ebenfalls unzureichend, so wird dem Nutzer kein Zugriff gewährt.

Abschnitt C umfasst beispielsweise ein Ausführen der folgenden Schritte:
∘ Erfassen des zumindest einen vordefinierten Authentifizierungsmerkmals des aktuellen Nutzers,
∘ Auswerten des erfassten vordefinierten Authentifizierungsmerkmals.

Nach Ausführungsformen kann Abschnitt C ferner folgende Schritte umfasst:
∘ Senden eines Signals an den aktuellen Nutzer, welches eine Aufforderung zum Nachweis des zumindest einen vordefinierten Authentifizierungsmerkmals umfasst,
∘ Empfang des von dem ersten Sensor erfassten vordefinierten Authentifizierungsmerkmals des aktuellen Nutzers,
   wobei das Auswerten des erfassten vordefinierten Authentifizierungsmerkmals umfasst:
   ∘ Vergleichen des empfangenen Authentifizierungsmerkmals mit zumindest einem in einem geschützten Speicherbereich eines Speichers des mobilen, tragbaren Telekommunikationsgeräts gespeicherten Referenzwert für das charakteristische Wissen, den charakteristischen Besitz und/oder die charakteristische biologische Eigenschaft des registrierten Nutzers,
   ∘ Bestimmen eines Konfidenzwerts in Abhängigkeit vom Grad der Übereinstimmung zwischen dem empfangenen Authentifizierungsmerkmal und dem Referenzwert.

Ausführungsformen können den Vorteil haben, dass sie im Falle, eine verhaltensbasierte Authentifizierung ist für die gegebenen Umstände zu unsicher bzw. unzureichend, ein effizientes Boosting des erreichbaren Sicherheitsniveaus bereitstellen können auf Basis eines verhaltensunabhängigen Authentifizierungsverfahrens. Hierbei werden Authentifizierungsmerkmale verwendet, bei welchen es sich um vordefinierte Merkmale handelt, welche charakteristisch für den registrierten Nutzer sind und als Authentifizierungsmerkmale für den registrierten Nutzer festgelegt wurden. Dieses Authentifizierungsmerkmal umfasst beispielsweise ein Wissen, welches nur der registrierte Nutzer besitzt, wie etwa eine PIN, ein individuelles körperliches Charakteristikum des registrierten Nutzers, wie etwa ein Fingerabdruck, oder einen Besitz einer für den registrierten Nutzer charakteristischen Vorrichtung, wie etwa einem ID-Token.

Nach Ausführungsformen umfasst das nachzuweisende vordefinierte Authentifizierungsmerkmal eines der folgenden Merkmale: einen Benutzernamen, ein Kennwort, ein Einmalkennwort, eine persönliche Identifikationsnummer, eine Transaktionsnummer, ein Muster und/oder ein biometrisches Merkmal. Diese Merkmale können den Vorteil haben, dass sie eine effiziente Eingabe und/oder Prüfung der eingegebenen Merkmale ermöglichen. Die Eingabe bzw. Erfassung der Merkmale erfolgt durch den zweiten Sensor, bei welchem es sich beispielsweise um eine Nutzerschnittstelle, wie etwa eine Tastatur, ein Touchpad bzw. Touch-Display, ein Mikrophon, eine Kamera, oder einen biometrischen Sensor zur Erfassung eines biometrischen Merkmals handeln kann.

Eine Anwendung kann beispielsweise ein Anwendungsprogramm bzw. eine Applikation umfassen, welche auf dem mobilen, tragbaren Telekommunikationsgerät implementiert ist und/oder über das mobile, tragbare Telekommunikationsgerät gesteuert wird. Unter einem Anwendungsprogramm wird hier ohne Einschränkung jede Art von Computerprogramm verstanden, welches maschinenlesbare Instruktionen zur Steuerung einer Funktionalität eines Computers umfasst. Eine solches Anwendungsprogramm kann beispielsweise dazu konfiguriert sein eine nützliche oder gewünschte, nicht systemtechnische Funktionalität zu bearbeiten oder zu unterstützen.

Auf die Authentifizierungsanfrage hin greift der Prozessor des mobilen, tragbaren Telekommunikationsgeräts auf den Speicher zu und liest mindestens einen ersten Konfidenzwert aus. Der mindestens eine erste Konfidenzwert wird dann verwendet, um ein Authentifizierungsergebnis zu generieren. Ist dieser Konfidenzwert ausreichen, wird der Nutzer erfolgreich authentifiziert und ein entsprechendes Authentifizierungssignal erzeugt, wobei das Signal die Information des Erfolges der Authentifizierung des Nutzers umfasst. Ist er Konfidenzwert noch nicht ausreichend aufgrund hoher Authentifizierungsanforderungen, werden weitere Authentifizierungsverfahren ausgeführt.

Gemäß einer Ausführungsform werden die verhaltensbasierten Daten durch den mindestens einen Sensor als Datenstrom (Stream) erfasst. Durch die Erfassung der verhaltensbasierten Daten als Stream ergibt sich vorteilhafterweise eine maximal sensible Einteilung der ersten Konfidenzwerte pro Zeiteinheit. Es werden kontinuierlich verhaltensbasierte Daten erfasst, welche kontinuierlich zu ersten Konfidenzwerten verarbeitet werden. Kontinuierlich bedeutet in diesem Zusammenhang, dass die Daten so oft erfasst werden, wie es der Takt des Prozessors und/oder des Sensors zulässt. Durch die kontinuierlich zur Verfügung stehenden Konfidenzwerte kann jederzeit ein Authentifizierungsergebnis aus den zeitnah generierten Konfidenzwerten generiert werden, ohne dass das mobile, tragbare Telekommunikationsgerät erst abwarten muss, bis ein vorbestimmtes Messintervall abgelaufen und aktuelle verhaltensbasierte Daten verarbeitet wurden. Ferner werden kontinuierlich neue erste Konfidenzwerte generiert, so dass bei einer Authentifizierungsanfrage aktuelle erste Konfidenzwerte zur Verfügung stehen, sofern sich der Nutzer in der nahen Vergangenheit bewegt hat.

In einer weiteren Ausführungsform umfasst das mobile, tragbare Telekommunikationsgerät ein Anwendungsklassifikationsmodul. Das Anwendungsklassifikationsmodul ist konfiguriert um Anwendungsdaten eines Nutzers zu klassifizieren und nutzerspezifische Anwendungsmuster in den Anwendungsdaten zu finden.

Nach Ausführungsformen handelt es sich bei einem zweiten der ein oder mehreren verhaltensbasierten Authentifizierungsverfahren um ein Authentifizierungsverfahren zum Authentifizieren des aktuellen Nutzers anhand von Anwendungsdaten, wobei das mobile, tragbare Telekommunikationsgerät ein Anwendungsklassifikationsmodul aufweist, wobei das Anwendungsklassifikationsmodul von dem Prozessor des mobilen, tragbaren Telekommunikationsgeräts ausgeführt wird, wobei das zweite verhaltensbasierte Authentifizierungsverfahren die folgenden Schritte aufweist:
- Wiederholtes Ausführen der folgenden Schritte:
   ∘ Erfassen von Anwendungsdaten,
   ∘ Eingabe der Anwendungsdaten in das Anwendungsklassifikationsmodul,
   ∘ Generieren mindestens eines zweiten Konfidenzwerts durch das Anwendungsklassifikationsmodul, wobei der zweite Konfidenzwert eine Wahrscheinlichkeit dafür angibt, dass die eingegebenen Anwendungsdaten Daten eines Anwendungsverhaltens des registrierten Nutzers sind,
   ∘ Speichern des mindestens einen zweiten Konfidenzwerts im Speicher des mobilen, tragbaren Telekommunikationsgeräts,
- auf die Authentifizierungsanfrage hin, Zugreifen auf den Speicher des mobilen, tragbaren Telekommunikationsgeräts, um mindestens einen der gespeicherten zweiten Konfidenzwerte aus dem Speicher auszulesen,
- Auslesen des mindestens einen zweiten Konfidenzwerts und Bereitstellen als Teil der Eingangsdaten für das Programmmodul.

Die Anwendungsdaten können beispielsweise die folgenden Datentypen umfassen:
∘ Anwendungsnutzungsdaten des Nutzers,
∘ Verbindungsdaten des mobilen, tragbaren Telekommunikationsgeräts.

Die Anwendungsnutzungsdaten umfassen ein Anwendungsnutzungsverhalten des Nutzers, wobei das Anwendungsnutzungsverhalten Informationen umfasst, welche beschreiben, wann welche Anwendungen vom Nutzer auf dem mobilen, tragbaren Telekommunikationsgerät gestartet und/oder ausgeführt werden. So kann zum Beispiel erfasst werden, wann bzw. wie oft der Nutzer unter Verwendung welcher Anwendung Radio hört und/oder welchen Radiosender er hört, Nachrichten liest oder seine Kamera bedient. Insbesondere im Alltag oft verwendete Anwendungen können ein nutzerspezifisches Anwendungsnutzungsprofil ergeben, anhand dessen der Nutzer identifiziert werden kann.

Durch das Miteinbeziehen der Anwendungsnutzungsdaten des Nutzers in das verhaltensbasierte Authentifizierungsverfahren steigt die Sicherheit des mobilen, tragbaren Telekommunikationsgeräts, da ein unberechtigter Nutzer, insbesondere ein Dieb, welcher das mobile, tragbare Telekommunikationsgerät gestohlen hat, auch die Anwendungsnutzungsverhalten des Nutzers imitieren müsste, um Zugriff auf Anwendungen, die einer Authentifizierung bedürfen, bzw. zu dem mobilen, tragbaren Telekommunikationsgerät zu erlangen.

Die Verbindungsdaten des mobilen, tragbaren Telekommunikationsgeräts mit anderen kommunikationsfähigen Geräten wie zum Beispiel Computern, kommunikationsfähigen Haushaltsgeräten oder einzelnen, mobilen, tragbaren Kommunikationsgeräten und -systemen können dazu verwendet werden, ein typisches Verbindungsmuster des Nutzers aufzuzeigen. So können zum Beispiel einzelne Geräte über WLAN, Bluetooth, Radio Frequency Identification (RFID), Near Field Communikation (NFC) oder ein Kabel mit dem mobilen, tragbaren Telekommunikationsgerät verbunden werden. So kann für den Nutzer ein Verbindungsprofil angelegt werden, welches Informationen über die regelmäßigen Verbindungen des mobilen, tragbaren Telekommunikationsgeräts mit weiteren Geräten enthält.

Beispielsweise kann ein Nutzer das mobile, tragbare Telekommunikationsgerät mit dem privaten WLAN einer Wohnung oder einem öffentlichen WLAN verbinden. In einer weiteren Ausführungsform verbindet der Nutzer das mobile, tragbare Telekommunikationsgerät mit Haushaltsgeräten und/oder einem Computer über das Internet oder ein Intranet, wodurch sich ein nutzerspezifisches Verbindungsprofil ergibt. Dieses Nutzungsprofil kann beispielsweise, ohne darauf beschränkt zu sein eine Waschmaschine, einen Trockner, einen Kühlschrank oder ähnliche Haushaltsgeräte, sowie Geräte eines Smart-Home-Systems, wie etwa Beleuchtung, Alarmanlage, Klimaanlage, Heizung, Audioanlage(n), Video- bzw. Fernsehanlage(n), und/oder einen PC umfassen, welche der Nutzer zu Hause über das Internet, ein Intranet oder individuelle Funkverbindungen ansteuert.

In einer weiteren Ausführungsform wird eine Authentifizierungsanfrage durch ein mit dem mobilen, tragbaren Telekommunikationsgerät über eine Kommunikationsverbindung kommunikative verbundenen Gerät an das Betriebssystem des mobilen, tragbaren Telekommunikationsgeräts und/oder ein für die Authentifizierung konfiguriertes Anwendungsprogramm, welches auf dem mobilen, tragbaren Telekommunikationsgerät implementiert ist, gesendet, um den Nutzer gegenüber dem Gerät zu authentifizieren, welche mit dem mobilen, tragbaren Telekommunikationsgerät kommunikativ verbunden sind. Somit dient das mobilen, tragbaren Telekommunikationsgerät als Vermittlungsinstanz zur Authentifizierung des Nutzers gegenüber dem entsprechenden Gerät. Bei der Kommunikationsverbindung kann es sich beispielsweise um eine kabelbasierte oder kabellose Verbindung über eine Kommunikationsschnittstelle des mobilen, tragbaren Telekommunikationsgeräts handeln. Nach Ausführungsformen ist die Kommunikation zwischen dem mobilen, tragbaren Telekommunikationsgerät und dem verbundenen Gerät kryptographisch Verschlüsselt, beispielsweise mittels Ende-zu-Ende-Verschlüsselung.

Durch die Verwendung der Verbindungsdaten des Nutzers zur verhaltensbasierten Authentifizierung des Nutzers gegenüber dem mobilen, tragbaren Telekommunikationsgerät ergibt sich in vorteilhafter Weise, dass ein unberechtigter Nutzer die Geräte kennen und ggf. Zugriff auf die Geräte besitzen muss, mit denen der registrierte Nutzer normalerweise das mobile, tragbare Kommunikationsgerät verbindet.

Durch die Verwendung der Verbindungsdaten zur verhaltensbasierten Authentifizierung eines Nutzers gegenüber dem mobilen, tragbaren Telekommunikationsgerät ergibt sich in vorteilhafter Weise, dass der aktuelle Nutzer, welcher zum Beispiel eine Smartwatch trägt, sich über das Tragen der Smartwatch gegenüber dem mobilen, tragbaren Telekommunikationsgerät authentifizieren kann. Somit fungiert die Smartwatch als eine Art Schlüssel, welche den Zugriff auf das mobile, tragbare Telekommunikationsgerät, eine auf dem Telekommunikationsgerät ausgeführte Anwendung, einem mit dem Telekommunikationsgerät verbundenen Gerät oder einer auf dem verbundenen Gerät ausgeführten Anwendung freigibt. Ein Dieb, welcher das mobile, tragbare Telekommunikationsgerät gestohlen hat, müsste also auch die Smartwatch in seinen Besitz bringen, um Zugriff zu erlangen.

In einer weiteren Ausführungsform wird der Abstand zwischen zwei oder mehreren Kommunikationsgeräten eines mobilen, tragbaren Telekommunikationsgeräts aufgrund der Signalstärke des Signals der Drahtlosverbindung zwischen den Geräten ermittelt. Ein solches Drahtlosverbindungssignal kann beispielsweise ein Bluetooth-Signal, ein WLAN-Signal oder ein Funksignal sein. Der aus dem Drahtlosverbindungssignal ermittelte Abstand zwischen den Geräten kann gemäß dieser Ausführungsform als Teil der Anwendungsdaten erfasst werden und zur verhaltensbasierten Authentifizierung des Nutzers gegenüber einem mobilen, tragbaren Telekommunikationsgerät verwendet werden.

Das Erfassen des Abstandes zweier Geräte eines mobilen, tragbaren Telekommunikationsgeräts als Teil der Anwendungsdaten und das Verwenden des Abstandes zur verhaltensbasierten Authentifizierung des Nutzers gegenüber dem mobilen, tragbaren Telekommunikationsgerät ermöglicht die Erhöhung der Sicherheit des Verfahrens zur verhaltensbasierten Authentifizierung, da ein weiterer Parameter durch einen unberechtigten Nutzer gefälscht bzw. nachgeahmt werden müsste, um Zugriff auf das mobilen, tragbaren Telekommunikationsgerät zu erlangen.

Nach Ausführungsformen wird der Abstand dazu verwendet, um ein grobmotorische Bewegungsmuster des Nutzers zu erkennen.

Um die Anwendungsdaten zur verhaltensbasierten Authentifizierung des Nutzers gegenüber einem mobilen, tragbaren Telekommunikationsgerät zu verwenden, werden beispielsweise folgende Schritte ausgeführt:
∘ Erfassen der Anwendungsdaten,
∘ Eingabe der Anwendungsdaten in das Anwendungsklassifikationsmodul,
∘ Generieren mindestens eines zweiten Konfidenzwerts durch das Anwendungsklassifikationsmodul,
∘ Speichern des mindestens einen zweiten Konfidenzwerts in dem Speicher des mobilen, tragbaren Telekommunikationsgeräts und
∘ Trainieren des Anwendungsklassifikationsmoduls mit den Anwendungsdaten des Nutzers, um das Anwendungsklassifikationsmodul auf ein nutzerspezifisches Anwendungsverhaltensmuster zu trainieren unter der Voraussetzung, dass der Nutzer der im System registrierte Nutzer ist.

Zum Authentifizieren des Nutzers wird beispielsweise nicht nur der mindestens eine erste Konfidenzwert, welcher auf den verhaltensbasierten Daten des Sensors zur Erfassung grobmotorischer Bewegung beruht, verwendet, sondern auch der mindestens eine zweite Konfidenzwert, welcher sich aus den Anwendungsdaten des Nutzers ergibt.

In einer weiteren Ausführungsform umfasst das mobile, tragbare Telekommunikationsgerät ein Feinmotorikklassifikationsmodul, welches dazu ausgebildet ist eine feinmotorische Bewegung des Nutzers zu erfassen und einen Sensor zur Erfassung einer feinmotorischen Bewegung in Form von feinmotorischen Bewegungsdaten.

Nach Ausführungsformen handelt es sich bei einem dritten der ein oder mehreren verhaltensbasierten Authentifizierungsverfahren um ein Authentifizierungsverfahren zum Authentifizieren des aktuellen Nutzers anhand feinmotorischen Bewegungen, wobei das mobile, tragbare Telekommunikationsgerät einen Sensor zu einer Erfassung von feinmotorischen Bewegungsdaten einer feinmotorischen Bewegung des aktuellen Nutzers des mobilen tragbaren Telekommunikationsgeräts konfiguriert ist, wobei das mobile, tragbare Telekommunikationsgerät ein Feinmotorikklassifikationsmodul aufweist, wobei das Feinmotorikklassifikationsmodul für eine Klassifikation von feinmotorischen Bewegungsdaten konfiguriert und auf ein Erkennen einer feinmotorischen Bewegung eines registrierten Nutzers trainiert ist, wobei das Feinmotorikklassifikationsmodul von dem Prozessor des mobilen, tragbaren Telekommunikationsgeräts ausgeführt wird, wobei das zweite verhaltensbasierte Authentifizierungsverfahren die folgenden Schritte aufweist:
- Wiederholtes Ausführen der folgenden:
   ∘ Erfassen der feinmotorischen Bewegungsdaten,
   ∘ Eingabe der feinmotorischen Bewegungsdaten in das Feinmotorikklassifikationsmodul,
   ∘ Generieren mindestens eines dritten Konfidenzwerts durch das Feinmotorikklassifikationsmodul, wobei der dritte Konfidenzwert eine Wahrscheinlichkeit dafür angibt, dass die eingegebenen feinmotorischen Bewegungsdaten Daten einer feinmotorischen Bewegung des registrierten Nutzers sind,
   ∘ Speichern des mindestens einen dritten Konfidenzwerts in dem Speicher des mobilen, tragbaren Telekommunikationsgeräts,
- auf die Authentifizierungsanfrage hin, Zugreifen auf den Speicher des mobilen, tragbaren Telekommunikationsgeräts, um mindestens einen der gespeicherten dritten Konfidenzwerte aus dem Speicher auszulesen,
- Auslesen des mindestens einen dritten Konfidenzwerts und Bereitstellen als Teil der Eingangsdaten für das Programmmodul.

Eine feinmotorische Bewegung ist eine Bewegung feiner Muskelgruppen, wie beispielsweise die Muskulatur der Finger. Feinmotorik bezeichnet gezielte und koordinierte Bewegung, beispielsweise von Hand und/oder Fingermuskulatur, aber auch den Muskeln des Mundes, der Augen und des Gesichtes. Die feinmotorische Bewegung, welche durch einen feinmotorischen Sensor des mobilen, tragbaren Telekommunikationsgeräts erfasst wird, kann etwa eine bestimmte Bewegung der Finger umfassen.

In Ausführungsformen werden durch den Sensor zur Erfassung einer feinmotorischen Bewegung die Eingabegeschwindigkeit, der Eingabetakt und/oder die Eingabegenauigkeit des Nutzers erfasst, während er eine Eingabe in das mobile, tragbare Telekommunikationsgerät tätigt. Eine solche Eingabe kann beispielsweise, ohne darauf beschränkt zu sein, das Tippen von Wörtern bzw. Wischen von Wörtern, d.h. einem zu Tippen analogen Eingabeverfahren, bei welchem der oder die Finger bei Auswahl von Buchstaben den Kontakt zur Bildschirmoberfläche jedoch beibehält, auf einer virtuellen Tastatur, das Nachfahren von auf dem Bildschirm gezeigten geometrischen Figuren oder eine andere Bewegung mit der der Nutzer eine Eingabe tätigt sein. Ferner können feinmotorischen Bewegungen Änderungen der Ausrichtung, wie etwa des Neigungswinkels, des mobilen, tragbaren Telekommunikationsgeräts während der Nutzung umfassen.

Ein Sensor zur Erfassung einer feinmotorischen Bewegung kann als beispielsweise als optisches System oder als Touch-Pad bzw. Touch-Display, insbesondere, jedoch ohne darauf beschränkt zu sein, ein resistiver Touch-Display, ein oberflächenkapazitiver Touch-Display, ein projiziert-kapazitiver Touch-Display oder ein induktiver Touch-Display ausgebildet sein.

Um die feinmotorischen Bewegungsdaten zur feinmotorischen Authentifizierung des Nutzers gegenüber einem mobilen, tragbaren Telekommunikationsgerät zu verwenden, werden beispielsweise die folgenden Schritte ausgeführt:
∘ Erfassen der feinmotorischen Bewegungsdaten,
∘ Eingabe der feinmotorischen Bewegungsdaten in das Feinmotorikklassifikationsmodul,
∘ Generieren mindestens eines dritten Konfidenzwerts durch das Feinmotorikklassifikationsmodul,
∘ Speichern des mindestens einen dritten Konfidenzwerts in dem Speicher des mobilen, tragbaren Telekommunikationsgeräts und
∘ Trainieren des Feinmotorikklassifikationsmoduls mit den feinmotorischen Bewegungsdaten des aktuellen Nutzers, um das Feinmotorikklassifikationsmodul auf ein nutzerspezifisches feinmotorisches Bewegungsmuster zu trainieren unter der Voraussetzung, dass der aktuelle Nutzer der im mobilen, tragbaren Telekommunikationsgerät registrierte Nutzer ist.

Beim Erzeugen des Authentifizierungsergebnisses wird nicht nur der mindestens eine erste Konfidenzwert, welcher auf den verhaltensbasierten Daten des Sensors zur Erfassung der grobmotorischen Bewegung beruht, verwendet, sondern auch der mindestens eine dritte Konfidenzwert, welcher sich aus den feinmotorischen Bewegungsdaten des Nutzers ergibt.

Durch das Verwenden einer feinmotorischen Bewegung eines Nutzers erhöht sich die Sicherheit der verhaltensbasierten Authentifizierung, da weitere Parameter nötig sind, um den Nutzer gegenüber dem mobilen, tragbaren Telekommunikationsgerät zu authentifizieren.

In einer weiteren Ausführungsform wird der Nutzer dazu aufgefordert eine Eingabe in das mobile, tragbare Telekommunikationsgerät zu tätigen, um eine feinmotorische Bewegung des Nutzers erfassen zu können. Die Eingabe kann dabei beispielsweise das Nachmalen einer bestimmten Figur auf dem Bildschirm oder die Eingabe eines vordefinierten Wortes bzw. die Eingabe mehrerer Wörter umfassen.

Die Wörter und/oder Muster können durch das System oder den Nutzer vordefiniert oder zufällig ausgewählt sein. Beispielsweise werden die entsprechenden Wörter und/oder Muster auf dem Bildschirm angezeigt.

Durch das Authentifizieren mittels einer feinmotorischen Bewegung im Falle einer fehlgeschlagenen Authentifizierung, ergibt sich vorteilhafterweise für den Nutzer die Möglichkeit sich trotz einer zunächst fehlgeschlagenen verhaltensbasierten Authentifizierung dennoch mittels verhaltensbasierter Daten zu authentifizieren. Nach Ausführungsformen erfolgt die verhaltensunabhängige Authentifizierung erst in dem Fall, dass auch die verhaltensbasierte Authentifizierung mittels feinmotorischer Bewegungen fehlschlägt.

Aufgrund der Ähnlichkeit der Verarbeitungsstruktur der verschiedenen Daten gelten die folgenden Ausführungen für die grobmotorischen Bewegungsdaten, die feinmotorischen Bewegungsdaten und die Anwendungsdaten, das Grobmotorik-, Anwendungs- und Feinmotorikklassifikationsmodul sowie den mindestens einen ersten, zweiten und dritten Konfidenzwert gleichermaßen. Ferner bezeichnen "verhaltensbasierte Daten" im grobmotorische Bewegungsdaten, feinmotorische Bewegungsdaten und/oder Anwendungsdaten. Sind nur grobmotorische Bewegungsdaten des Sensors zur Erfassung einer grobmotorischen Bewegung, feinmotorische Bewegungsdaten oder Anwendungsdaten gemeint, so ist dies explizit angegeben.

Ferner sind gemäß einer weiteren Ausführungsform das Grobmotorikklassifikationsmodul und/oder das Anwendungsklassifikationsmodul und/oder das Feinmotorikklassifikationsmodul als ein Klassifikationsmodul ausgebildet, welches in der Lage ist verhaltensbasierte Daten unterschiedlicher Art zu verarbeiten. Beispielsweise sind gemäß einer weiteren Ausführungsform das Grobmotorikklassifikationsmodul und/oder das Anwendungsklassifikationsmodul und/oder das Feinmotorikklassifikationsmodul von ein und demselben oder verschiedenen Anwendungsprogrammen umfasst, welche zu einer Ausführung einer verhaltensbasierten Authentifizierung konfiguriert sind. Nach Ausführungsformen wird ein Gesamtauthentifizierungsergebnis unter Verwendung der Konfidenzwerte generiert.

In einer weiteren Ausführungsform wird bei nichterfolgreicher Authentifizierung ein Signal gesendet, welches die Information der fehlgeschlagenen verhaltensbasierten Authentifizierung umfasst. Ein solches Signal kann gemäß einer Ausführungsform auf die Information der fehlgeschlagenen verhaltensbasierten Authentifizierung beschränkt sein. Gemäß weiterer Ausführungsformen kann das Signal den Grund des Fehlschlags der verhaltensbasierten Authentifizierung spezifizieren.

Durch das Senden eines Signals bei einer fehlgeschlagenen verhaltensbasierten Authentifizierung kann sich vorteilhafterweise ergeben, dass der Nutzer darüber informiert wird, dass seine verhaltensbasierte Authentifizierung fehlgeschlagen ist und sich gezielt so verhalten kann, dass er Zugriff auf das System erlangen kann. Beispielsweise zeigt das Signal an, dass die Gangart des Nutzers nicht erkannt wurde. Der Nutzer bemerkt das Signal und beginnt auf und ab zu gehen, bis das Prüfungskriterium erfüllt ist. Ein solches Signal kann dem Nutzer beispielsweise mittels einer Anzeige des mobilen, tragbaren Telekommunikationsgeräts angezeigt werden, akustisch über einen Lautsprecher des mobilen, tragbaren Telekommunikationsgeräts mitgeteilt werden oder mittels eines Vibrationsmusters, erzeugt durch einen Vibrationsmechanismus des mobilen, tragbaren Telekommunikationsgeräts, signalisiert werden.

Nach Ausführungsformen umfasst das Signal neben der Information der fehlgeschlagenen verhaltensbasierten Authentifizierung eine Aufforderung zum Ausführen einer verhaltensunabhängigen Authentifizierung, d.h. zum Nachweis zumindest eines vordefinierten verhaltensunabhängigen Authentifizierungsmerkmals. Nach einer alternativen Ausführungsform wird ein zusätzliches Signal mit der Aufforderung zum Ausführen einer verhaltensunabhängigen Authentifizierung gesendet.

Nach Ausführungsformen wird bei nichterfolgreicher verhaltensunabhängiger Authentifizierung ein Signal gesendet, welches die Information der fehlgeschlagenen verhaltensunabhängigen Authentifizierung umfasst. Ein solches Signal kann gemäß einer Ausführungsform auf die Information der fehlgeschlagenen verhaltensunabhängigen Authentifizierung beschränkt sein. Gemäß weiterer Ausführungsformen kann das Signal den Grund des Fehlschlags der verhaltensunabhängigen Authentifizierung spezifizieren. Durch das Senden eines Signals bei einer fehlgeschlagenen verhaltensbasierten Authentifizierung kann sich vorteilhafterweise ergeben, dass der Nutzer darüber informiert wird, dass seine verhaltensunabhängige Authentifizierung fehlgeschlagen ist.

In einer weiteren Ausführungsform ist in dem Speicher des mobilen, tragbaren Telekommunikationsgeräts mindestens ein Muster in Form einer Musterfunktion und mindestens ein Vergleichsdatensatz gespeichert, wobei der Vergleichsdatensatz Werte für mindestens einen Vergleichsparameter beinhaltet, wobei durch das jeweilige Klassifikationsmodul die folgenden Schritte ausgeführt werden:
∘ Vergleich der erfassten verhaltensbasierten Daten mit der mindestens einen Musterfunktion.
∘ Zuordnen der verhaltensbasierten Daten zu je einem der Musterfunktion entsprechenden Muster und Erhalten von mindestens einem der dem Muster entsprechenden Klassifikationsparameter durch das Klassifikationsmodul, falls die verhaltensbasierten Daten dem mindestens einen Muster zugeordnet werden können.
∘ Generieren eines Konfidenzwerts für jeden Klassifikationsparameter durch einen Vergleich des mindestens einen Klassifikationsparameters mit dem jeweiligen Vergleichsparameter des Vergleichsdatensatzes.

In einer weiteren Ausführungsform werden die Vergleichsparameter neu berechnet und in dem Speicher des mobilen, tragbaren Telekommunikationsgeräts gespeichert, wenn sich der Vergleichsdatensatz ändert.

Durch das Generieren des Authentifizierungsergebnisses aus dem mindestens einen Konfidenzwert des mindestens einen Klassifikationsparameters ergibt sich vorteilhafterweise ein Verfahren, welches durch fest definierte Schritte für den Nutzer wiederholbar, jedoch für einen unberechtigten Nutzer sehr schwer zu umgehen ist. Ein Angreifer, welcher versucht mittels eines elektronischen Angriffs auf das mobile,tragbare Telekommunikationsgerät bzw. auf das Gerät oder die Anwendung zuzugreifen, zu dessen Schutz das Telekommunikationsgerät die Authentifizierung ausführt, indem der Angreifer versucht die verhaltensbasierten Daten des mindestens einen Sensors, den mindestens einen Klassifikationsparameter oder den mindestens einen Konfidenzwert zu erraten, müsste die mindestens eine Musterfunktion kennen oder wissen, welche Klassifikationsparameter zu Konfidenzwerten verarbeitet werden und welche Werte diese aufweisen müssen, damit ein Zugriff auf das Telekommunikationsgerät, das Gerät und/oder die Anwendung gewährt wird.

In einer Ausführungsform werden die verhaltensbasierten Daten im Speicher des mobilen, tragbaren Telekommunikationsgeräts gespeichert, wenn sie erfolgreich zur Authentifizierung des Nutzers beigetragen haben. Das Speichern der verhaltensbasierten Daten erfolgt, indem die verhaltensbasierten Daten den entsprechenden Vergleichsdatensätzen hinzugefügt werden. Die Vergleichsparameter werden erneut aus dem nun modifizierten Vergleichsdatensatz errechnet, um eine nächste Authentifizierung des Nutzers mit aktuellen Vergleichsparametern durchführen zu können.

Durch das Speichern der verhaltensbasierten Daten im Speicher des mobilen, tragbaren Telekommunikationsgeräts und das Hinzufügen der verhaltensbasierten Daten zu dem entsprechenden Vergleichsdatensatz im Falle einer erfolgreichen Authentifizierung des Nutzers ergibt sich vorteilhafterweise ein rückgekoppeltes Trainieren der Klassifikationsmodule. Die Vergleichsdatensätze und somit die Vergleichsparameter passen sich dem Verhalten des Nutzers an, wodurch das Verfahren gegenüber geringfügigen Verhaltensänderungen resistent wird bzw. sich diesen anpasst. Eine solche Verhaltensänderung kann beispielsweise durch eine Verletzung des Nutzers hervorgerufen werden, welche die Gangart oder das Schreibverhalten beeinflusst. Ein weiteres Beispiel für eine Verhaltensänderung stellt der dauerhafte Wechsel zu einem anderen Radiosender mittels einer Radioanwendung dar. Gefällt dem Nutzer beispielsweise das gesendete Programm seines bisher gehörten Senders nicht mehr, so sucht er sich einen neuen. Bei solchen und ähnlichen Verhaltensänderungen kann sich der Nutzer aufgrund des Speicherns der verhaltensbasierten Daten in dem Speicher des mobilen, tragbaren Telekommunikationsgeräts und des Hinzufügens der Mess- Daten zu dem entsprechenden Vergleichsdatensatz auch weiterhin erfolgreich authentifizieren.

In einer weiteren Ausführungsform werden die verhaltensbasierten Daten, welche Teil des jeweiligen Vergleichsdatensatzes sind aus dem Speicher des mobilen, tragbaren Telekommunikationsgeräts gelöscht, wenn die Daten älter als eine festgelegte Zeit sind. Die festgelegte Zeit kann beispielsweise Tage, Wochen, Monate oder Jahre betragen. Wird durch das Löschen der verhaltensbasierten Daten der Vergleichsdatensatz vollständig gelöscht, so wird gemäß einer weiteren Ausführungsform ein Signal erzeugt, welches dem Nutzer signalisiert, dass eine Authentifizierung über den gelöschten Vergleichsdatensatz nicht länger möglich ist, bis entsprechende Vergleichsdaten wieder vorhanden sind, d.h. ein neuer Vergleichsdatensatz generiert wurde. Vergleichsdaten für einen solchen neuen Vergleichsdatensatz können beispielsweise erfasst werden, indem sich der Nutzer gegenüber dem mobilen, tragbaren Telekommunikationsgerät verhaltensunabhängig authentifiziert, beispielsweise über einen Nachweis eines für den registrierten Nutzer charakteristischen Wissens, wie etwa eine alphanumerische Zeichenfolge, eines für den registrierten Nutzer charakteristischen Besitzes, etwa eines ID-Tokens, oder einer für den registrierten Nutzer charakteristischen biologischen Eigenschaft, etwa ein biometrisches Merkmal, und im Voraus oder im Nachhinein so verhält, dass neue verhaltensbasierten Daten erfasst und in dem Speicher des mobilen, tragbaren Telekommunikationsgeräts gespeichert werden, womit die erfassten Daten einen neuen Vergleichsdatensatz bilden.

Durch das Löschen der verhaltensbasierten Daten bei Erreichen eines festgelegten Alters der Daten ergibt sich in vorteilhafter Weise, dass sich der Vergleichsdatensatz und somit die Vergleichsparameter bei Verhaltensänderungen des Nutzers mit verändern können. Da sich das Verhalten des Nutzers, insbesondere über einen längeren Zeitraum von beispielsweise einem Jahr oder mehr, verändern kann, ist es für das Verfahren vorteilhaft, wenn sich die Vergleichsparameter mit dem Verhalten des Nutzers mitändern, d.h. möglicherweise veraltete verhaltensbasierte Daten, welche nicht mehr das aktuelle Verhalten des Nutzers korrekt wiederzugeben ver-mögen, vorsorglich gelöscht werden. Das Löschen von verhaltensbasierten Daten eines bestimmten Alters bewirkt somit, dass das Verhalten des Nutzers in der Vergangenheit, welches nicht notwendiger Weise mit dem Verhalten des Nutzers der Gegenwart übereinstimmen muss, keinen Einfluss auf die verhaltensbasierte Authentifizierung des Nutzers gegenüber dem System nimmt. Das Alter von verhaltensbasierten Daten bemisst sich beispielsweise ab dem Zeitpunkt der Erfassung und/oder Speicherung der verhaltensbasierten Daten.

In einer weiteren Ausführungsform werden die Konfidenzwerte der Klassifikationsparameter in dem Speicher des mobilen, tragbaren Telekommunikationsgeräts gespeichert. Die Konfidenzwerte können dabei im Bedarfsfall einzeln zur Authentifizierung herangezogen werden können.

Nach Ausführungsformen besteht ein Prüfungskriterium bzw. eine Authentifizierungsanforderung für eine erfolgreiche Authentifizierung darin, dass ein Konfidenzwert einen Schwellenwert erreichen und/oder überschreiten muss. Für diesen Schritt, welcher lediglich in einem Wertevergleich besteht sind somit sehr wenige Rechenoperationen notwendig, wodurch das mobile, tragbare Telekommunikationsgerät weniger Rechenoperationen ausführen muss. Somit ergibt sich für das mobile, tragbare Telekommunikationsgerät ein verringerter Energieverbrauch. Insbesondere für mobile, tragbare Telekommunikationsgeräte, welche durch eine Batterie betrieben werden, ist eine solche Ausführungsform vorteilhaft.

In einer weiteren Ausführungsform werden die Konfidenzwerte für eine Auswertung, z.B. durch das Programmmodul, zu einem Gesamtkonfidenzwert zusammengefasst, auf welchem die Schadensrisikoabschätzung des Programmmoduls beruht. Beispielsweise werden die Konfidenzwerte aus den grob- und/oder feinmotorischen Bewegungsdaten und/oder den Anwendungsdaten zusammengefasst. Das Zusammenfassen kann beispielsweise, aber nicht zwangsweise, die Bildung eines Mittelwertes, eines Medians oder eines Modalwerts umfassen. Die Bildung des resultierenden Konfidenzwerts ermöglicht die Angabe der Gesamtwahrscheinlichkeit dafür, dass der aktuelle Nutzer des im mobilen, tragbaren Telekommunikationsgerät identisch mit dem registrierten Nutzer ist.

Durch die Bildung eines Gesamtkonfidenzwerts und die Verwendung des Gesamtkonfidenzwerts zur Authentifizierung des Nutzers kann sich in vorteilhafter Weise ergeben, dass nur ein einziger Zahlenwert nötig ist, um den Nutzer zu authentifizieren. Es werden keine Details bezüglich der Anwendungsnutzung oder der Person des Nutzers an ein verbundenes Gerät oder eine ausgeführte Anwendung, welche einer Authentifizierung des Nutzers bedürfen, gesendet, um diesen zu authentifizieren. Dies kann beispielsweise die Datensicherheit bzw. die Anonymität des Nutzers sicherstellen, da aus dem resultierenden Konfidenzwert nicht mehr nachvollziehbar ist, aus welchen Konfidenzwerten oder Klassifikationsparametern sich dieser im Detail zusammensetzt und welche Werte diese jeweils aufwiesen.

In einer weiteren Ausführungsform sind die einzelnen Konfidenzwerte der Klassifikationsparameter bei der Auswertung mit jeweils einem Gewichtungsfaktor gewichtet. Die Gewichtungsfaktoren sind dabei dem jeweiligen Konfidenzwert zugeordnet.

Durch das Verwenden von Gewichtungsfaktoren für die jeweiligen Konfidenzwerte bei der Errechnung des resultierenden Konfidenzwerts kann sich in vorteilhafter Weise eine Erhöhung der Genauigkeit des resultierenden Konfidenzwerts bei einer Prüfung gegen ein Prüfungskriterium ergeben. Die einzelnen Konfidenzwerte, die aus unterschiedlichen Klassifikationsparametern resultieren, können je nach Wichtigkeit und/oder Genauigkeit ihrer Bestimmbarkeit gewichtet werden. Da sich jeder Nutzer unterschiedlich verhält, spielen auch die einzelnen Klassifikationsparameter unterschiedlich starke Rollen bei der verhaltensbasierten Authentifizierung des Nutzers gegenüber dem mobilen, tragbaren Telekommunikationsgerät. Ein erster Nutzer eines ersten mobilen, tragbaren Telekommunikationsgeräts könnte beispielsweise regelmäßig eine Radioanwendung seines mobilen, tragbaren Telekommunikationsgeräts nutzen, während ein zweiter Nutzer eines zweiten mobilen, tragbaren Telekommunikationsgeräts niemals eine Radioanwendung nutzt. Durch die Möglichkeit des Gewichtens der einzelnen Konfidenzwerte kann dem Konfidenzwert für die Nutzung einer Radioanwendung für den ersten Nutzer ein höherer Gewichtungsfaktor zugewiesen werden, als dem zweiten Nutzer.

In einer weiteren Ausführungsform sind die einzelnen Gewichtungsfaktoren der jeweiligen Konfidenzwerte fest vorgegeben. Fest vorgegeben meint in diesem Zusammenhang, dass die Gewichtungsfaktoren von vornherein bei einer Erstinbetriebnahme des mobilen, tragbaren Telekommunikationsgeräts festgelegt werden und keine Änderungen der Gewichtungsfaktoren während des bestimmungsmäßigen Betriebes des mobilen, tragbaren Telekommunikationsgeräts vorgesehen sind.

Durch das Vorgeben der Gewichtungsfaktoren für die Konfidenzwerte ergibt sich in vorteilhafter Weise ein reduzierter Rechenaufwand, welcher insbesondere für mobile, tragbare Telekommunikationsgeräte einen niedrigen Batterieverbrauch zur Folge hat. Das mobile, tragbare Telekommunikationsgerät muss nicht überprüfen, welche Gewichtungsfaktoren für welchen Konfidenzwert festzulegen sind, sondern letztendlich nur in seinem Speicher die entsprechenden Konfidenzwerte auslesen, die bereits mit den Gewichtungsfaktoren verrechnet sind.

In einer weiteren Ausführungsform legt der Nutzer in einem Initiierungsprozess die Gewichtungsfaktoren der einzelnen Konfidenzwerte selbst fest. Die festgelegten Gewichtungsfaktoren werden dann in einer Konfigurationsdatei in dem Speicher des mobilen, tragbaren Telekommunikationsgeräts gespeichert.

Durch das Festlegen der Gewichtungsfaktoren durch den registrierten Nutzer selbst ergibt sich in vorteilhafter Weise, dass der registrierte Nutzer selbst bestimmen kann, inwieweit seine Anwendungen bzw. Verhaltensmuster zur verhaltensbasierten Authentifizierung beitragen. Dies erhöht die Freiheit des registrierten Nutzers bei der Konfiguration des Systems, da der registrierte Nutzer selbst entscheiden kann, welche Klassifikationsparameter von seinem Verhaltensmuster umfasst werden. Zum Beispiel kann der registrierte Nutzer festlegen, dass das Verwenden der Radioanwendung nicht oder nur sehr schwach zur Authentifizierung beitragen soll, da er die Radioanwendung üblicherweise nur unregelmäßig nutzt.

In einer weiteren Ausführungsform der Erfindung ist das mobile, tragbare Telekommunikationsgerät mit einem Netzwerk, wie zum Beispiel dem Internet oder einem lokalen Netzwerk (LAN), einem privaten Netzwerk, insbesondere einem Intranet, oder einem virtuellen privaten Netzwerk (Virtual Private Network - VPN) verbunden. Innerhalb des Netzwerks kann das mobile, tragbare Telekommunikationsgerät über eine entsprechende Schnittstelle, die üblicherweise als Browser oder Launcher ausgebildet ist, mit einer Online-Anwendung kommunizieren, wobei die Online-Anwendung auf einem Gerät innerhalb des Netzwerkes aber außerhalb des mobilen, tragbaren Telekommunikationsgeräts ausgeführt wird. Die Online-Anwendung ist in der Lage das mobile, tragbare Telekommunikationsgerät dazu aufzufordern, sich gegenüber der Anwendung zu authentifizieren woraufhin das mobile, tragbare Telekommunikationsgerät den resultierenden Konfidenzwert an die Online-Anwendung sendet.

Durch das Senden des resultierenden Konfidenzwerts an die Online-Anwendung ergibt sich in vorteilhafter Weise, dass das mobile, tragbare Telekommunikationsgerät in der Lage ist, den Nutzer gegenüber Anwendungen zu authentifizieren, die nicht auf dem mobilen, tragbaren Telekommunikationsgerät installiert sind. Das Verfahren benötigt somit keine auf dem mobilen, tragbaren Telekommunikationsgerät installierte Anwendung.

In einer weiteren Ausführungsform sind auf dem mobilen, tragbaren Telekommunikationsgerät mehrere Nutzer registriert, welche es jeweils zur Authentifizierung verwenden. Ein Nutzererkennungsmodul kann dann entscheiden, welcher Nutzer gerade aktiv ist, wobei das Nutzererkennungsmodul ebenfalls vom Prozessor des mobilen, tragbaren Telekommunikationsgeräts ausgeführt wird.

In einer weiteren Ausführungsform wird die Identifikation des Nutzers durch das Nutzererkennungsmodul mittels eines Entscheidungsbaums getroffen.

Durch die Möglichkeit, mehrere Nutzer zu identifizieren, ergibt sich in vorteilhafter Weise, dass beispielsweise auch Dienstgeräte bzw. Dienstsysteme, die von einem Arbeitgeber an eine Mehrzahl von Mitarbeitern ausgegeben werden, wobei die Mehrzahl von Mitarbeitern, welche das jeweilige mobile, tragbare Telekommunikationsgerät abwechselnd benutzen, das Verfahren zur verhaltensbasierten Authentifizierung anwenden können.

In einer weiteren Ausführungsform ist das Nutzererkennungsmodul so konfiguriert, dass es einen Wechsel des Nutzers anhand von grob- und/oder feinmotorischen Bewegungsdaten erkennt. Dies ist beispielsweise der Fall, wenn das Nutzererkennungsmodul eine Bewegung erkennt, die typisch für einen Nutzerwechsel eines mobilen, tragbaren Telekommunikationsgeräts ist. Eine typische Bewegung kann dabei das Ab- und wieder Anlegen einer Smartwatch, das Übergeben eines Mobiltelefons oder eine vergleichbare Bewegung umfassen.

Das Nutzererkennungsmodul ist konfiguriert einen Nutzerwechsel anhand einer grob- und/oder feinmotorischen Bewegung zu erkennen. Dazu ist das Nutzererkennungsmodul beispielsweise auf ein Erkennen einer grob- und/oder feinmotorischen Bewegung des Ab- und/oder Anlegens des mobilen, tragbaren Telekommunikationsgeräts konfiguriert. Ferner ist das Nutzererkennungsmodul auf ein Erkennen von nutzerspezifischen Bewegungsmustern in den verhaltensbasierten Daten trainiert, wobei das Nutzererkennungsmodul wiederholt die folgenden Schritte ausführt:
o Eingabe der verhaltensbasierten Daten in das Nutzererkennungsmodul,
o Generieren eines vierten Konfidenzwerts durch das Nutzererkennungsmodul, welches angibt, ob ein Nutzerwechsel stattfindet oder das mobile, tragbare Telekommunikationsgerät ab- oder angelegt wird,
o Speichern des vierten Konfidenzwerts in dem Speicher des mobilen, tragbaren Telekommunikationsgeräts.

Anschließend greift das Nutzererkennungsmodul auf den Speicher des mobilen, tragbaren Telekommunikationsgeräts zu, um mindestens einen der gespeicherten vierten Konfidenzwerte aus dem Speicher auszulesen. Der mindestens eine vierte Konfidenzwert wird ausgewertet, um zu überprüfen, ob ein Nutzerwechsel stattgefunden hat. Die bisherigen ersten, zweiten und/oder dritten Konfidenzwerte werden im Falle eines Nutzerwechsels verworfen, um sicherzustellen, dass bei einem Nutzerwechsel ein nicht authentifizierter Nutzer das mobile, tragbare Telekommunikationsgerät verwendet. Dieser nicht authentifizierte Nutzer muss sich dann neu authentifizieren.

In einer Ausführungsform ist der durch das Grobmotorikklassifikationsmodul implementierte Maschinenlernverfahren ein Random-Forrest Algorithmus, welcher eine Bewegung als eine dem Grobmotorikklassifikationsmodul bekannte Bewegung klassifiziert.

In einer weiteren Ausführungsform ist das Nutzererkennungsmodul so konfiguriert, dass es eine zumindest vorübergehende Beendigung der Nutzung des mobilen, tragbaren Telekommunikationsgeräts durch den aktuellen Nutzer anhand von grob- und/oder feinmotorischen Bewegungsdaten erkennt. Dazu ist das Nutzererkennungsmodul beispielsweise auf ein Erkennen einer grob- und/oder feinmotorischen Bewegung des Ablegens des mobilen, tragbaren Telekommunikationsgeräts konfiguriert. Wird eine solche Beendigung erkannt, werden beispielsweise die bisherigen Konfidenzwerte verworfen, um sicherzustellen, dass bei einem möglichen Nutzerwechsel ein nicht authentifizierter Nutzer das mobile, tragbare Telekommunikationsgerät verwendet. Dieser nicht authentifizierte Nutzer muss sich dann neu authentifizieren.

Durch das Implementieren des Maschinenlernverfahrens als Random-Forrest Algorithmus ergibt sich in vorteilhafter Weise, dass die Parameter zur Klassifikation der grobmotorischen Bewegung in besonders effizienter Weise zu der Klassifikation beitragen und ferner, dass sich der Random-Forrest Algorithmus aufgrund der festgelegten Anzahl der zur Verfügung stehenden Parameter besonders leicht implementieren lässt.

Nach Ausführungsformen weist das Telekommunikationsgerät ferner ein Mittel zur Erfassung zumindest eines Umweltparameters, welcher einen Umwelteinfluss beschreibt, der dazu geeignet ist, das Verhalten des aktuellen Nutzers zu beeinflussen, auf. Das Verfahren zur Authentifizierung eines Nutzers des Telekommunikationsgeräts mittels einer verhaltensbasierten Authentifizierung umfasst nach Ausführungsformen ferner die folgenden Schritte:
o Erfassen des zumindest einen Umweltparameters,
o Auswerten der erfassten verhaltensbasierten Daten durch das Klassifikationsmodul, wobei das Auswerten unter Verwendung des zumindest einen Umweltparameters an den Umwelteinfluss angepasst wird.

Ein Umweltparameter beschreibt einen Umwelteinfluss auf den Nutzer. Als Umweltparameter gelten im Allgemeinen Parameter, die durch die Umwelt bestimmt sind und nicht von dem Nutzer und seinem Verhalten abhängen. Umweltparameter können beispielsweise Parameter sein, die das aktuelle Wetter, insbesondere die Luftfeuchte, den Luftdruck, die Umgebungstemperatur, die Intensität der Sonnenstrahlen, die Windgeschwindigkeit oder die Windrichtung umfassen. Beispielsweise kann sich der Nutzer in einem trockenen Gebiet, in einer (Groß-) Stadt, in einem Wald, an der Küste oder auf dem Meer aufhalten. Umweltparameter können auch die geographischen und/oder politischen Rahmenbedingungen umfassen. Ferner können Umgebungsparameter die Position des Nutzers, insbesondere die Umgebung des Nutzers umfassen. Beispielsweise eine ausgerufene Sicherheits- oder Warnstufe für bestimmte Regionen, eine Lawinenwarnung, eine Terrorwarnung, eine Unfallmeldung, eine Erdbebengefahr oder eine ausgebrochene Krankheit können als Umweltparameter erfasst werden.

Das Verhalten des Nutzers kann durch Umweltparameter beeinflusst werden, sodass die erfassbaren verhaltensbezogenen Daten ebenfalls von dem Umweltparameter abhängen können. Beispielsweise kann ein Nutzer bei Temperaturen über 38° C einen anderen Gang aufweisen als bei Temperaturen, die um die Raumtemperatur liegen. Oder ein Nutzer reagiert nervös auf eine öffentlich ausgerufene Warnmeldung, beispielsweise eine Sturmwarnung, was sich auf den Ruhepuls des Nutzers auswirken kann. Weitere Umweltparameter können die Umgebungslautstärke, insbesondere bei hoher Verkehrsdichte oder an Bahnhöfen, oder eine Umgebungsbewegung sein. Eine Umgebungsbewegung findet statt, wenn sich der Nutzer in einem bewegten Inertialsystem aufhält. Beispielsweise in einem Zug oder auf einem Schiff, insbesondere bei Wellengang.

Bei bekannten Authentifizierungsverfahren werden die Umgebung und ihre Einflüsse nicht berücksichtigt. Das erfindungsgemäße Verfahren berücksichtigt den Einfluss eines Umweltparameters auf den Nutzer für eine Authentifizierung anhand von verhaltensbasierten Daten. Das Auswerten der verhaltensbasierten Daten wird erfindungsgemäß entsprechend dem zumindest einen erfassten Umweltparameter angepasst.

Dadurch ergibt sich in vorteilhafter Weise, dass sich der Nutzer auch unter verschiedenen Umwelteinflüssen erfolgreich authentifizieren kann.

In einer weiteren Ausführungsform umfasst das Telekommunikationsgerät ein Umweltparameterklassifikationsmodul. Das Umweltparameterklassifikationsmodul ist mit Trainingsdatensätzen einer Nutzerkohorte für ein Bestimmen von Korrekturen zum Anpassen der Auswertung der erfassten verhaltensbasierten Daten des registrierten Nutzers an Umwelteinflüsse trainiert. Das Anpassen der Auswertung der erfassten verhaltensbasierten Daten an den zumindest einen Umweltparameter umfasst:
o die Eingabe des erfassten zumindest einen Umweltparameters in das Umweltparameterklassifikationsmodul,
o das Bestimmen von zumindest einer Korrektur für die Auswertung der erfassten verhaltensbasierten Daten des registrierten Nutzers durch das Umweltparameterklassifikationsmodul,
o Anpassen der Auswertung der erfassten verhaltensbasierten Daten des registrierten Nutzers an den Umwelteinfluss unter Verwendung der Korrektur.

Die erfassten verhaltensbasierten Daten des registrierten Nutzers beschreiben dabei das Verhalten des registrierten Nutzers. Durch den erfolgreichen Vergleich der verhaltensbasierten Daten des aktuellen Nutzers mit den gespeicherten verhaltensbasierten Daten des registrierten Nutzers, kann der aktuelle Nutzer als der registrierte Nutzer identifiziert werden. Dieser Vergleich wird unter Verwendung der, aus dem Umweltparameter bestimmten, Korrektur angepasst. Somit können sich je nach Umweltparameter für identische verhaltensbasierte Daten unterschiedliche Konfidenzwerte ergeben.

Das Umweltparameterklassifikationsmodul kann ferner als ein Teil des Klassifikationsmoduls ausgebildet sein. Alternativ kann das Umweltparameterklassifikationsmodul als ein separates Modul ausgebildet sein.

In einer weiteren Ausführungsform umfasst das Telekommunikationsgerät eine Kommunikationsschnittstelle, wobei das Telekommunikationsgerät über die Kommunikationsschnittstelle den zumindest einen Umweltparameter empfängt. Die Kommunikationsschnittstelle kann insbesondere als eine Drahtloskommunikationsschnittstelle ausgebildet sein.

In vorteilhafter Weise kann das Telekommunikationsgerät Informationen von anderen Systemen verwenden, um eine Korrektur aus einem Umweltparameter zu bestimmen. Beispielsweise kann das Telekommunikationsgerät über die Drahtloskommunikationsschnittstelle mit einem öffentlichen Funknetzwerk oder dem Internet kommunizieren und darüber einen oder mehrere Umweltparameter empfangen. In einer weiteren Ausführungsform kann das Telekommunikationsgerät die über die Drahtloskommunikationsschnittstelle empfangenen Umweltparameter mit Umweltparametern ergänzen, die durch einen Sensor des Telekommunikationsgeräts erfasst wurden. Insbesondere über die Drahtlosschnittstelle empfangene Nachrichten können über einen Sensor erfasste Umweltparameter, wie beispielsweise Wetterdaten, ergänzen.

In einer weiteren Ausführungsform umfasst das Erfassen des zumindest einen Umweltparameters über die Kommunikationsschnittstelle das Empfangen von Nachrichten, amtliche Mitteilungen und/oder Wetterdaten.

In vorteilhafter Weise kann der zumindest eine Umweltparameter mit Daten übertragen werden, die dem Telekommunikationsgerät über ein Netzwerk sowieso zur Verfügung stehen. Insbesondere Nachrichten und Wetterdaten stehen in öffentlichen Netzwerken zur Verfügung, sodass Smartphone-Nutzer sich Nachrichten über eine entsprechende Software anschauen oder lesen können und stets über das aktuelle Wetter informiert sind. Mit oder aus diesen Daten können beispielsweise Umweltparameter bestimmt werden, welche sich dazu eignen, das Verhalten des Nutzers zu beeinflussen. Wird beispielsweise eine Sturmwarnung von einem Wetterdienst oder eine polizeiliche Warnung vor Verkehrsstau ausgesprochen, so kann dies den Nutzer vorsichtiger werden lassen. Der Nutzer kann dadurch angespannt sein und beispielsweise vorsichtiger am Verkehr teilnehmen, was sich beispielsweise an seiner Gangart zeigen kann. Ferner kann sich das Verhalten des Nutzers aufgrund der Umweltparameter ändern, weil der Nutzer von seiner täglichen Routine abweicht. Beispielsweise nimmt er einen anderen Weg, um nach der Arbeit nach Hause zu kommen, weil er eine Staumeldung empfangen hat. Nachrichten können das Verhalten des Nutzers ebenfalls beeinflussen. Beispielsweise starke und kurzfristige wirtschaftliche Schwankungen können ein Nutzer zum Beispiel euphorisch, verärgert oder deprimiert stimmen, wodurch sich das Verhalten des Nutzers ebenfalls ändert.

In einer weiteren Ausführungsform umfasst das Telekommunikationsgerät zumindest einen zweiten Sensor, mit dem das Telekommunikationsgerät die Umweltdaten, insbesondere in Form von Wetterdaten, erfassen kann.

In vorteilhafter Weise kann das Telekommunikationsgerät durch den zweiten Sensor dazu in der Lage sein, den zumindest einen Umweltparameter selbst zu erfassen. Das Telekommunikationsgerät kann damit unabhängig von einer hinreichenden Verbindungsstärke zu einem entsprechenden Netzwerk Umweltparameter erfassen, um die Auswertung der erfassten verhaltensbasierten Daten des registrierten Nutzers zu korrigieren.

In einer weiteren Ausführungsform umfasst das Anpassen der Auswertung der erfassten verhaltensbasierten Daten des registrierten Nutzers an den Umwelteinfluss eine Auswahl der Klassifikationsparameter.

In vorteilhafter Weise können so Klassifikationsparameter für die Authentifizierung des Nutzers je nach Situation der Umwelt aus- oder angeschaltet werden. Beispielsweise kann ein Klassifikationsparameter das Trainingsverhalten des Nutzers im Freien anhand eines Startens einer Anwendung zur Überwachung der Pulsfrequenz während einer Trainingseinheit charakterisieren. Mit anderen Worten, durch den Start der Anwendung signalisiert der Nutzer dem Telekommunikationsgerät den Beginn einer Trainingseinheit. Der Start der Trainingseinheit sowie die Dauer des Trainings sind für den Nutzer charakteristisch und beschreiben sein Verhalten. Wenn es jedoch regnet und der Nutzer nicht trainieren kann, möchte der Nutzer trotzdem sein Telekommunikationsgerät verwenden können. Damit er sich verhaltensbasiert authentifizieren kann, erfasst das Telekommunikationsgerät die aktuellen Wetterdaten. Aufgrund des Wetters "Regen" werden die Klassifikationsparameter, die die Trainingseinheit beschreiben, nicht für eine Authentifizierung herangezogen.

In einem weiteren Beispiel gehört zum Verhalten des Nutzers, dass er eine Bestimmte Route für eine regelmäßige Reisestrecke wählt. Durch ein Empfangen einer Warnmeldung vor Verzögerungen auf der Route kann der Nutzer eine alternative Route wählen. Die Parameter für die Reise unter normalen Umständen werden in einem solchen Fall abgeschaltet.

In einer weiteren Ausführungsform umfasst das Anpassen der Auswertung der erfassten verhaltensbasierten Daten des registrierten Nutzers an den Umwelteinfluss ein Anpassen der Gewichtungsfaktoren durch die Korrektur.

In vorteilhafter Weise können die einzelnen Klassifikationsparameter feiner an die aktuellen Umweltparameter angepasst werden. Ein Klassifikationsparameter kann beispielsweise lediglich weniger stark gewichtet werden, anstatt vollständig außen vor gelassen zu werden. Dies kann eine feinere Einstellungsmöglichkeit und somit eine höhere Genauigkeit der Konfidenzwerte bzw. der Zuordnungswahrscheinlichkeit bewirken.

In einer weiteren Ausführungsform umfasst das Anpassen der Auswertung der erfassten verhaltensbasierten Daten des registrierten Nutzers an den Umwelteinfluss ein Anpassen der Vergleichsparameter durch die Korrektur.

In vorteilhafter Weise können so Klassifikationsparameter, die bei unterschiedlichen Umweltbedingungen unterschiedliche Werte annehmen, zum Bestimmen der Konfidenzwerte verwendet werden, ohne dass der jeweilige Gewichtungsfaktor geändert wird. Beispielsweise gehört es zum Verhalten eines Nutzers, dass er oft einen bestimmten Musikradiosender hört. Der Nutzer bekommt mit, dass in seiner unmittelbaren Umgebung eine akute Gefahr im Straßenverkehr, beispielsweise Personen auf der Fahrbahn, zu erwarten ist. Der Umweltparameter "Gefahr im Straßenverkehr" könnte beispielsweise durch eine amtliche (polizeiliche) Mitteilung empfangen worden sein. Damit der Nutzer sein Telekommunikationsgerät weiterverwenden und er trotzdem über das Radio die Nachrichten über einen Nachrichtenradiosender, also einen anderen als den gewohnten Musikradiosender, mitverfolgen kann, kann der Umweltparameter "Gefahr im Straßenverkehr" den Klassifikationsparameter, der die Senderauswahl quantifiziert, ändern.

Nach Ausführungsformen ergibt ein Auswerten der erfassten Umweltparameter durch das Umweltparameterklassifikationsmodul, dass eine verhaltensbasierte Authentifizierung unter Verwendung der erfassten verhaltensbasierten Daten nicht möglich ist. Beispielsweise liegen Umwelteinflüsse vor, welche das Verhalten des Nutzers so beeinflussen können, dass es derart vom charakteristischen Verhalten des registrierten Nutzers abweichen kann, dass das resultierende Verhalten nicht mehr mit ausreichender Sicherheit dem registrierten Nutzer zugeordnet werden kann. Beispielsweise werden die möglichen Abweichungen derart groß, dass die Anzahl möglicher Nutzer, welche ein Verhalten innerhalb der Toleranzen der möglich Abweichung so groß wird, dass die Gefahr besteht, dass ein unberechtigter Nutzer des mobilen, Telekommunikationsgeräts auf Basis einer verhaltensbasierten Authentifizierung fälschlicherweise als registrierte Nutzer erkannt wird. Beispielsweise sind alle verhaltensbasierten Daten von Umwelteinflüssen derart beeinflusst, dass keine zuverlässige verhaltensbasierte Authentifizierung möglich ist. Beispielsweise ist ein Teil der verhaltensbasierten Daten von Umwelteinflüssen derart beeinflusst, dass keine zuverlässige verhaltensbasierte Authentifizierung auf Basis dieser Daten möglich ist, wobei die verbleibenden unbeeinflussten verhaltensbasierten Daten nicht ausreichen für eine verhaltensbasierte Authentifizierung. Beispielsweise betreffen die unbeeinflussten verhaltensbasierten Daten Verhaltensmuster, welche eine große Anzahl an Menschen gemein, d.h. weit verbreitet, sind.

Nachausführungsformen wird in diesem Fall eine Fehlermeldung an das Programmodul gesendet, wodurch dieses dazu veranlasst wird eine neue Auswahl von Authentifizierungsverfahren unter Ausschluss der nicht ausführbaren verhaltensbasierten Authentifizierungsverfahren zu erstellen.

Nach Ausführungsformen werden verhaltensunabhängige Authentifizierungsverfahren ausgeführt, falls das Auswerten der erfassten Umweltparameter durch das Umweltparameterklassifikationsmodul ergibt, dass eine verhaltensbasierte Authentifizierung unter Verwendung der erfassten verhaltensbasierten Daten nicht möglich ist. Beispielsweise ergibt die Auswertung, dass die möglichen Abweichungen des charakteristischen Verhaltens aufgrund der Umwelteinflüsse größer als ein vordefinierter Schwellenwert sind. Beispielsweise ergibt die Auswertung, dass erfasste Umweltparameter im Vergleich zu Standardumweltparametern, für welche das bzw. die Klassifikationsparameter trainiert sind, Abweichungen aufweisen, welche größer als ein vordefinierter Schwellenwert sind. Entsprechende Standardumweltparametern sind beispielsweise im Speicher des mobilen, tragbaren Telekommunikationsgeräts gespeichert. Nach Ausführungsformen legen die Standardumweltparametern Standardumweltparameterbereiche fest. Nach Ausführungsformen werden im Zuge des Trainierens des bzw. der Klassifikationsmodule des mobilen, tragbaren Telekommunikationsgeräts jeweils auch die Umweltparameter erfasst, unter welchen das Training erfolgt ist. Liegen die erfassten Umweltparameter außerhalb des Standardumweltparameterbereichs, wird der Standardumweltparameterbereich um die Umweltparameter erweitert. Nach Ausführungsformen wird der Standardumweltparameterbereich nur unter der Voraussetzung um die erfassten Umweltparameter erweitert, dass die Abweichung der erfassten Umweltparameter vom Standardumweltparameterbereich kleiner als ein vordefinierter Schwellenwert ist. Nach Ausführungsformen werden im Zuge des Trainings des mobilen, tragbaren Telekommunikationsgeräts erfasste verhaltensbasierte Daten nur unter der Voraussetzung für das Training berücksichtigt, dass die Umweltparameter unter welchen die entsprechenden verhaltensbasierte Daten erfasst wurden innerhalb des Standardumweltparameterbereich liegen oder dass eine Abweichung zwischen Umweltparameter unter welchen die entsprechenden verhaltensbasierte Daten erfasst wurden und dem Standardumweltparameterbereich kleiner als ein vordefinierter Schwellenwert ist.

Ausführungsformen umfassen ein mobiles tragbares Telekommunikationsgeräts zum automatischen adaptiven Kalibrieren von Authentifizierungsanforderungen für ein Authentifizieren eines aktuellen Nutzers des mobilen tragbaren Telekommunikationsgeräts. Das mobile tragbare Telekommunikationsgerät umfasst einen Speicher und einen Prozessor. In dem Speicher sind maschinenlesbare Programminstruktionen gespeichert. Ein Ausführen der maschinenlesbaren Programminstruktionen durch den Prozessor veranlasst den Prozessor dazu das mobile tragbare Telekommunikationsgerät so zu steuern, dass das mobile tragbare Telekommunikationsgerät ein Verfahren ausführt, welches umfasst:
- Bereitstellen eines Programmmoduls, welches eine wahrscheinlichkeitsbasierte Entscheidungsstruktur implementiert und welches konfiguriert ist zum:
   o Empfangen von Eingangsdaten, welche ein potentielles Schadenszenario, ein potentielles Angriffsszenario, ein oder mehrere ausgeführte Authentifizierungsverfahren sowie einen aus den ein oder mehreren ausgeführten Authentifizierungsverfahren resultierenden Konfidenzwert für eine Identität des aktuellen Nutzers des mobilen tragbaren Telekommunikationsgeräts mit einem registrierten Nutzer identifizieren,
   o Bestimmen eines aktuellen Schadensrisikos, wobei es sich bei dem Schadensrisiko um einen von der Entscheidungsstruktur unter Verwendung einer Kombination aus dem empfangenen Konfidenzwert, einem von der Entscheidungsstruktur für das potentielle Schadenszenario bestimmten Erwartungswert für einen potentiellen Schaden, im Falle einer fehlerhaften Authentifizierung des aktuellen Nutzers, und einer von der Entscheidungsstruktur für das potentielle Angriffsszenario bestimmten Angriffswahrscheinlichkeit berechneten Wert handelt,
   o Erstellen einer Prognose für potentielle Schadensrisikos im Falle eines Ausführens von ein oder mehreren vordefinierten zusätzlichen Authentifizierungsverfahren unter Verwendung von vordefinierten Erwartungswerten für potentielle Erhöhungen des Konfidenzwerts durch die ein oder mehreren vordefinierten zusätzlichen Authentifizierungsverfahren,
   o Erstellen einer Prognose für potentielle Authentifizierungsaufwände im Falle eines Ausführens von ein oder mehreren vordefinierten zusätzlichen Authentifizierungsverfahren unter Verwendung von vordefinierten Erwartungswerten für potentielle Erhöhungen des Authentifizierungsaufwands durch die ein oder mehreren Authentifizierungsverfahren,
   o Erstellen einer Auswahl von Authentifizierungsverfahren, welche zumindest die ein oder mehreren ausgeführten Authentifizierungsverfahren umfasst, unter Berücksichtigung der ein oder mehreren vordefinierten zusätzlichen Authentifizierungsverfahren, wobei als Auswahlkriterium verwendet wird, dass für die Auswahl von Authentifizierungsverfahren eine Kombination aus Schadensrisiko und Authentifizierungsaufwand minimiert ist,
   o Ausgeben von Ausgabedaten, welche die Auswahl von Authentifizierungsverfahren identifizieren,
- Ausführen von ein oder mehreren verhaltensbasierten Authentifizierungsverfahren zum Authentifizieren des aktuellen Nutzers,
- Empfangen der Eingangsdaten durch das Programmmodul, welche das potentielle Schadenszenario, das potentielle Angriffsszenario, die ein oder mehreren ausgeführten verhaltensbasierten Authentifizierungsverfahren und den aus den ein oder mehreren ausgeführten verhaltensbasierten Authentifizierungsverfahren resultierenden Konfidenzwert identifizieren,
- in Antwort auf das Empfangen der Eingangsdaten, Ausgeben der Ausgabedaten durch das Programmmodul, welche die Auswahl von Authentifizierungsverfahren identifizieren,
- falls die Auswahl von Authentifizierungsverfahren identisch mit den ein oder mehreren ausgeführten verhaltensbasierten Authentifizierungsverfahren ist, Erzeugen eines Authentifizierungssignals, welches eine erfolgreiche Authentifizierung des aktuellen Nutzers bestätigt,
- falls die Auswahl ein oder mehrere erste zusätzliche Authentifizierungsverfahren der vordefinierten zusätzlichen Authentifizierungsverfahren umfasst, Ausführen der ausgewählten ein oder mehreren ersten zusätzlichen Authentifizierungsverfahren zum Authentifizieren des aktuellen Nutzers.

Ausführungsformen umfassen einen Server zum automatischen adaptiven Kalibrieren von Authentifizierungsanforderungen für ein Authentifizieren eines aktuellen Nutzers eines mobilen tragbaren Telekommunikationsgeräts. Der Server umfasst einen Speicher und einen Prozessor. In dem Speicher sind maschinenlesbare Programminstruktionen gespeichert. Ein Ausführen der maschinenlesbaren Programminstruktionen durch den Prozessor veranlasst den Prozessor dazu den Server so zu steuern, dass der Server ein Verfahren ausführt, welches umfasst:
- Bereitstellen eines Programmmoduls, welches eine wahrscheinlichkeitsbasierte Entscheidungsstruktur implementiert und welches konfiguriert ist zum:
   o Empfangen von Eingangsdaten, welche ein potentielles Schadenszenario, ein potentielles Angriffsszenario, ein oder mehrere ausgeführte Authentifizierungsverfahren sowie einen aus den ein oder mehreren ausgeführten Authentifizierungsverfahren resultierenden Konfidenzwert für eine Identität des aktuellen Nutzers des mobilen tragbaren Telekommunikationsgeräts mit einem registrierten Nutzer identifizieren,
   o Bestimmen eines aktuellen Schadensrisikos, wobei es sich bei dem Schadensrisiko um einen von der Entscheidungsstruktur unter Verwendung einer Kombination aus dem empfangenen Konfidenzwert, einem von der Entscheidungsstruktur für das potentielle Schadenszenario bestimmten Erwartungswert für einen potentiellen Schaden, im Falle einer fehlerhaften Authentifizierung des aktuellen Nutzers, und einer von der Entscheidungsstruktur für das potentielle Angriffsszenario bestimmten Angriffswahrscheinlichkeit berechneten Wert handelt,
   o Erstellen einer Prognose für potentielle Schadensrisikos im Falle eines Ausführens von ein oder mehreren vordefinierten zusätzlichen Authentifizierungsverfahren unter Verwendung von vordefinierten Erwartungswerten für potentielle Erhöhungen des Konfidenzwerts durch die ein oder mehreren vordefinierten zusätzlichen Authentifizierungsverfahren,
   o Erstellen einer Prognose für potentielle Authentifizierungsaufwände im Falle eines Ausführens von ein oder mehreren vordefinierten zusätzlichen Authentifizierungsverfahren unter Verwendung von vordefinierten Erwartungswerten für potentielle Erhöhungen des Authentifizierungsaufwands durch die ein oder mehreren Authentifizierungsverfahren,
   o Erstellen einer Auswahl von Authentifizierungsverfahren, welche zumindest die ein oder mehreren ausgeführten Authentifizierungsverfahren umfasst, unter Berücksichtigung der ein oder mehreren vordefinierten zusätzlichen Authentifizierungsverfahren, wobei als Auswahlkriterium verwendet wird, dass für die Auswahl von Authentifizierungsverfahren eine Kombination aus Schadensrisiko und Authentifizierungsaufwand minimiert ist,
   o Ausgeben von Ausgabedaten, welche die Auswahl von Authentifizierungsverfahren identifizieren,
- Empfangen eines Konfidenzwerts von dem mobilen tragbaren Telekommunikationsgerät, wobei der Konfidenzwert aus ein oder mehreren von dem mobilen tragbaren Telekommunikationsgerät ausgeführten verhaltensbasierten Authentifizierungsverfahren zum Authentifizieren des aktuellen Nutzers resultiert,
- Empfangen der Eingangsdaten durch das Programmmodul, welche das potentielle Schadenszenario, das potentielle Angriffsszenario, die ein oder mehreren ausgeführten verhaltensbasierten Authentifizierungsverfahren und den aus den ein oder mehreren ausgeführten verhaltensbasierten Authentifizierungsverfahren resultierenden Konfidenzwert identifizieren,
- in Antwort auf das Empfangen der Eingangsdaten, Ausgeben der Ausgabedaten durch das Programmmodul, welche die Auswahl von Authentifizierungsverfahren identifizieren,
- falls die Auswahl von Authentifizierungsverfahren identisch mit den ein oder mehreren ausgeführten verhaltensbasierten Authentifizierungsverfahren ist, Erzeugen eines Authentifizierungssignals, welches eine erfolgreiche Authentifizierung des aktuellen Nutzers unter Verwendung des mobilen tragbaren Telekommunikationsgeräts bestätigt,
- falls die Auswahl ein oder mehrere erste zusätzliche Authentifizierungsverfahren der vordefinierten zusätzlichen Authentifizierungsverfahren umfasst, Senden einer Ausführungsanforderung zum Ausführen der ausgewählten ein oder mehreren ersten zusätzlichen Authentifizierungsverfahren zum Authentifizieren des aktuellen Nutzers an das mobile tragbare Telekommunikationsgerät.

Ausführungsformen umfassen ein System zum automatischen adaptiven Kalibrieren von Authentifizierungsanforderungen für ein Authentifizieren eines aktuellen Nutzers eines mobilen tragbaren Telekommunikationsgeräts, wobei das System einen Server nach einer der vorangehenden Ausführungsformen und ein mobiles tragbares Telekommunikationsgerät umfasst.

Im Weiteren werden Ausführungsformen der Erfindung mit Bezugnahme auf die Zeichnungen näher erläutert. Es zeigen:
- Figur 1: ein schematisches Diagramm einer exemplarischen Ausführungsform des Verfahrens,
- Figur 2: ein schematisches Diagramm einer exemplarischen Implementierung der wahrscheinlichkeitsbasierten Entscheidungsstruktur,
- Figur 3: ein schematisches Diagramm des Zusammenhangs zwischen Nutzerfreundlichkeit und Sicherheit,
- Figur 4: einen schematischen Aufbau eines beispielhaften mobilen, tragbaren Telekommunikationsgeräts zur verhaltensbasierten Authentifizierung eines Nutzers,
- Figur 5a: einen schematischen Ablauf einer verhaltensbasierten Authentifizierung in einem Ablaufdiagramm,
- Figur 5b: einen schematischen Ablauf einer verhaltensunabhängigen Authentifizierung in einem Ablaufdiagramm,
- Figur 6a: Schritte der verhaltensbasierten Authentifizierung in einem Ablaufdiagramm,
- Figur 6b: Schritte eines Trainings eines Klassifikationsmoduls in einem Ablaufdiagramm,
- Figur 7: ein schematisches Verfahren zur Abarbeitung von verhaltensbasierten Daten durch das mobile, tragbare Telekommunikationsgerät,
- Figur 8a: ein Telekommunikationsgerät gemäß einer zweiten Ausführungsform,
- Figur 8b: ein Telekommunikationsgerät gemäß einer dritten Ausführungsform, und
- Figur 9: ein Verfahren gemäß einer weiteren Ausführungsform.

Elemente der nachfolgenden Ausführungsformen, die einander entsprechen, werden mit denselben Bezugszeichen gekennzeichnet.

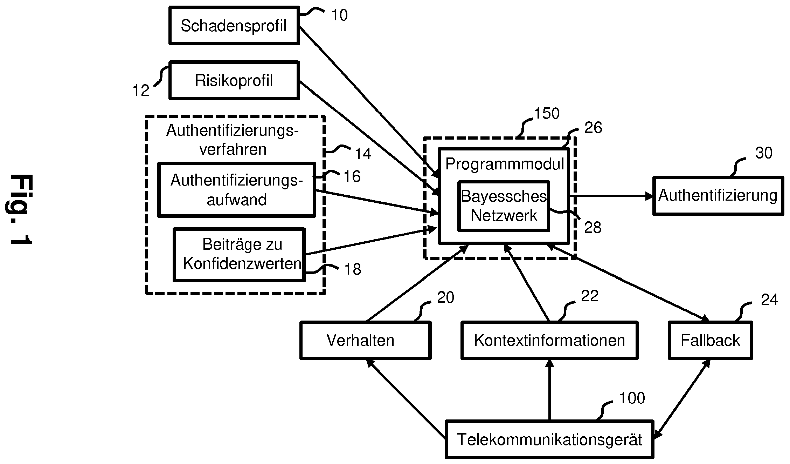

Figur 1 zeigt ein schematisches Diagramm einer Ausführungsform eines Verfahrens automatischen adaptiven Kalibrieren von Authentifizierungsanforderungen für ein Authentifizieren eines Nutzers eines mobilen tragbaren Telekommunikationsgeräts 100. Für das automatische adaptive Kalibrieren von Authentifizierungsanforderungen wird ein Programmodul 26 bereitgestellt. Das Programmodul 26 umfasst ein eine wahrscheinlichkeitsbasierte Entscheidungsstruktur, z.B. ein bayessches Netzwerk 28. Das bayessches Netzwerk 28 ist dazu konfiguriert automatischen adaptiven eine Auswahl von Authentifizierungsverfahren zu erstellen, welche für eine erfolgreiche Authentifizierung notwendig sind. Hierzu gehen in das bayessche Netzwerk 28 Schadensprofile 10 ein, welche potentielle Schadensszenario für unterschiedliche Authentifizierungszwecke definieren und Abhängigkeit in Form von Apriori-Wahrscheinlichkeiten festlegen. Ferner gehen in das bayessche Netzwerk 28 Risikoprofile 12 ein, welche Angriffswahrscheinlichkeiten für unterschiedliche Authentifizierungssituation definieren und Abhängigkeit in Form von Apriori-Wahrscheinlichkeiten festlegen. Zudem wird eine Mehrzahl von zur Verfügung stehende Authentifizierungsverfahren 14 definiert. Jedem dieser Authentifizierungsverfahren 14 ist ein individueller Authentifizierungsaufwand 16 zugeordnet, welche dem Programmodul 26 bzw. bayessche Netzwerk 28 ebenfalls für das automatische adaptive Kalibrieren von Authentifizierungsanforderungen bereitgestellt werden. Schließlich werden für die Authentifizierungsverfahren 14 noch erwartete Beiträge 18 zum Konfidenzwert zur Authentifizierung eines Nutzers des mobilen, tragbaren Telekommunikationsgeräts 100 festgelegt und dem bayessche Netzwerk 28 zur Verfügung gestellt.

Das Programmodul 26 wird entweder auf dem mobilen, tragbaren Telekommunikationsgeräts 100 ausgeführt oder auf einem externen Computersystem, wie etwa einem Server 150, mit welchem das mobilen, tragbaren Telekommunikationsgeräts 100 über ein Kommunikationsnetzwerk verbunden ist. Nach Ausführungsformen handelt es sich dabei um eine Ende-zu-Ende-verschlüsselte Kommunikationsverbindung.

Das mobilen, tragbaren Telekommunikationsgeräts 100 erfasst im Zuge einer Authentifizierung des Nutzers verhaltensbasierte Daten 20, wertet diese aus und stellt dem Programmodul 26 einen Konfidenzwert zur Verfügung. Ferner werden dem Programmodul 26 Kontextinformationen 22 zur Verfügung gestellt, an Hand welcher ein potentielles Schadensszenario sowie ein potentielles Angriffsszenario identifiziert werden. Beispielsweise enthalten die Kontextinformationen 14 Angaben zu einer Authentifizierungssituation, in welcher die Authentifizierung durchgeführt wird. Beispielsweise ist die Situation durch Ort und Zeit der Authentifizierung charakterisiert. Zudem können die Kontextinformationen 14 Angaben zu einem Authentifizierungszweck enthalten, aus welchem das potentielle Schadenszenario hervorgeht.

Das Programmodul 26 führt unter Verwendung des bayesschen Netzwerks 28 eine Analyse der Eingangsdaten 20, 22 durch und trifft basierend auf diesen Eingangsdaten eine Auswahl, welche Authentifizierungsverfahren für eine erfolgreiche Authentifizierung notwendig sind. Sind neben der verhaltensbasierten Authentifizierung 20, weitere Fallback-Authentifizierungsverfahren 24 notwendig, teilt das Programmmodul 26 dies dem mobilen, tragbaren Telekommunikationsgerät 100 mit, unter dessen Verwendung die entsprechenden Fallback-Authentifizierungsverfahren 24 ausgeführt werden. Sind die von dem Programmmodul 26 festgelegten automatischen adaptiven Kalibrieren von Authentifizierungsanforderungen, wird eine erfolgreiche Authentifizierung 30 bestätigt.

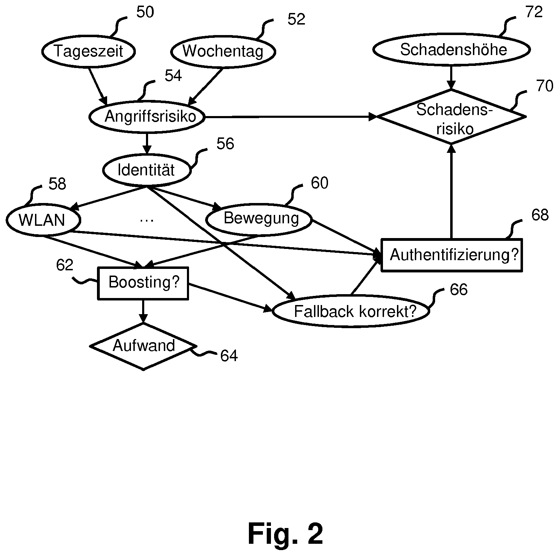

Figur 2 zeigt ein schematisches Diagramm von Abhängigkeiten, welche in der wahrscheinlichkeitsbasierten Entscheidungsstruktur unter Verwendung von Apriori-Wahrscheinlichkeiten implementiert werden. Eine Angriffswahrscheinlichkeit 54 ist beispielsweise abhängig von der Authentifizierungssituation, welche beispielsweise durch Uhrzeit 50 und Wochentag 52 bestimmt sein kann, an welchen die Authentifizierung ausgeführt wird. Ob der aktuelle Nutzer des mobilen, tragbaren Telekommunikationsgeräts tatsächlich identisch mit dem registrierten Nutzer ist, d.h. ob tatsächlich eine Identität 46 vorliegt steht beispielsweise in Beziehung mit der Angriffswahrscheinlichkeit 54. Die für die Authentifizierungsverfahren 58, 60 zu erwartenden Ergebnisse, d.h. Konfidenzwerte, sind davon abhängig, ob tatsächlich eine Identität 46 vorliegt zwischen aktuellem Nutzer und registriertem Nutzer. In Figur 2 sind beispielshaft Verbindungsdaten, wie WLAN, für eine verhaltensbasierte Authentifizierung 58 auf Basis von Anwendungsdaten und grobmotorische Bewegungsdaten, wie etwa ein Laufmuster, für eine verhaltensbasierte Authentifizierung 60 auf Basis von Grobmotorischer Bewegungen. Von den Ergebnissen der Authentifizierungsverfahren 58, 60 hängt ab, ob ein Boosting 62 notwendig oder nicht. Der notwendige Authentifizierungsaufwand 64 hängt davon ab, ob ein Boosting 62 ausgeführt wird oder nicht. Eine Authentifizierung auf Basis eines Fallback-Authentifizierungsverfahrens 66 wird auf die Notwendigkeit eines Boostings hin ausgeführt. Das Ergebnis hängt davon ab, ob es sich bei dem aktuellen Nutzer tatsächlich um den registrierten Nutzer handelt. Schließlich ist das Ergebnis der Authentifizierung abhängig von allen ausgeführten Authentifizierungsverfahren 58, 60, 66. Je nachdem wie erfolgreich die Authentifizierung 68 ist, d.h. wie hoch die Konfidenzwerte sind, wie hoch die Angriffswahrscheinlichkeit 54 ist und wie hoch der potentielle Schaden 70 ist ändert sich das Schadensrisiko 70. Zur Auswahl der auszuführenden Authentifizierungsverfahren, eine Kombination von Authentifizierungsaufwand 64 und das Schadensrisiko 70 minimiert. Diejenige Auswahl an Authentifizierungsverfahren, für welche diese Kombination minimal ist, wird tatsächlich ausgeführt und für das Ergebnis überprüft, ob dieses das erwartete Schadensrisiko 70. Ist das der Fall gilt der aktuelle Nutzer als authentifiziert. Ist das nicht der Fall sind weitere Authentifizierungsverfahren notwendig.

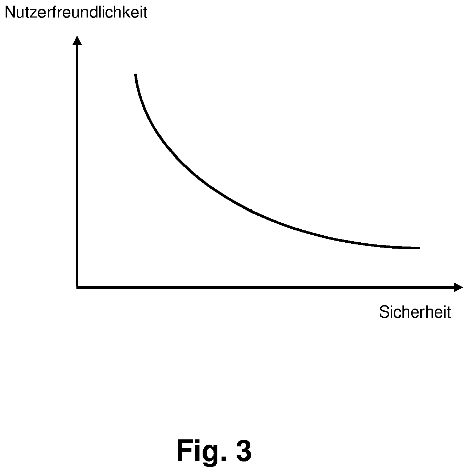

Figur 3 zeigt illustriert die Abhängigkeit von Nutzerfreundlichkeit und Sicherheit. Die Nutzerfreundlichkeit ist invers zum zuvor betrachteten Authentifizierungsaufwand. Je größer die Nutzerfreundlichkeit, desto geringer der Authentifizierungsaufwand Die Sicherheit ist invers zur zuvor betrachteten Schadensrisiko. Je größer das Risiko, desto geringer die Sicherheit. Wie aus Figur 3 hervorgeht, führt eine hohe Nutzerfreundlichkeit mit einem geringen Authentifizierungsaufwand zu einem geringen Maß an Sicherheit, welches ein großes Schadensrisiko birgt. Demgegenüber führt ein hohes Maß an Sicherheit mit wenigen Risiken zu einem hohen Authentifizierungsaufwand, welcher gleichbedeutend mit einer geringen Nutzerfreundlichkeit ist. Ziel des automatischen adaptiven Kalibrierens von Authentifizierungsanforderungen ist nun eine Auswahl an Authentifizierungsverfahren zu bestimmen, welche eine minimales Schadensrisiko bei gleichzeitig minimalem Authentifizierungsaufwand aufweisen.

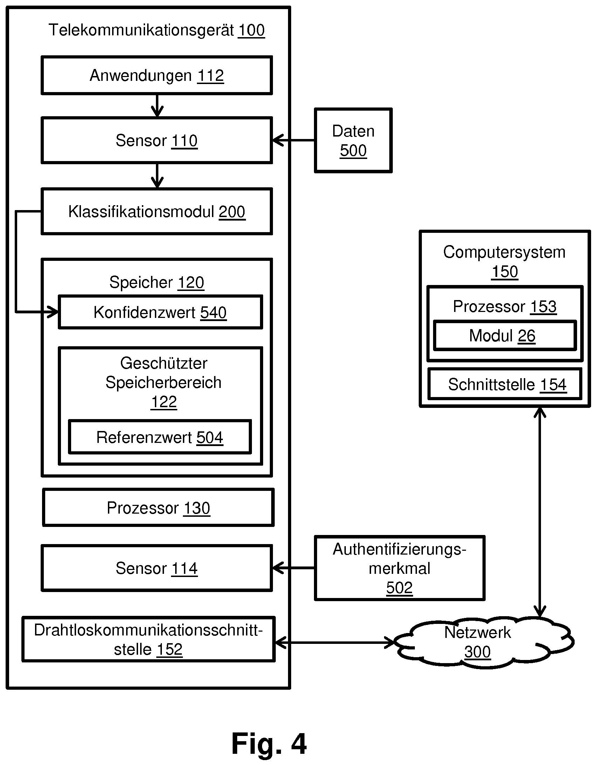

Figur 4 zeigt den schematischen Aufbau einer Ausführungsform eines mobilen, tragbaren Telekommunikationsgeräts 100, welches von einem Nutzer mitgeführt wird. Das mobile, tragbare Telekommunikationsgerät 100 ist dazu konfiguriert eine verhaltensbasierte Authentifizierung eines Nutzers auszuführen. Ferner kann das mobile, tragbare Telekommunikationsgerät 100 dazu konfiguriert sein, die verhaltensbasierte Authentifizierung des Nutzers gegenüber einem mit dem mobile, tragbare Telekommunikationsgerät 100 kommunikativ verbundenen Computersystem 150 auszuführen. Das mobile, tragbare Telekommunikationsgerät 100 weist einen Sensor 110 auf, welcher dazu konfiguriert ist, verhaltensbasierte Daten 500, beispielsweise grobmotorische Bewegungsdaten, des Nutzers zu erfassen. Ferner weist das mobile, tragbare Telekommunikationsgerät 100 ein Klassifikationsmodul 200 auf, welches beispielsweise als Grobmotorikklassifikationsmodul ausgebildet und dazu konfiguriert ist, die verhaltensbasierten Daten 500 des Sensors 110 zu verarbeiten. Das mobile, tragbare Telekommunikationsgerät 100 weist ferner einen Speicher 120 auf, in dem die verhaltensbasierten Daten 500 in verarbeiteter Form als Konfidenzwert 540 gespeichert werden können. Das mobile, tragbare Telekommunikationsgerät 100 weist ferner einen Prozessor 130 auf, welcher das Klassifikationsmodul 200 ausführt.

In einer weiteren Ausführungsform implementiert das mobile, tragbare Telekommunikationsgerät 100 Anwendungen 112. Der Sensor 110 kann nach Ausführungsformen dazu konfiguriert sein, ferner Anwendungsdaten als verhaltensbasierte Daten 500 zu erfassen. Das Klassifikationsmodul 200 kann ferner als Anwendungsklassifikationsmodul konfiguriert sein zum Verarbeiten der Anwendungsdaten der Anwendungen 112.

In einer weiteren Ausführungsform ist der Sensor 110 des mobile, tragbare Telekommunikationsgeräts 100 dazu konfiguriert feinmotorische Bewegungsdaten des Nutzers als verhaltensbasierte Daten 500 zu erfassen. Ferner ist das Das Klassifikationsmodul 200 des mobilen, tragbaren Telekommunikationsgerät 100 dazu konfiguriert feinmotorische Bewegungsdaten des Nutzers zu verarbeiten.

Führt der Nutzer eine grobmotorische Bewegung aus und trägt dabei das mobile Telekommunikationsgerät 100 bei sich, so kann der Sensor 110 diese Bewegung in Form von Daten 500 erfassen. Der Sensor 110 kann beispielsweise einen Beschleunigungssensor oder ein Gyroskop oder eine Kombination aus beidem umfassen. Die Bewegung des Nutzers kann beispielsweise ein Gehen, ein Joggen, ein Rennen oder eine Bewegung des Armes sein, falls der Teil des mobilen, tragbaren Telekommunikationsgeräts 100, welches den Sensor aufweist ist, am Arm befestigt ist.

Unter einer grobmotorischen Bewegung können beispielsweise Bewegungsabläufe wie zum Beispiel Gehen, Joggen, Rennen, Hüpfen, Klettern, Balancieren, Fahrradfahren, Autofahren oder eine Bewegung des Armes etwa beim Trinken, beim Schauen auf eine Armbanduhr oder beim Herausziehen des mobilen, tragbaren Telekommunikationsgeräts 100 aus einer Tasche verstanden werden.

Nutzt der Nutzer eine Anwendung 112, welche auf seinem mobilen, tragbaren Telekommunikationsgerät 100 implementiert ist, so erfasst das mobile, tragbare Telekommunikationsgerät 100 die Anwendungsdaten als verhaltensbasierte Daten 500.

Führt der Nutzer eine feinmotorische Bewegung aus, so kann der Sensor 110 diese Bewegung in Form von verhaltensbasierten Daten 500 erfassen. Der Sensor 110 kann beispielsweise ein Touch-Display, eine Tastatur oder eine Kombination aus beidem umfassen. Die feinmotorische Bewegung des Nutzers kann beispielsweise als Tippgeschwindigkeit, Eingabefrequenz oder Eingabegenauigkeit erfasst werden.

Das Klassifikationsmodul 200 empfängt die Daten 500 und klassifiziert die Daten 500 als ein Muster. Das Klassifikationsmodul 200 wird dabei von einem Prozessor 130 des mobilen, tragbaren Telekommunikationsgeräts 100 ausgeführt. Aus der Klassifikation generiert das Klassifikationsmodul 200 den mindestens einen Konfidenzwert 540. Dieser mindestens eine Konfidenzwert 540 wird in dem Speicher 120 des mobilen, tragbaren Telekommunikationsgeräts 100 gespeichert.

Muss sich der Nutzer gegenüber dem Computersystem 150 authentifizieren, wird der mindestens eine Konfidenzwert 540 aus dem Speicher 120 ausgelesen und verarbeitet. Dabei wird das Authentifizierungsergebnis 600 generiert.

Das Computersystem 150 ist beispielsweise ein Server, mit welchem das mobile tragbare Telekommunikationsgerät 100 unter Verwendung einer Drahtloskommunikationsschnittstelle 152 direkt oder über ein Netzwerk 300 kommunizieren kann. Beispielsweise führt das Computersystem 150 mit einem Prozessor 153 das Programmmodul 26 aus. Das Computersystem 150 steuert beispielsweise eine Zugangskontrollvorrichtung. Hierzu empfängt es über das Netzwerk 300 und die Kommunikationsschnittstelle 154 ein oder mehrerer Konfidenzwerte 540 von dem mobilen tragbaren Telekommunikationsgerät 100. Nach alternativen Ausführungsformen kann das Programmmodul 26 auch durch den Prozessor 130 auf dem mobilen tragbaren Telekommunikationsgerät 100 ausgeführt werden.

Ist der Nutzer gemäß dem Authentifizierungsergebnis 600 authentifiziert, so werden die Daten 500, die zu der erfolgreichen Authentifizierung beigetragen haben, in dem Speicher 120 des mobilen, tragbaren Telekommunikationsgeräts 100 gespeichert bzw. zu einem in dem Speicher 120 gespeicherten Vergleichsdatensatz hinzugefügt, um für zukünftige Authentifizierungsversuche bei der Generierung der zukünftigen Konfidenzwerte 540 verwendet zu werden.

Ferner kann das mobile tragbare Telekommunikationsgerät 100 dazu konfiguriert sein ein oder mehrere verhaltensunabhängige Authentifizierungsverfahren auszuführen. Diese verhaltensunabhängigen Authentifizierungsverfahren sind beispielsweise mit einem höheren Authentifizierungsaufwand verbunden. Im Falle eines hohen potentiellen Schadens kann es aber notwendig sein, diese verhaltensunabhängige Authentifizierungsverfahren als Rückfallposition auszuführen, um das Schadensrisiko sinnvoll zu beschränken.

Bei dem Sensor 110 kann es sich nach Ausführungsformen um einen Sensor oder eine Mehrzahl von unterschiedlichen Sensoren zum Erfassen unterschiedlicher verhaltensbasierter Daten 500 handeln.

Bei dem Klassifikationsmodul 200 kann es sich nach Ausführungsformen um ein Klassifikationsmodul handeln, welches zur Klassifikation einer Mehrzahl von unterschiedlichen Typen von verhaltensbasierten Daten 500 konfiguriert ist, oder um eine Mehrzahl von Klassifikationsmodulen, welche jeweils zur Klassifikation eines bestimmten Typs von verhaltensbasierten Daten 500 konfiguriert sind.

Das mobile, tragbare Telekommunikationsgerät 100 umfasst ferner einen Sensor 114 zum Erfassen eines verhaltensunabhängigen Authentifizierungsmerkmals 502. Dazu umfasst der Sensor 114 beispielsweise eine Nutzerschnittstelle, wie etwa ein Touch-Display zur Eingabe eines charakteristischen Wissens des Nutzers, einen biometrischen Sensor, wie etwa einen Fingerabdrucksensor, zur Erfassung eines charakteristischen biometrischen Merkmals des Nutzers und/oder eine Kommunikationsschnittstelle zur Kommunikation mit einem ID-Token im Besitz des Nutzers, sodass eine für den ID-Token charakteristische Kennung abgefragt werden kann z.B. in Form einer Signatur. Ferner sind in einem geschützten Speicherbereich 122 des Speichers 120 des mobile, tragbare Telekommunikationsgerät 100 ein oder mehrere Referenzwerte 504 zum Vergleich mit den erfassten Authentifizierungsmerkmalen 502 des aktuellen Nutzers. Die Referenzwerte 122 sind beispielsweise Referenzwerte für die Authentifizierungsmerkmale des registrierten Nutzers.

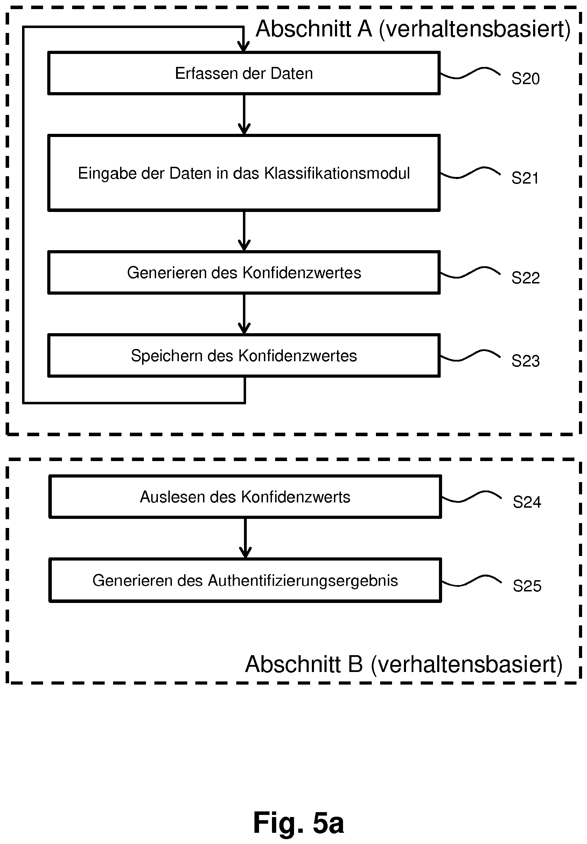

Figur 5a zeigt die verhaltensbasierte Authentifizierung eines Nutzers in einem Ablaufdiagramm. Die verhaltensbasierte Authentifizierung kann dabei in zwei Abschnitte A und B unterteilt werden. Abschnitt A wird wiederholt ausgeführt, und bildet so eine schleifenartige Ausführungsstruktur. Das mobile, tragbare Telekommunikationsgerät 100 erfasst in Schritt S20 die verhaltensbasierten Daten 500. Die verhaltensbasierten Daten 500 werden in Schritt S21 in das Klassifikationsmodul 200 eingegeben. Aus den verhaltensbasierten Daten 500 generiert das Klassifikationsmodul 200 in Schritt S22 den mindestens einen Konfidenzwert 540. Der mindestens eine generierte Konfidenzwert 540 wird in Schritt S23 in dem Speicher 120 des mobilen, tragbaren Klassifikationssystems 100 gespeichert. Das mobile, tragbare Telekommunikationsgerät 100 erfasst dann neue verhaltensbasierten Daten 500. Das ganze Verfahren gemäß Abschnitt A wird wiederholt ausgeführt.

In einer Ausführungsform erfasst das mobile, tragbare Telekommunikationsgerät 100 die verhaltensbasierten Daten 500 als Datenstrom (Stream), wobei das Klassifikationsmodul 200 die verhaltensbasierten Daten 500 als Stream empfängt und verarbeitet. Die Konfidenzwerte 540 werden dabei in sehr kurzen zeitlichen Abständen, die durch die Taktrate des Prozessors und/oder des Sensors vorgegeben werden, im Speicher 120 des mobilen, tragbaren Telekommunikationsgeräts 100 abgespeichert.

Abschnitt B wird dann ausgeführt, wenn sich der Nutzer authentifizieren muss und eine entsprechende Authentifizierungsanfrage empfangen wird. Die Authentifizierungsanfrage kann beispielsweise auf dem mobilen tragbaren Telekommunikationsgerät selbst erzeugt oder von einem externen Computersystem empfangen werden. Die Authentifizierungsanfrage umfasst eine Anforderung zum Auslesen von mindestens einem Konfidenzwert 540 aus dem Speicher 120. Der mindestens eine Konfidenzwert 540 wird dann aus dem Speicher 120 in Schritt S24 ausgelesen.

Aus dem mindestens einen Konfidenzwert 540 wird in Schritt S25 das Authentifizierungsergebnis 600 generiert. Überschreitet der Konfidenzwert bzw. im Falle kombinierter Konfidenzwert der resultierende Gesamtkonfidenzwert einen von dem Programmmodul für eine erfolgreiche Authentifizierung vorausgesetzten Schwellenwert, für welchen die Kombination von Schadensrisiko und Authentifizierungsaufwand minimiert wurde, so ist das Authentifizierungsergebnis 600 eine erfolgreiche Authentifizierung und der Nutzer ist authentifiziert. Andernfalls ist das Authentifizierungsergebnis 600 eine fehlgeschlagene Authentifizierung und der Nutzer ist nicht authentifiziert.

Ist der Nutzer gemäß dem Authentifizierungsergebnis 600 authentifiziert, wodurch ein Senden eines Authentifizierungssignals veranlasst wurde, so werden die verhaltensbasierten Daten 500, die zu der erfolgreichen Authentifizierung beigetragen haben, in dem Speicher 120 des mobilen, tragbaren Telekommunikationsgeräts gespeichert bzw. zu einem Vergleichsdatensatz hinzugefügt, um für zukünftige Authentifizierungsversuche bei der Generierung zukünftiger Konfidenzwerte 540 verwendet zu werden.

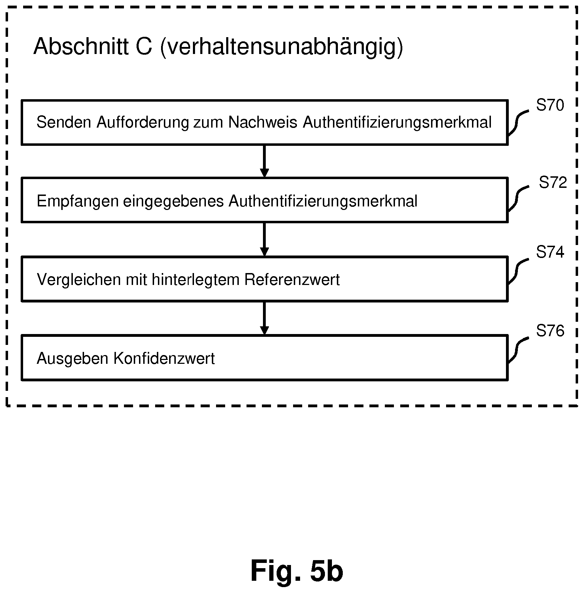

Figur 5b zeigt einen beispielhaften Verfahrensablauf für eine verhaltensunabhängige Authentifizierung in einem Abschnitt C des Authentifizierungsverfahrens. Zusätzlich oder alternativ zu der verhaltensbasierten Authentifizierung gemäß Figur 5a kann in einem operativen Abschnitt C eine verhaltensunabhängige Authentifizierung erfolgen. In Schritt S70 wird beispielsweise durch das Betriebssystem des mobilen, tragbaren Telekommunikationsgeräts und/oder ein für die Authentifizierung konfiguriertes Anwendungsprogramm eine Aufforderung zum Nachweis eines oder mehrerer vordefinierter Authentifizierungsmerkmale an den aktuellen Nutzer gesendet. Beispielsweise wird die Aufforderung auf einem Bildschirm des mobilen, tragbaren Telekommunikationsgeräts 100 bzw. auf einem Bildschirm eines von dem des mobilen, tragbaren Telekommunikationsgeräts 100 umfassten Kommunikationsgeräts 102 angezeigt. Ferner kann die Aufforderung den Nutzer darauf hinweisen, dass das beispielsweise aufgrund eines verhältnismäßig hohen potentiellen Schadens zusätzliche Authentifizierungsverfahren, wie etwa das entsprechende verhaltensunabhängige Authentifizierungsverfahren, notwendig sind. Die nachzuweisenden vordefinierten Authentifizierungsmerkmale umfassen beispielsweise ein Wissen, einen Besitz und/oder ein biologisches Merkmal des Nutzers. Diese können beispielsweise ein oder mehrere Benutzernamen, Kennwörter, Einmalkennwörter, persönliche Identifikationsnummern, Transaktionsnummern, Muster, biometrische Merkmale und/oder ein ID Token des registrierten Nutzers umfassen.

In Schritt S72 werden über eine Nutzerschnittstelle des mobilen, tragbaren Telekommunikationsgeräts 100 ein oder mehrere von dem aktuellen Nutzer eingegebene Authentifizierungsmerkmale 502 empfangen und an das die Authentifizierung ausführende Betriebssystem und/oder Anwendungsprogramm weitergeleitet. Die Eingabe der ein oder mehrere Authentifizierungsmerkmale 502 erfolgt über ein oder mehrere dazu ausgelegte Sensoren 114. Diese Sensoren 114 umfassen beispielsweise eine Nutzerschnittstelle, wie etwa eine Tastatur, ein Touch-Pad bzw. Touch-Display, ein Mikrophon, eine Kamera, eine Kommunikationsschnittstelle und/oder biometrische Sensoren zur Erfassung biometrischer Merkmale des aktuellen Nutzers. In Schritt S74 erfolgt ein Vergleich der von dem aktuellen Nutzer eingegebenen Authentifizierungsmerkmale 502 jeweils mit einem in einem geschützten Speicherbereich des Speichers 120 hinterlegten Referenzwert für das vordefinierte Authentifizierungsmerkmal durch den Prozessor 130 des mobilen, tragbaren Telekommunikationsgeräts 100. Aus dem Vergleich resultiert ein Konfidenzwert 540, welcher in Abhängigkeit von der Übereinstimmung des eingegebenen Authentifizierungsmerkmals mit dem hinterlegten Referenzwert eine Wahrscheinlichkeit dafür angibt, dass es ich bei dem aktuellen Nutzer, für welchen das Authentifizierungsmerkmal erfasst wurde, identisch mit dem registrierten Nutzer ist, für welchen der Referenzwert hinterlegt wurde. In Schritt S76 wird der resultierende Konfidenzwert 540 ausgegeben und kann analog zu den auf verhaltensbasierten Daten beruhenden Konfidenzwerte 540 zur Bestimmung des Authentifizierungsergebnisses verwendet werden.

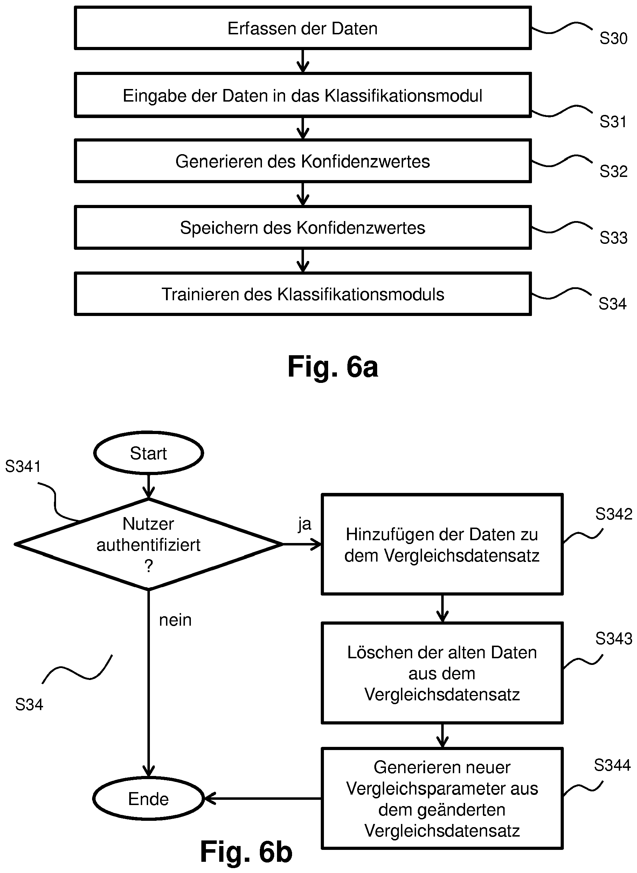

Figur 6a zeigt ein Ablaufdiagramm, welches die Verfahrensschleife A gemäß Figur 5a darstellt. In Schritt S30 werden die verhaltensbasierten Daten 500 erfasst. Die erfassten verhaltensbasierten Daten 500 werden in Schritt S31 in das Klassifikationsmodul 200 eingegeben. Die grobmotorischen Bewegungsdaten werden in das Grobmotorikklassifikationsmodul eingegeben. Die feinmotorischen Bewegungsdaten werden in das Feinmotorikklassifikationsmodul eingegeben. Die Anwendungsdaten werden in das Anwendungsklassifikationsmodul eingegeben.

In Schritt S32 generiert die Klassifikationsmodul 200 mindestens einen Konfidenzwert 540. Beispielsweise wird ein Konfidenzwert 540 generiert, welcher die Auswertung der grobmotorischen Bewegungsdaten, die feinmotorischen Bewegungsdaten und/oder die Anwendungsdaten umfasst. Der mindestens eine generierte Konfidenzwert 540 wird in Schritt S33 in dem Speicher 120 des mobilen, tragbaren Telekommunikationsgeräts 100 gespeichert. Schließlich wird das Klassifikationsmodul 200 in Schritt S34 trainiert, wobei das Training von dem Authentifizierungsergebnis 600 (vgl. Figur 5a) abhängt.

Figur 6b zeigt das Training gemäß Schritt S34 der Figur 5a im Detail. Zunächst wird geprüft in Schritt S341, ob sich der Nutzer durch das Authentifizierungsergebnis 600 erfolgreich authentifizieren konnte. Ist dies nicht der Fall, so werden die erfassten Daten 500 verworfen und es findet kein Training statt.

War die Authentifizierung des Nutzers erfolgreich, werden die verhaltensbasierten Daten 500 in Schritt S342 einem entsprechenden Vergleichsdatensatz 220 hinzugefügt und somit in dem Speicher 120 des mobilen, tragbaren Telekommunikationsgeräts gespeichert. Beispielsweise umfasst der Speicher 120 separate Vergleichsdatensätze 200 für die grobmotorischen Bewegungsdaten, die feinmotorischen Bewegungsdaten und/oder die Anwendungsdaten. Beispielsweise umfasst der Speicher 120 einen Vergleichsdatensatz für die verhaltensbasierten Daten 500.

In einer Ausführungsform wird nun geprüft, ob der oder die Vergleichsdatensätze 220 verhaltensbasierte Daten 500 enthalten, welche älter als ein bestimmtes Schwellenalter sind. Das Schwellenalter ist beispielsweise durch den Nutzer, das System 150 oder das mobile, tragbare Telekommunikationsgerät 100 festgelegt. Beispielsweise kann dieses Schwellenalter Tage, Wochen, Monate oder Jahre betragen. Beispielsweise beträgt es vier Wochen, drei Monate oder ein Jahr. Enthalten der oder die Vergleichsdatensätze 220 verhaltensbasierte Daten 500 enthalten, welche älter als das Schwellenalter sind, werden diese in Schritt S343 gelöscht.

Haben sich die Vergleichsdatensätze 220 durch das Hinzufügen neuer verhaltensbasierten Daten 500 und/oder das Löschen alter verhaltensbasierten Daten 500 verändert, werden die jeweiligen Vergleichsparameter 230 in Schritt S344 erneut bestimmt. Diese neuen Vergleichsparameter 230 werden beispielsweise in dem Speicher 120 des mobilen, tragbaren Telekommunikationsgeräts 100 gespeichert und stehen bei einem nächsten Authentifizierungsversuch dem Klassifikationsmodul 200 zur Verfügung. Alternativ werden die Vergleichsparameter 230 bei jedem Authentifizierungsversuch neu berechnet, so dass sichergestellt werden kann, dass stets aktuelle auf den berechtigten bzw. registrierten Nutzer trainierte Vergleichsparameter 230 für die Authentifizierung verwendet werden.

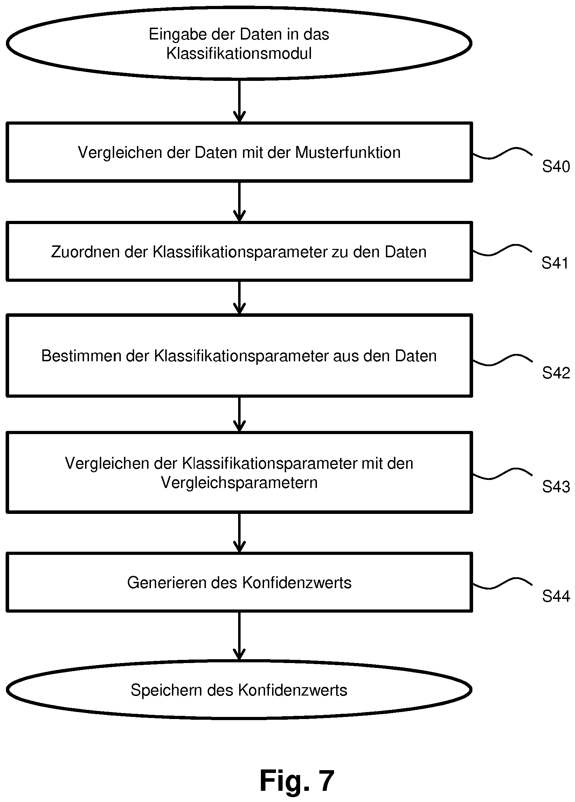

Figur 7 zeigt den schematischen Ablauf zur Generierung des Konfidenzwerts 540 aus den verhaltensbasierten Daten 500. Zunächst werden die verhaltensbasierten Daten 500, etwa durch einen dazu konfigurierten Sensor, erfasst. Die verhaltensbasierten Daten 500 werden dann an das Klassifikationsmodul 200 gesendet. Das Klassifikationsmodul 200 ruft aus dem Speicher eine Musterfunktion 210 ab und vergleicht in Schritt S40 die Musterfunktion 210 mit den erfassten verhaltensbasierten Daten 500. Die verhaltensbasierten Daten 500 werden in Schritt S41 einer Musterfunktion 210 zugeordnet. Auf das Zuordnen der Musterfunktion 210 hin, werden in Schritt S42 die der Musterfunktion 210 zugeordneten Klassifikationsparameter 520 aus den verhaltensbasierten Daten 500 bestimmt.

In dem Speicher 120 des mobilen, tragbaren Telekommunikationsgeräts 100 ist ein Vergleichsdatensatz 220 gespeichert, welcher verhaltensbasierten Daten umfasst, wobei die Daten des Vergleichsdatensatzes 220 die Struktur der erfassten verhaltensbasierten Daten 500 aufweisen. Dem Vergleichsdatensatz 220 sind Vergleichsparameter 230 zugeordnet, welche aus den Daten des Vergleichsdatensatzes 220 errechnet wurden. Das Klassifikationsmodul 200 liest die Vergleichsparameter 230 aus dem Speicher 120 des mobilen, tragbaren Telekommunikationsgeräts aus und vergleicht die Vergleichsparameter 230 mit den Klassifikationsparametern 520 in Schritt S43. Aus dem Unterschied generiert das Klassifikationsmodul 200 in Schritt S44 mindestens einen Konfidenzwert 540, wobei jeder Konfidenzwert 540 einem Klassifikationsparameter 520 zugeordnet ist und somit die Anzahl der Klassifikationsparameter 520 gleich der Anzahl der Konfidenzwerte 540 ist.

Der oder die resultierenden Konfidenzwerte 540 werden dann gemäß einer Ausführungsform der Erfindung, zum Beispiel durch Bildung des Mittelwerts, des Medians, des Modus oder durch eine komplexere Berechnung, etwa unter Verwendung von Gewichtungsfaktoren, zu einem resultierenden Konfidenzwert zusammengefasst. Der resultierende Konfidenzwert wird in dem Speicher 120 des mobilen, tragbaren Telekommunikationsgeräts 100 gespeichert. Bei einer Authentifizierungsanfrage wird der resultierende Konfidenzwert aus dem Speicher 120 des mobilen, tragbaren Telekommunikationsgeräts 100 ausgelesen.

In einer weiteren Ausführungsform wird der mindestens eine Konfidenzwert 540 im Speicher 120 des mobilen, tragbaren Telekommunikationsgeräts 100 gespeichert und kann bei einer Authentifizierungsanfrage ausgelesen werden.

Ist der Nutzer gemäß dem Authentifizierungsergebnis 600 authentifiziert, so werden die verhaltensbasierten Daten 500, die zu der erfolgreichen verhaltensbasierten Authentifizierung beitrugen, in dem Speicher 120 des mobilen, tragbaren Telekommunikationsgeräts hinzugefügt, um für zukünftige Authentifizierungsversuche bei der Generierung der zukünftigen Konfidenzwerte 540 verwendet zu werden.

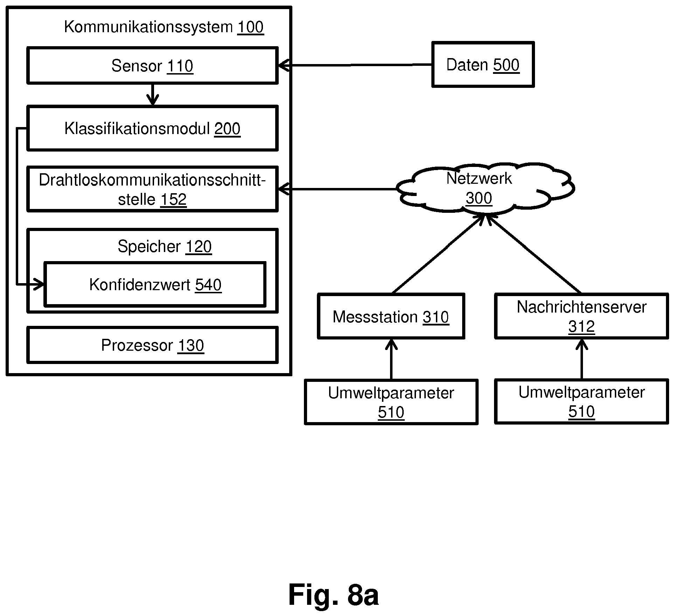

Figur 8a zeigt eine weitere Ausführungsform eines mobilen, tragbaren Telekommunikationsgeräts 100, welches zudem dazu konfiguriert ist Umweltparameter zu erfassen. Das Telekommunikationsgerät 100 umfasst beispielsweise eine Drahtloskommunikationsschnittstelle 152, einen Speicher 120 und einen Prozessor 130. Über die Drahtloskommunikationsschnittstelle 152 kann das Telekommunikationsgerät 100 mit einem Netzwerk 300 kommunizieren. Das Netzwerk 300 kann beispielsweise das Internet, ein öffentliches oder privates Funknetzwerk oder ein anderes beliebiges Netzwerk sein. In einer weiteren Ausführungsform umfasst das Telekommunikationsgerät 100 eine Kommunikationsschnittstelle, um mit dem Netzwerk 300 über eine kabelgebundene Verbindung zu kommunizieren.

Über das Netzwerk 300 kann das Telekommunikationsgerät 100 Informationen von einem externen System abrufen. Zwei externe System sind in Figur 8a als Messstation 310 und als Nachrichtenserver 312 dargestellt. Eine Messstation 310 kann beispielsweise eine Wetterstation oder eine Verkehrsüberwachungsanlage sein. Ein Nachrichtenserver 312 kann beispielsweise mit einem Portal einer Tageszeitung verbunden sein und regelmäßig Nachrichten bereitstellen. In einer weiteren Ausführungsform sind das externe System 310, 312 und das Telekommunikationsgerät 100 bilateral oder unilateral miteinander verbunden. Beispielsweise kann das externe System 312 auch ein Radiosender sein, welcher die Informationen für das Telekommunikationsgerät 100 ausstrahlt.

Das externe System, bzw. in Figur 8a die Messstation 310 und/oder der Nachrichtenserver 312, erfasst zumindest einen Umweltparameter 510 und sendet diesen, gegebenenfalls über das Netzwerk 300, an das Telekommunikationsgerät 100. Ferner erfasst das Telekommunikationsgerät 100 die verhaltensbasierten Daten 500 des Nutzers. Die verhaltensbasierten Daten 500 werden durch das Klassifikationsmodul 200 ausgewertet. Dabei wird die Auswertung der verhaltensbasierten Daten 500 an den durch die Drahtloskommunikationsschnittstelle 152 empfangenen zumindest einen Umweltparameter 510 angepasst. Das Klassifikationsmodul 200 wird durch den Prozessor 130 ausgeführt. Schließlich werden aus den Daten 500 und unter Verwendung des zumindest einen Umweltparameters 510 ein Konfidenzwert 540 und ein Authentifizierungssignal erzeugt. Der Konfidenzwert 540 wird in dem Speicher 120 für spätere Authentifizierungsversuche gespeichert. Das Authentifizierungssignal signalisiert die erfolgreiche Authentifizierung des Nutzers.

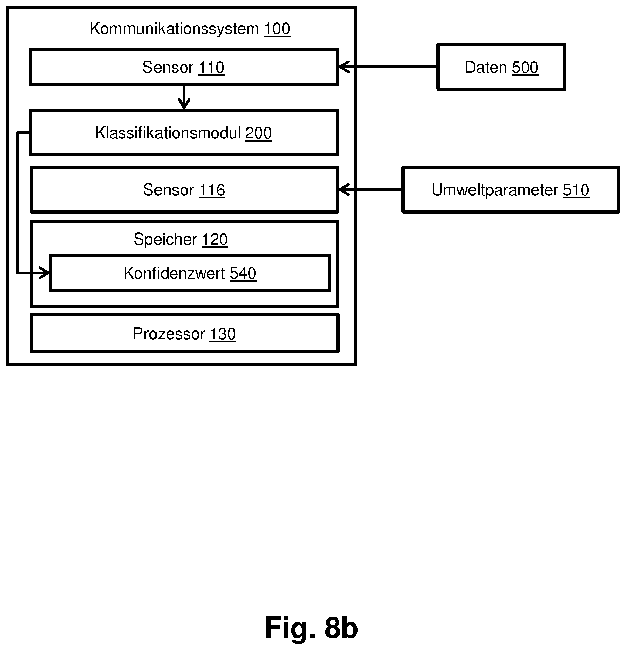

Figur 8b zeigt ein ähnliches Telekommunikationsgerät 100, wie das Telekommunikationsgerät, das in Figur 8a gezeigt ist. Das Telekommunikationsgerät 100 in Figur 8b umfasst jedoch einen Sensor 116, mit dem es in der Lage ist, den zumindest einen Umweltparameter 510 selbst zu erfassen. Beispielsweise kann der Sensor 116 als Temperatursensor oder Luftdrucksensor ausgebildet sein, um die Umweltparameter "lokale Temperatur" des Telekommunikationsgeräts 100 zu erfassen. Die Übrigen Komponenten und Eigenschaften des Telekommunikationsgeräts 100 sind analog zu denen, die in Figur 8a beschrieben sind.

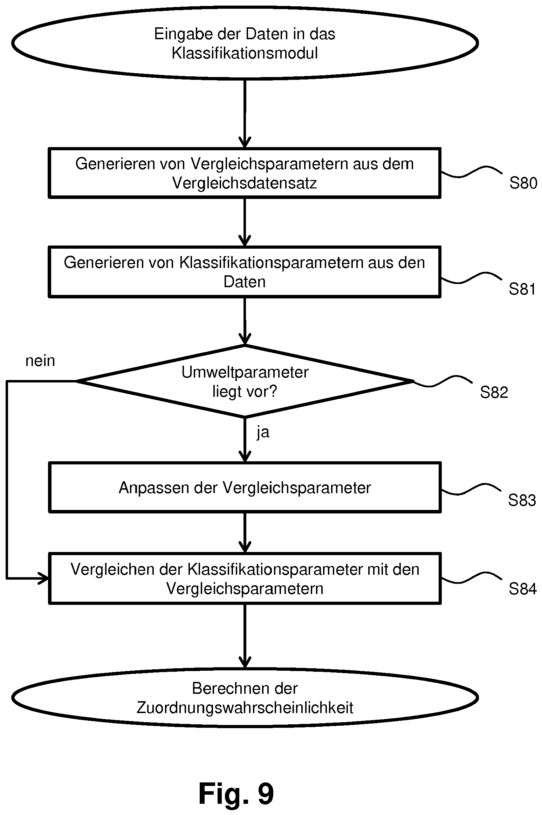

Figur 9 zeigt eine detaillierte Ausführungsform der Auswertung der verhaltensbasierten Daten unter Verwendung des Umweltparameters. Die verhaltensbasierten Daten werden in das Klassifikationsmodul eingegeben. Zunächst werden in Schritt S80 aus dem Vergleichsdatensatz Vergleichsparameter generiert. Dieser Schritt kann nach Ausführungsformen im Anschluss an eine erfolgreiche Authentifizierung erfolgen. In Schritt S81 werden aus den erfassten Daten Klassifikationsparameter analog zu den Vergleichsparametern generiert. Nun liegen Vergleichsparameter und Klassifikationsparameter vor, deren Anzahl identisch ist. In Schritt S82 erfolgt eine Überprüfung, ob ein Umweltparameter vorliegt. Ist dies der Fall folgt Schritt S83. Liegt kein Umweltparameter vor, wird der Schritt S83 übersprungen und das Verfahren fährt mit Schritt S84 fort.

Schritt S83 ist eine beispielhafte Ausführungsform der Korrektur. In Abhängigkeit von dem zumindest einen Umweltparameter werden die Vergleichsparameter modifiziert. Ergibt die Auswertung des Umweltparameters, dass die Korrektur einen vordefinierten Schwellenwert überschreitet oder überschreitet der Umweltparameter selbst einen vordefinierten Schwellenwert wird die verhaltensbasierte Authentifizierung abgebrochen und eine verhaltensunabhängige Authentifizierung als Rückfallposition ausgeführt. In Schritt S84 werden die Klassifikationsparameter mit den eventuell angepassten Vergleichsparametern vergleichen. Die Vergleichsparameter repräsentieren ein quantisiertes Verhalten des registrierten Nutzers, da sie aus verhaltensbasierten Daten generiert wurden, die zu einer erfolgreichen Authentifizierung in der Vergangenheit geführt haben. Die Klassifikationsparameter hingegen repräsentieren den aktuellen Nutzer, da sie aus den aktuell erfassten verhaltensbasierten Daten generiert wurden. Im Grunde wird in Schritt S84 das Verhalten des registrierten Nutzers mit dem Verhalten des aktuellen Nutzers verglichen.

Durch den Vergleich kann ein Konfidenzwert berechnet werden, die aussagt, inwiefern die beiden Verhaltensweisen übereinstimmen. Die einzelnen Parameter können dabei nach Ausführungsformen unterschiedlich gewichtet sein. Liegt der Konfidenzwert über einer vorgegebenen Schwellenwahrscheinlichkeit, so stimmt das Verhalten des aktuellen Nutzers mit dem Verhalten des registrierten Nutzers zumindest soweit überein, dass das Telekommunikationsgerät den aktuellen Nutzer als den registrierten Nutzer identifiziert. Der aktuelle Nutzer hat sich damit erfolgreich authentifiziert.

In weiteren Ausführungen können beispielsweise Gewichte der einzelnen Parameter bei der Berechnung des Konfidenzwerts durch die Korrektur geändert werden.

### Bezugszeichenliste

- 10:: Schadensprofil
- 12:: Risikoprofil
- 14:: Authentifizierungsverfahren
- 16:: Authentifizierungsaufwand
- 18:: Beitrag zu Konfidenzwert
- 20:: Verhaltensbasiertes Authentifizierungsverfahren
- 22:: Kontextinformationen
- 24:: Fallback-Authentifizierungsverfahren
- 26:: Programmmodul
- 28:: wahrscheinlichkeitsbasierte Entscheidungsstruktur
- 30:: Authentifizierungsergebnis
- 50:: Tageszeit
- 52:: Wochentag
- 54:: Angriffswahrscheinlichkeit
- 56:: Identität
- 58:: Authentifizierungsverfahren
- 60:: Authentifizierungsverfahren
- 62:: Boosting
- 64:: Authentifizierungsaufwand
- 66:: Fallback-Authentifizierungsverfahren
- 68:: Authentifizierungsergebnis
- 70:: Schadensrisiko
- 72:: Schadenshöhe
- 100:: Telekommunikationsgerät
- 110:: Sensor
- 114:: Sensor
- 116:: Sensor
- 112:: Anwendung
- 120:: Speicher
- 122:: geschützter Speicherbereich
- 130:: Prozessor
- 150:: Server
- 152:: Drahtloskommunikationsschnittstelle
- 153:: Prozessor
- 154:: Kommunikationsschnittstelle
- 200:: Klassifikationsmodul
- 210:: Musterfunktion
- 220:: Vergleichsdatensatz
- 230:: Vergleichsparameter
- 300:: Netzwerk
- 310:: Messstation
- 312:: Nachrichtenserver
- 400:: Authentifizierungsverfahren
- 500:: verhaltensbasierte Daten
- 502:: Authentifizierungsmerkmale
- 504:: Referenzwert
- 510:: Umweltparameter
- 520:: Klassifikationsparameter
- 540:: Konfidenzwerte
- 600:: Authentifizierungsergebnis

## Patentansprüche

1. Verfahren zum automatischen adaptiven Kalibrieren von Authentifizierungsanforderungen für ein Authentifizieren eines aktuellen Nutzers eines mobilen tragbaren Telekommunikationsgeräts (100), wobei das Verfahren umfasst:
• Bereitstellen eines Programmmoduls (26), welches eine wahrscheinlichkeitsbasierte Entscheidungsstruktur (28) implementiert und welches konfiguriert ist zum:
o Empfangen von Eingangsdaten, welche ein potentielles Schadenszenario, ein potentielles Angriffsszenario, ein oder mehrere ausgeführte Authentifizierungsverfahren sowie einen aus den ein oder mehreren ausgeführten Authentifizierungsverfahren resultierenden Konfidenzwert (540) für eine Identität des aktuellen Nutzers des mobilen tragbaren Telekommunikationsgeräts (100) mit einem registrierten Nutzer identifizieren,
o Bestimmen eines aktuellen Schadensrisikos (70), wobei es sich bei dem Schadensrisiko (70) um einen von der wahrscheinlichkeitsbasierten Entscheidungsstruktur (28) unter Verwendung einer Kombination aus dem empfangenen Konfidenzwert (540), einem von der wahrscheinlichkeitsbasierten Entscheidungsstruktur (28) für das potentielle Schadenszenario bestimmten Erwartungswert für einen potentiellen Schaden, im Falle einer fehlerhaften Authentifizierung des aktuellen Nutzers, und einer von der wahrscheinlichkeitsbasierten Entscheidungsstruktur (28) für das potentielle Angriffsszenario bestimmten Angriffswahrscheinlichkeit berechneten Wert handelt,
o Erstellen einer Prognose für potentielle Schadensrisikos (70) im Falle eines Ausführens von ein oder mehreren vordefinierten zusätzlichen Authentifizierungsverfahren unter Verwendung von vordefinierten Erwartungswerten für potentielle Erhöhungen des Konfidenzwerts (540) durch die ein oder mehreren vordefinierten zusätzlichen Authentifizierungsverfahren,
o Erstellen einer Prognose für potentielle Authentifizierungsaufwände im Falle eines Ausführens von ein oder mehreren vordefinierten zusätzlichen Authentifizierungsverfahren unter Verwendung von vordefinierten Erwartungswerten für potentielle Erhöhungen des Authentifizierungsaufwands (64) durch die ein oder mehreren Authentifizierungsverfahren,
o Erstellen einer Auswahl von Authentifizierungsverfahren, welche zumindest die ein oder mehreren ausgeführten Authentifizierungsverfahren umfasst, unter Berücksichtigung der ein oder mehreren vordefinierten zusätzlichen Authentifizierungsverfahren, wobei als Auswahlkriterium verwendet wird, dass für die Auswahl von Authentifizierungsverfahren eine Kombination aus Schadensrisiko (70) und Authentifizierungsaufwand (64) minimiert ist,
o Ausgeben von Ausgabedaten, welche die Auswahl von Authentifizierungsverfahren identifizieren,
• Ausführen von ein oder mehreren verhaltensbasierten Authentifizierungsverfahren unter Verwendung des mobilen tragbaren Telekommunikationsgeräts (100) zum Authentifizieren des aktuellen Nutzers,
• Empfangen der Eingangsdaten durch das Programmmodul (26), welche das potentielle Schadenszenario, das potentielle Angriffsszenario, die ein oder mehreren ausgeführten verhaltensbasierten Authentifizierungsverfahren und den aus den ein oder mehreren ausgeführten verhaltensbasierten Authentifizierungsverfahren resultierenden Konfidenzwert (540) identifizieren,
• in Antwort auf das Empfangen der Eingangsdaten, Ausgeben der Ausgabedaten durch das Programmmodul (26), welche die Auswahl von Authentifizierungsverfahren identifizieren,
• falls die Auswahl von Authentifizierungsverfahren identisch mit den ein oder mehreren ausgeführten verhaltensbasierten Authentifizierungsverfahren ist, Erzeugen eines Authentifizierungssignals, welches eine erfolgreiche Authentifizierung des aktuellen Nutzers unter Verwendung des mobilen tragbaren Telekommunikationsgeräts (100) bestätigt,
• falls die Auswahl ein oder mehrere erste zusätzliche Authentifizierungsverfahren der vordefinierten zusätzlichen Authentifizierungsverfahren umfasst, Ausführen der ausgewählten ein oder mehreren ersten zusätzlichen Authentifizierungsverfahren unter Verwendung des mobilen tragbaren Telekommunikationsgeräts (100) zum Authentifizieren des aktuellen Nutzers.

2. Verfahren nach Anspruch 1, wobei das Programmmodul (26) ferner konfiguriert ist zum:
o Empfangen zusätzlicher Eingangsdaten durch das Programmmodul (26), welche die ein oder mehreren ausgeführten ersten zusätzlichen Authentifizierungsverfahren und eine aus den ein oder mehreren ausgeführten ersten zusätzlichen Authentifizierungsverfahren tatsächlich resultierende Erhöhung des Konfidenzwerts (540) identifizieren,
o falls die aus den ein oder mehreren ausgeführten ersten zusätzlichen Authentifizierungsverfahren tatsächlich resultierende Erhöhung des Konfidenzwerts (540) von dem vordefinierten Erwartungswert für eine potentielle Erhöhung des Konfidenzwerts (540) durch die ein oder mehreren ausgeführten ersten zusätzlichen Authentifizierungsverfahren abweicht,
Aktualisieren des aktuellen Schadensrisikos (70) unter Verwendung der empfangenen aus den ein oder mehreren ausgeführten ersten zusätzlichen Authentifizierungsverfahren tatsächlich resultierende Erhöhung des Konfidenzwerts (540),
o Erstellen einer aktualisierten Auswahl von Authentifizierungsverfahren, welche zumindest die ein oder mehreren ausgeführten Authentifizierungsverfahren sowie die ein oder mehreren ausgeführten ersten zusätzlichen Authentifizierungsverfahren umfasst, wobei als Auswahlkriterium verwendet wird, dass für die Auswahl von Authentifizierungsverfahren eine Kombination aus aktualisiertem Schadensrisiko (70) und Authentifizierungsaufwand (64) minimiert ist,
o Ausgeben von zusätzlichen Ausgabedaten, welche die aktualisierte Auswahl von Authentifizierungsverfahren identifizieren,
wobei das Verfahren, falls die ein oder mehreren ersten zusätzlichen Authentifizierungsverfahren unter Verwendung des mobilen tragbaren Telekommunikationsgeräts (100) zum Authentifizieren des aktuellen Nutzers ausgeführt werden, ferner umfasst:
• Empfangen der zusätzlichen Eingangsdaten durch das Programmmodul (26), welche die ein oder mehreren ausgeführten ersten zusätzlichen Authentifizierungsverfahren und die aus den ein oder mehreren ausgeführten ersten zusätzlichen Authentifizierungsverfahren tatsächlich resultierende Erhöhung des Konfidenzwerts (540) identifizieren,
• in Antwort auf das Empfangen der Eingangsdaten, Ausgeben der Ausgabedaten durch das Programmmodul (26), welche die aktualisierte Auswahl von Authentifizierungsverfahren identifizieren,
• falls die aktualisierte Auswahl von Authentifizierungsverfahren identisch mit einer Kombination aus den ein oder mehreren ausgeführten verhaltensbasierten Authentifizierungsverfahren und den ein oder mehreren ausgeführten ersten zusätzlichen verhaltensbasierten Authentifizierungsverfahren ist, Erzeugen eines Authentifizierungssignals, welches eine erfolgreiche Authentifizierung des aktuellen Nutzers unter Verwendung des mobilen tragbaren Telekommunikationsgeräts (100) bestätigt,
• falls die aktualisierte Auswahl ein oder mehrere zweite zusätzliche Authentifizierungsverfahren umfasst, Ausführen der ein oder mehreren ausgewählten zweiten zusätzlichen Authentifizierungsverfahren unter Verwendung des mobilen tragbaren Telekommunikationsgeräts (100) zum Authentifizieren des aktuellen Nutzers.

3. Verfahren nach einem der vorangehenden Ansprüche, wobei die wahrscheinlichkeitsbasierte Entscheidungsstruktur (28) in Form eines bayesschen Netzwerks implementiert wird, und/oder
wobei es sich bei zumindest einem der zusätzlichen Authentifizierungsverfahren um ein bereits ausgeführtes Authentifizierungsverfahren handelt, welches wiederholt wird, und/oder
wobei es sich bei zumindest einem der zusätzlichen Authentifizierungsverfahren um ein alternatives Authentifizierungsverfahren handelt, welches im Zuge der Authentifizierung erstmals ausgeführt wird, und/oder
wobei es sich bei zumindest einem der zusätzlichen Authentifizierungsverfahren um ein verhaltensbasiertes Authentifizierungsverfahren handelt, und/oder
wobei es sich bei zumindest einem der zusätzlichen Authentifizierungsverfahren um ein verhaltensunabhängig Authentifizierungsverfahren handelt, wobei ein vordefiniertes verhaltensunabhängiges Authentifizierungsmerkmal des aktuellen Nutzers erfasst wird, wobei es sich bei dem vordefinierten verhaltensunabhängigen Authentifizierungsmerkmal um ein Merkmal eines für den registrierten Nutzer charakteristischen Wissens, eines für den registrierten Nutzer charakteristischen Besitzes und/oder einer für den registrierten Nutzer charakteristischen biologischen Eigenschaft handelt, und/oder
wobei das potentielle Schadenszenario durch Angabe eines Authentifizierungszwecks identifiziert wird, und/oder
wobei das potentielle Angriffsszenario durch ein oder mehreren Angaben zu einer Authentifizierungssituation identifiziert wird, und/oder
wobei das aktuelle und/oder die potentiellen Schadensrisikos (70) reduziert wird, wenn eine vorangegangene Authentifizierung für ein identischen oder größeres aktuelles Schadensrisiko (70) erfolgreich ausgeführt und eine seit der vorangegangenen Authentifizierung verstrichene Zeitspanne kleiner einem vordefinierten Schwellenwert ist, wobei Reduzierung umso größer ist, je kleiner die verstrichene Zeitspanne ist und umso größer das Schadensrisiko (70) der vorangegangenen Authentifizierung war, und/oder
wobei im Falle fehlender Eingangsdaten, Eingangsdaten aus einer vorangehenden Authentifizierung verwendet werden, falls eine seit der vorangegangenen Authentifizierung verstrichene Zeitspanne kleiner einem vordefinierten Schwellenwert ist und wobei die aus der vorangehenden Authentifizierung verwendeten Eingangsdaten so angepasst werden, dass sie in höheren aktuellen und/oder die potentiellen Schadensrisikos (70) resultieren, wobei die Anpassung umso größer ist, je größer die verstrichene Zeitspanne ist, und/oder
wobei sich der aktuelle Nutzer gegenüber dem mobile tragbare Telekommunikationsgerät (100) authentifiziert, wobei das mobile tragbare Telekommunikationsgerät (100) das Programmodul (26) und einen Prozessor aufweist und wobei der Prozessor des mobilen tragbaren Telekommunikationsgerät (100) das Programmmodul (26) ausführt.

4. Verfahren nach einem der vorangehenden Ansprüche, wobei sich der aktuelle Nutzer über das mobile tragbare Telekommunikationsgerät (100) gegenüber einem Server (150) authentifiziert, wobei das mobile tragbare Telekommunikationsgerät (100) eine Kommunikationsschnittstelle aufweist zur Kommunikation mit dem Server (150) über ein Netzwerk, wobei der Server (150) eine Kommunikationsschnittstelle zum Empfang von Konfidenzwerten (540) von dem mobilen tragbaren Telekommunikationsgerät (100), einen Prozessor und das Programmodul (26) aufweist und wobei der Prozessor des Servers (150) das Programmmodul (26) ausführt.

5. Verfahren nach einem der vorangehenden Ansprüche, wobei es sich bei einem ersten der ein oder mehreren verhaltensbasierten Authentifizierungsverfahren um ein Authentifizierungsverfahren zum Authentifizieren des aktuellen Nutzers anhand grobmotorischer Bewegungen handelt, wobei das mobile tragbare Telekommunikationsgerät (100) mindestens einen Sensor (114), ein Grobmotorikklassifikationsmodul (200) und einen internen Speicher aufweist, wobei der Sensor zu einer Erfassung von grobmotorischen Bewegungsdaten (500) einer grobmotorischen Bewegung des aktuellen Nutzers des mobilen tragbaren Telekommunikationsgeräts (100) konfiguriert ist, wobei das Grobmotorikklassifikationsmodul (200) zu einer Klassifikation der grobmotorischen Bewegungsdaten (500) konfiguriert und auf ein Erkennen einer grobmotorischen Bewegung eines registrierten Nutzers trainiert ist, wobei das Grobmotorikklassifikationsmodul (200) von dem Prozessor des mobilen, tragbaren Telekommunikationsgeräts (100) ausgeführt wird, wobei das erste verhaltensbasierte Authentifizierungsverfahren die folgenden Schritte aufweist:
• Wiederholtes Ausführen der Schritte:
o Erfassen der grobmotorischen Bewegungsdaten (500) durch den mindestens einen Sensor des mobilen, tragbaren Telekommunikationsgeräts (100),
o Eingabe der grobmotorischen Bewegungsdaten (500) in das Grobmotorikklassifikationsmodul (200),
o Generieren eines ersten Konfidenzwerts (540) durch das Grobmotorikklassifikationsmodul (200), ob der aktuelle Nutzer ein in dem mobilen, tragbaren Telekommunikationsgerät (100) registrierte Nutzer ist,
o Speichern des ersten Konfidenzwerts (540) in dem Speicher des mobilen, tragbaren Telekommunikationsgeräts (100),
• auf eine Authentifizierungsanfrage hin, Zugreifen auf den Speicher des mobilen, tragbaren Telekommunikationsgeräts (100), um mindestens einen der gespeicherten ersten Konfidenzwerte (540) aus dem Speicher auszulesen,
• Auslesen des mindestens einen ersten Konfidenzwerts (540) und Bereitstellen als Teil der Eingangsdaten für das Programmmodul (26).

6. Verfahren nach einem der vorangehenden Ansprüche, wobei es sich bei einem zweiten der ein oder mehreren verhaltensbasierten Authentifizierungsverfahren um ein Authentifizierungsverfahren zum Authentifizieren des aktuellen Nutzers anhand von Anwendungsdaten (500) handelt, wobei das mobile, tragbare Telekommunikationsgerät (100) ein Anwendungsklassifikationsmodul (200) aufweist, wobei das Anwendungsklassifikationsmodul (200) von dem Prozessor des mobilen, tragbaren Telekommunikationsgeräts (100) ausgeführt wird, wobei das zweite verhaltensbasierte Authentifizierungsverfahren die folgenden Schritte aufweist:
• Wiederholtes Ausführen der folgenden Schritte:
o Erfassen von Anwendungsdaten (500),
o Eingabe der Anwendungsdaten (500) in das Anwendungsklassifikationsmodul (200),
o Generieren mindestens eines zweiten Konfidenzwerts (540) durch das Anwendungsklassifikationsmodul (200), wobei der zweite Konfidenzwert (540) eine Wahrscheinlichkeit dafür angibt, dass die eingegebenen Anwendungsdaten (500) Daten eines Anwendungsverhaltens des registrierten Nutzers sind,
o Speichern des mindestens einen zweiten Konfidenzwerts (540) im Speicher des mobilen, tragbaren Telekommunikationsgeräts (100),
• auf die Authentifizierungsanfrage hin, Zugreifen auf den Speicher des mobilen, tragbaren Telekommunikationsgeräts (100), um mindestens einen der gespeicherten zweiten Konfidenzwerte (540) aus dem Speicher auszulesen,
• Auslesen des mindestens einen zweiten Konfidenzwerts (540) und Bereitstellen als Teil der Eingangsdaten für das Programmmodul (26).

7. Verfahren nach Anspruch 6, wobei die Anwendungsdaten (500) umfassen können:
o Anwendungsnutzungsdaten des aktuellen Nutzers, und/oder
o Verbindungsdaten des mobilen, tragbaren Telekommunikationsgeräts (100) mit anderen Geräten.

8. Verfahren nach einem der vorangehenden Ansprüche, wobei es sich bei einem dritten der ein oder mehreren verhaltensbasierten Authentifizierungsverfahren um ein Authentifizierungsverfahren zum Authentifizieren des aktuellen Nutzers anhand feinmotorischen Bewegungen handelt, wobei das mobile, tragbare Telekommunikationsgerät (100) einen Sensor zu einer Erfassung von feinmotorischen Bewegungsdaten (500) einer feinmotorischen Bewegung des aktuellen Nutzers des mobilen tragbaren Telekommunikationsgeräts (100) konfiguriert ist, wobei das mobile, tragbare Telekommunikationsgerät (100) ein Feinmotorikklassifikationsmodul (200) aufweist, wobei das Feinmotorikklassifikationsmodul (200) für eine Klassifikation von feinmotorischen Bewegungsdaten (500) konfiguriert und auf ein Erkennen einer feinmotorischen Bewegung eines registrierten Nutzers trainiert ist, wobei das Feinmotorikklassifikationsmodul (200) von dem Prozessor des mobilen, tragbaren Telekommunikationsgeräts (100) ausgeführt wird, wobei das zweite verhaltensbasierte Authentifizierungsverfahren die folgenden Schritte aufweist:
• Wiederholtes Ausführen der folgenden:
o Erfassen der feinmotorischen Bewegungsdaten (500),
o Eingabe der feinmotorischen Bewegungsdaten (500) in das Feinmotorikklassifikationsmodul (200),
o Generieren mindestens eines dritten Konfidenzwerts (540) durch das Feinmotorikklassifikationsmodul (200), wobei der dritte Konfidenzwert (540) eine Wahrscheinlichkeit dafür angibt, dass die eingegebenen feinmotorischen Bewegungsdaten (500) Daten einer feinmotorischen Bewegung des registrierten Nutzers sind,
o Speichern des mindestens einen dritten Konfidenzwerts (540) in dem Speicher des mobilen, tragbaren Telekommunikationsgeräts (100),
• auf die Authentifizierungsanfrage hin, Zugreifen auf den Speicher des mobilen, tragbaren Telekommunikationsgeräts (100), um mindestens einen der gespeicherten dritten Konfidenzwerte (540) aus dem Speicher auszulesen,
• Auslesen des mindestens einen dritten Konfidenzwerts (540) und Bereitstellen als Teil der Eingangsdaten für das Programmmodul (26).

9. Verfahren nach einem der Ansprüche 5 bis 8, wobei die verhaltensbasierte Authentifizierung ferner das Trainieren des Grobmotorikklassifikationsmoduls (200) mit den grobmotorischen Bewegungsdaten (500) des aktuellen Nutzers umfasst, wobei das Grobmotorikklassifikationsmodul (200) auf das nutzerspezifische grobmotorische Bewegungsmuster des aktuellen Nutzers unter der Voraussetzung trainiert wird, dass der aktuelle Nutzer der im mobilen, tragbaren Telekommunikationsgerät (100) registrierte Nutzer ist, und/oder
das Trainieren des Anwendungsklassifikationsmoduls (200) mit den Anwendungsdaten (500) des aktuellen Nutzers, wobei das Anwendungsklassifikationsmodul (200) auf das nutzerspezifische Anwendungsverhaltensmuster des aktuellen Nutzers unter der Voraussetzung trainiert wird, dass der aktuelle Nutzer der im System registrierte Nutzer ist, und/oder,
das Trainieren des Feinmotorikklassifikationsmoduls (200) mit den feinmotorischen Bewegungsdaten (500) des aktuellen Nutzers, wobei das Feinmotorikklassifikationsmodul (200) auf das nutzerspezifische feinmotorische Bewegungsmuster des aktuellen Nutzers unter der Voraussetzung trainiert wird, dass der aktuelle Nutzer der im System registrierte Nutzer ist.

10. Verfahren nach einem der Ansprüche 5 bis 9, wobei in dem Speicher des mobilen, tragbaren Telekommunikationsgeräts (100) mindestens ein erstes Muster in Form einer ersten Musterfunktion (210) und mindestens ein erster Vergleichsdatensatz (220) gespeichert sind, wobei der erste Vergleichsdatensatz (220) eine Mehrzahl der grobmotorischen Bewegungsdaten (500) umfasst, wobei aus der Mehrzahl der grobmotorischen Bewegungsdaten (500) des ersten Vergleichsdatensatzes (220) mindestens ein erster Vergleichsparameter (230) errechnet wird, wobei das Grobmotorikklassifikationsmodul (200) auf die Eingabe der grobmotorischen Bewegungsdaten (500) hin die folgenden Schritte im Zuge der grobmotorischen Bewegungsdaten (500) ausführt:
• Vergleichen der erfassten grobmotorischen Bewegungsdaten (500) mit der mindestens einen ersten Musterfunktion (210),
• Zuordnen der grobmotorischen Bewegungsdaten (500) zu dem der ersten Musterfunktion (210) zugeordneten ersten Muster und erhalten von mindestens einem dem ersten Muster entsprechenden ersten Klassifikationsparameter (520), falls die grobmotorischen Bewegungsdaten (500) dem mindestens einen, ersten Muster zugeordnet werden können,
• Generieren eines der ersten Konfidenzwerte (540) für jeden ersten Klassifikationsparameter (520) durch einen Vergleich des mindestens einen ersten Klassifikationsparameters (520) mit dem jeweiligen ersten Vergleichsparameter (230) des ersten Vergleichsdatensatzes (220),
und wobei der Schritt des Trainierens ein Hinzufügen der erfassten grobmotorischen Bewegungsdaten (500) zu dem ersten Vergleichsdatensatz (220) umfasst.

11. Verfahren nach Anspruch 6 bis 10, wobei in dem Speicher des mobilen, tragbaren Telekommunikationsgeräts (100) mindestens ein zweites Muster in Form einer zweiten Musterfunktion (210) und mindestens ein zweiter Vergleichsdatensatz (220) gespeichert sind, wobei der zweite Vergleichsdatensatz (220) eine Mehrzahl der Anwendungsdaten (500) umfasst, wobei aus der Mehrzahl der Anwendungsdaten (500) des zweiten Vergleichsdatensatzes (220) mindestens ein zweiter Vergleichsparameter (230) errechnet wird,
wobei das Anwendungsklassifikationsmodul (200) auf die Eingabe der Anwendungsdaten (500) hin im Zuge der Auswertung der Anwendungsdaten (500) die folgenden Schritte ausführt:
• Vergleich der erfassten Anwendungsdaten (500) mit der mindestens einen zweiten Musterfunktion (210),
• Zuordnen der Anwendungsdaten (500) zu dem der zweiten Musterfunktion (210) zugeordneten zweiten Muster und erhalten von mindestens einem dem zweiten Muster entsprechenden zweiten Klassifikationsparameter (520), falls die Anwendungsdaten (500) dem mindesten einen, zweiten Muster zugeordnet werden können,
• Generieren eines der zweiten Konfidenzwerte (540) für jeden der zweiten Klassifikationsparameter (520) durch einen Vergleich der zweiten Klassifikationsparameter (520) mit dem jeweiligen zweiten Vergleichsparameter (230) des zweiten Vergleichsdatensatzes (220),
und wobei der Schritt des Trainierens ein Hinzufügen der erfassten Anwendungsdaten (500) zu dem zweiten Vergleichsdatensatz (220) umfasst.

12. Verfahren nach einem der Ansprüche 8 bis 11, wobei in dem Speicher des mobilen, tragbaren Telekommunikationsgeräts (100) mindestens ein drittes Muster in Form einer dritten Musterfunktion (210) und mindestens ein dritter Vergleichsdatensatz (220) gespeichert sind, wobei der dritte Vergleichsdatensatz (220) eine Mehrzahl der feinmotorischen Bewegungsdaten (500) umfasst, wobei aus der Mehrzahl der feinmotorischen Bewegungsdaten (500) des dritten Vergleichsdatensatzes (220) mindestens ein dritter Vergleichsparameter (230) errechnet wird, wobei das Feinmotorikklassifikationsmodul (200) auf die Eingabe der feinmotorischen Bewegungsdaten (500) hin im Zuge der Auswertung der feinmotorischen Bewegungsdaten (500) die folgenden Schritte ausführt:
• Vergleich der erfassten feinmotorischen Bewegungsdaten (500) mit der mindestens einen dritten Musterfunktion (210),
• Zuordnen der feinmotorischen Bewegungsdaten (500) zu dem der dritten Musterfunktion (210) zugeordneten dritten Muster und erhalten von mindestens einem dem dritten Muster entsprechenden dritten Klassifikationsparameter (520), falls die feinmotorischen Bewegungsdaten (500) dem mindesten einen, dritten Muster zugeordnet werden können,
• Generieren eines der dritten Konfidenzwerte (540) für jeden der dritten Klassifikationsparameter (520) durch einen Vergleich der dritten Klassifikationsparameter (520) mit dem jeweiligen dritten Vergleichsparameter (230) des dritten Vergleichsdatensatzes (220),
und wobei der Schritt des Trainierens ein Hinzufügen der erfassten feinmotorischen Bewegungsdaten (500) zu dem dritten Vergleichsdatensatz (220) umfasst, und/oder
wobei die grobmotorischen Bewegungsdaten (500), welche Teil des ersten Vergleichsdatensatzes (220) und älter als eine festgelegte Zeit sind, aus dem ersten Vergleichsdatensatz (220) entfernt werden und aus dem Speicher des mobilen, tragbaren Telekommunikationsgeräts (100) gelöscht werden und die Anwendungsdaten (500), welche Teil des zweiten Vergleichsdatensatzes (220) und älter als die festgelegte Zeit sind, aus dem zweiten Vergleichsdatensatz (220) entfernt werden und aus dem Speicher des mobilen, tragbaren Telekommunikationsgeräts (100) gelöscht werden und die feinmotorischen Bewegungsdaten (500), welche Teil des dritten Vergleichsdatensatzes (220) und älter als die festgelegte Zeit sind, aus dem dritten Vergleichsdatensatz (220) entfernt werden und aus dem Speicher des mobilen, tragbaren Telekommunikationsgeräts (100) gelöscht werden.

13. Mobiles tragbares Telekommunikationsgeräts (100) zum automatischen adaptiven Kalibrieren von Authentifizierungsanforderungen für ein Authentifizieren eines aktuellen Nutzers des mobilen tragbaren Telekommunikationsgeräts (100), wobei das mobile tragbare Telekommunikationsgerät (100) einen Speicher und einen Prozessor umfasst, wobei in dem Speicher maschinenlesbare Programminstruktionen gespeichert sind, wobei ein Ausführen der maschinenlesbaren Programminstruktionen durch den Prozessor den Prozessor dazu veranlasst das mobile tragbare Telekommunikationsgerät (100) so zu steuern, dass das mobile tragbare Telekommunikationsgerät (100) ein Verfahren ausführt, welches umfasst:
• Bereitstellen eines Programmmoduls (26), welches eine wahrscheinlichkeitsbasierte Entscheidungsstruktur (28) implementiert und welches konfiguriert ist zum:
o Empfangen von Eingangsdaten, welche ein potentielles Schadenszenario, ein potentielles Angriffsszenario, ein oder mehrere ausgeführte Authentifizierungsverfahren sowie einen aus den ein oder mehreren ausgeführten Authentifizierungsverfahren resultierenden Konfidenzwert (540) für eine Identität des aktuellen Nutzers des mobilen tragbaren Telekommunikationsgeräts (100) mit einem registrierten Nutzer identifizieren,
o Bestimmen eines aktuellen Schadensrisikos, wobei es sich bei dem Schadensrisiko um einen von der wahrscheinlichkeitsbasierten Entscheidungsstruktur (28) unter Verwendung einer Kombination aus dem empfangenen Konfidenzwert (540), einem von der wahrscheinlichkeitsbasierten Entscheidungsstruktur (28) für das potentielle Schadenszenario bestimmten Erwartungswert für einen potentiellen Schaden, im Falle einer fehlerhaften Authentifizierung des aktuellen Nutzers, und einer von der wahrscheinlichkeitsbasierten Entscheidungsstruktur (28) für das potentielle Angriffsszenario bestimmten Angriffswahrscheinlichkeit berechneten Wert handelt,
o Erstellen einer Prognose für potentielle Schadensrisikos (70) im Falle eines Ausführens von ein oder mehreren vordefinierten zusätzlichen Authentifizierungsverfahren unter Verwendung von vordefinierten Erwartungswerten für potentielle Erhöhungen des Konfidenzwerts (540) durch die ein oder mehreren vordefinierten zusätzlichen Authentifizierungsverfahren,
o Erstellen einer Prognose für potentielle Authentifizierungsaufwände im Falle eines Ausführens von ein oder mehreren vordefinierten zusätzlichen Authentifizierungsverfahren unter Verwendung von vordefinierten Erwartungswerten für potentielle Erhöhungen des Authentifizierungsaufwands (64) durch die ein oder mehreren Authentifizierungsverfahren,
o Erstellen einer Auswahl von Authentifizierungsverfahren, welche zumindest die ein oder mehreren ausgeführten Authentifizierungsverfahren umfasst, unter Berücksichtigung der ein oder mehreren vordefinierten zusätzlichen Authentifizierungsverfahren, wobei als Auswahlkriterium verwendet wird, dass für die Auswahl von Authentifizierungsverfahren eine Kombination aus Schadensrisiko (70) und Authentifizierungsaufwand (64) minimiert ist,
o Ausgeben von Ausgabedaten, welche die Auswahl von Authentifizierungsverfahren identifizieren,
• Ausführen von ein oder mehreren verhaltensbasierten Authentifizierungsverfahren zum Authentifizieren des aktuellen Nutzers,
• Empfangen der Eingangsdaten durch das Programmmodul (26), welche das potentielle Schadenszenario, das potentielle Angriffsszenario, die ein oder mehreren ausgeführten verhaltensbasierten Authentifizierungsverfahren und den aus den ein oder mehreren ausgeführten verhaltensbasierten Authentifizierungsverfahren resultierenden Konfidenzwert (540) identifizieren,
• in Antwort auf das Empfangen der Eingangsdaten, Ausgeben der Ausgabedaten durch das Programmmodul (26), welche die Auswahl von Authentifizierungsverfahren identifizieren,
• falls die Auswahl von Authentifizierungsverfahren identisch mit den ein oder mehreren ausgeführten verhaltensbasierten Authentifizierungsverfahren ist, Erzeugen eines Authentifizierungssignals, welches eine erfolgreiche Authentifizierung des aktuellen Nutzers bestätigt,
• falls die Auswahl ein oder mehrere erste zusätzliche Authentifizierungsverfahren der vordefinierten zusätzlichen Authentifizierungsverfahren umfasst, Ausführen der ausgewählten ein oder mehreren ersten zusätzlichen Authentifizierungsverfahren zum Authentifizieren des aktuellen Nutzers.

14. Server (150) zum automatischen adaptiven Kalibrieren von Authentifizierungsanforderungen für ein Authentifizieren eines aktuellen Nutzers eines mobilen tragbaren Telekommunikationsgeräts (100), wobei der Server (150) einen Speicher und einen Prozessor umfasst, wobei in dem Speicher maschinenlesbare Programminstruktionen gespeichert sind, wobei ein Ausführen der maschinenlesbaren Programminstruktionen durch den Prozessor den Prozessor dazu veranlasst den Server (150) so zu steuern, dass der Server (150) ein Verfahren ausführt, welches umfasst:
• Bereitstellen eines Programmmoduls (26), welches eine wahrscheinlichkeitsbasierte Entscheidungsstruktur (28) implementiert und welches konfiguriert ist zum:
o Empfangen von Eingangsdaten, welche ein potentielles Schadenszenario, ein potentielles Angriffsszenario, ein oder mehrere ausgeführte Authentifizierungsverfahren sowie einen aus den ein oder mehreren ausgeführten Authentifizierungsverfahren resultierenden Konfidenzwert (540) für eine Identität des aktuellen Nutzers des mobilen tragbaren Telekommunikationsgeräts (100) mit einem registrierten Nutzer identifizieren,
o Bestimmen eines aktuellen Schadensrisikos (70), wobei es sich bei dem Schadensrisiko (70) um einen von der wahrscheinlichkeitsbasierten Entscheidungsstruktur (28) unter Verwendung einer Kombination aus dem empfangenen Konfidenzwert (540), einem von der wahrscheinlichkeitsbasierten Entscheidungsstruktur (28) für das potentielle Schadenszenario bestimmten Erwartungswert für einen potentiellen Schaden, im Falle einer fehlerhaften Authentifizierung des aktuellen Nutzers, und einer von der wahrscheinlichkeitsbasierten Entscheidungsstruktur (28) für das potentielle Angriffsszenario bestimmten Angriffswahrscheinlichkeit berechneten Wert handelt,
o Erstellen einer Prognose für potentielle Schadensrisikos (70) im Falle eines Ausführens von ein oder mehreren vordefinierten zusätzlichen Authentifizierungsverfahren unter Verwendung von vordefinierten Erwartungswerten für potentielle Erhöhungen des Konfidenzwerts (540) durch die ein oder mehreren vordefinierten zusätzlichen Authentifizierungsverfahren,
o Erstellen einer Prognose für potentielle Authentifizierungsaufwände im Falle eines Ausführens von ein oder mehreren vordefinierten zusätzlichen Authentifizierungsverfahren unter Verwendung von vordefinierten Erwartungswerten für potentielle Erhöhungen des Authentifizierungsaufwands (64) durch die ein oder mehreren Authentifizierungsverfahren,
o Erstellen einer Auswahl von Authentifizierungsverfahren, welche zumindest die ein oder mehreren ausgeführten Authentifizierungsverfahren umfasst, unter Berücksichtigung der ein oder mehreren vordefinierten zusätzlichen Authentifizierungsverfahren, wobei als Auswahlkriterium verwendet wird, dass für die Auswahl von Authentifizierungsverfahren eine Kombination aus Schadensrisiko (70) und Authentifizierungsaufwand (64) minimiert ist,
o Ausgeben von Ausgabedaten, welche die Auswahl von Authentifizierungsverfahren identifizieren,
• Empfangen eines Konfidenzwerts (540) von dem mobilen tragbaren Telekommunikationsgerät (100), wobei der Konfidenzwert (540) aus ein oder mehreren von dem mobilen tragbaren Telekommunikationsgerät (100) ausgeführten verhaltensbasierten Authentifizierungsverfahren zum Authentifizieren des aktuellen Nutzers resultiert,
• Empfangen der Eingangsdaten durch das Programmmodul (26), welche das potentielle Schadenszenario, das potentielle Angriffsszenario, die ein oder mehreren ausgeführten verhaltensbasierten Authentifizierungsverfahren und den aus den ein oder mehreren ausgeführten verhaltensbasierten Authentifizierungsverfahren resultierenden Konfidenzwert (540) identifizieren,
• in Antwort auf das Empfangen der Eingangsdaten, Ausgeben der Ausgabedaten durch das Programmmodul (26), welche die Auswahl von Authentifizierungsverfahren identifizieren,
• falls die Auswahl von Authentifizierungsverfahren identisch mit den ein oder mehreren ausgeführten verhaltensbasierten Authentifizierungsverfahren ist, Erzeugen eines Authentifizierungssignals, welches eine erfolgreiche Authentifizierung des aktuellen Nutzers unter Verwendung des mobilen tragbaren Telekommunikationsgeräts (100) bestätigt,
• falls die Auswahl ein oder mehrere erste zusätzliche Authentifizierungsverfahren der vordefinierten zusätzlichen Authentifizierungsverfahren umfasst, Senden einer Ausführungsanforderung zum Ausführen der ausgewählten ein oder mehreren ersten zusätzlichen Authentifizierungsverfahren zum Authentifizieren des aktuellen Nutzers an das mobile tragbare Telekommunikationsgerät (100).

15. System zum automatischen adaptiven Kalibrieren von Authentifizierungsanforderungen für ein Authentifizieren eines aktuellen Nutzers eines mobilen tragbaren Telekommunikationsgeräts (100), wobei das System einen Server (150) nach Anspruch 14 und ein mobiles tragbares Telekommunikationsgerät (100) umfasst.

## Claims

1. Method for the automatic adaptive calibration of authentication requests for authentication of a current user of a mobile portable telecommunications device (100), the method comprising:
• providing a program module (26), which implements a probability-based decision structure (28) and is configured to:
o receive input data, which identify a potential damage scenario, a potential attack scenario, one or more performed authentication methods and a confidence value (540), resulting from the one or more performed authentication methods, for an identity of the current user of the mobile portable telecommunications device (100) with a registered user,
o determine a current damage risk (70), wherein the damage risk (70) is a value calculated by the probability-based decision structure (28) using a combination of the received confidence value (540), an expectation value for potential damage in the event of incorrect authentication of the current user, said expectation value being determined by the probability-based decision structure (28) for the potential damage scenario, and an attack probability determined by the probability-based decision structure (28) for the potential attack scenario,
o create a prediction of potential damage risks (70) if one or more predefined additional authentication methods are performed using predefined expectation values for potential increases in the confidence value (540) by the one or more predefined additional authentication methods,
o create a prediction of potential authentication efforts if one or more predefined additional authentication methods are performed using predefined expectation values for potential increases in the authentication effort (64) by the one or more authentication methods,
o create a selection of authentication methods which comprises at least the one or more performed authentication methods, taking into consideration the one or more predefined additional authentication methods, wherein the condition that a combination of damage risk (70) and authentication effort (64) is minimized for the selection of authentication methods is used as a selection criterion,
o output output data which identify the selection of authentication methods,
• performing one or more behavior-based authentication methods using the mobile portable telecommunications device (100) in order to authenticate the current user,
• receiving the input data by the program module (26), which input data identify the potential damage scenario, the potential attack scenario, the one or more performed behavior-based authentication methods, and the confidence value (540) resulting from the one or more performed behavior-based authentication methods,
• in response to the input data being received, outputting the output data by the program module (26), which output data identify the selection of authentication methods,
• if the selection of authentication methods is identical to the one or more performed behavior-based authentication methods, generating an authentication signal, which confirms successful authentication of the current user using the mobile portable telecommunications device (100),
• if the selection comprises one or more first additional authentication methods of the predefined additional authentication methods, performing the selected one or more first additional authentication methods using the mobile portable telecommunications device (100) in order to authenticate the current user.

2. Method according to claim 1, wherein the program module (26) is further configured to:
o receive additional input data by the program module (26), which input data identify the one or more performed first additional authentication methods, and an increase in the confidence value (540) actually resulting from the one or more performed first additional authentication methods,
o if the increase in the confidence value (540) actually resulting from the one or more performed first additional authentication methods deviates from the predefined expectation value for a potential increase in the confidence value (540) by the one or more performed first additional authentication methods,
o update the current damage risk (70) using the received increase in the confidence value (540) actually resulting from the one or more performed first additional authentication methods,
o create an updated selection of authentication methods which comprises at least the one or more performed authentication methods and the one or more performed first additional authentication methods, wherein the condition that a combination of updated damage risk (70) and authentication effort (64) is minimized for the selection of authentication methods is used as a selection criterion,
o output additional output data which identify the updated selection of authentication methods,
wherein the method, if the one or more first additional authentication methods using the mobile portable telecommunications device (100) in order to authenticate the current user, further comprises:
• receiving the additional input data by the program module (26), which input data identify the one or more performed first additional authentication methods, and the increase in the confidence value (540) actually resulting from the one or more performed first additional authentication methods,
• in response to the input data being received, outputting the output data by the program module (26), which output data identify the updated selection of authentication methods,
• if the updated selection of authentication methods is identical to a combination of the one or more performed behavior-based authentication methods and the one or more performed first additional behavior-based authentication methods, generating an authentication signal, which confirms successful authentication of the current user using the mobile portable telecommunications device (100),
• if the updated selection comprises one or more second additional authentication methods, performing the one or more selected second additional authentication methods using the mobile portable telecommunications device (100) in order to authenticate the current user.

3. Method according to any of the preceding claims, wherein the probability-based decision structure (28) is implemented in the form of a Bayesian network, and/or
wherein at least one of the additional authentication methods is an authentication method that has already been performed, which is repeated, and/or
wherein at least one of the additional authentication methods is an alternative authentication method that is performed for the first time as part of the authentication, and/or
wherein at least one of the additional authentication methods is a behavior-based authentication method, and/or
wherein at least one of the additional authentication methods is a behavior-independent authentication method, wherein a predefined behavior-independent authentication method of the current user is captured, wherein the predefined behavior-independent authentication method is a feature of knowledge characteristic of the registered user, of property characteristic of the registered user, and/or a biological property characteristic of the registered user, and/or
wherein the potential damage scenario is identified by indicating an authentication purpose, and/or
wherein the potential attack scenario is identified by one or more indications of an authentication situation, and/or
wherein the current and/or potential damage risk (70) is reduced if a preceding authentication is successfully performed for an identical or greater current damage risk (70) and a time period elapsed since the preceding authentication is shorter than a predefined threshold value, wherein the greater the reduction, the shorter the elapsed time period and the greater the damage risk (70) of the preceding authentication, and/or
wherein, in the event of a lack of input data, input data from a preceding authentication are used if a time period elapsed since the preceding authentication is shorter than a predefined threshold value and wherein the input data used from the preceding authentication are adapted such that they result in a greater current and/or potential damage risk (70), wherein the greater the adaptation, the longer the elapsed time period, and/or
wherein the current user is authenticated to the mobile portable telecommunications device (100), wherein the mobile portable telecommunications device (100) comprises the program module (26) and a processor and wherein the processor of the mobile portable telecommunications device (100) executes the program module (26).

4. Method according to any of the preceding claims, wherein the current user is authenticated to a server (150) via the mobile portable telecommunications device (100), wherein the mobile portable telecommunications device (100) comprises a communication interface for communicating with the server (150) via a network, wherein the server (150) comprises a communication interface for receiving confidence values (540) from the mobile portable telecommunications device (100), a processor, and the program module (26), and wherein the processor of the server (150) executes the program module (26).

5. Method according to any of the preceding claims, wherein a first of the one or more behavior-based authentication methods is an authentication method for authenticating the current user on the basis of gross-motor movements, wherein the mobile portable telecommunications device (100) comprises at least one sensor (114), a gross-motor classification module (200), and an internal memory, wherein the sensor is configured to capture gross-motor movement data (500) for a gross-motor movement of the current user of the mobile portable telecommunications device (100), wherein the gross-motor classification module (200) is configured to classify the gross-motor movement data (500) and is trained to recognize a gross-motor movement of a registered user, wherein the gross-motor classification module (200) is executed by the processor of the mobile portable telecommunications device (100), wherein the first behavior-based authentication method comprises the following steps:
• repeatedly performing the steps of:
o capturing the gross-motor movement data (500) by the at least one sensor of the mobile portable telecommunications device (100),
o inputting the gross-motor movement data (500) into the gross-motor classification module (200),
o generating a first confidence value (540) by the gross-motor classification module (200) relating to whether the current user is a user registered in the mobile portable telecommunications device (100),
o storing the first confidence value (540) in the memory of the mobile portable telecommunications device (100),
• upon an authentication request, accessing the memory of the mobile portable telecommunications device (100) in order to read out at least one of the stored first confidence values (540) from the memory,
• reading out the at least one first confidence value (540) and providing it as part of the input data for the program module (26).

6. Method according to any of the preceding claims, wherein a second of the one or more behavior-based authentication methods is an authentication method for authenticating the current user on the basis of application data (500), wherein the mobile portable telecommunications device (100) comprises an application classification module (200), wherein the application classification module (200) is executed by the processor of the mobile portable telecommunications device (100), wherein the second behavior-based authentication method comprises the following steps:
• repeatedly performing the following steps:
o capturing application data (500),
o inputting the application data (500) into the application classification module (200),
o generating at least one second confidence value (540) by the application classification module (200), wherein the second confidence value (540) indicates a probability that the input application data (500) are data for application behavior of the registered user,
o storing the at least one second confidence value (540) in the memory of the mobile portable telecommunications device (100),
• upon the authentication request, accessing the memory of the mobile portable telecommunications device (100) in order to read out at least one of the stored second confidence values (540) from the memory,
• reading out the at least one second confidence value (540) and providing it as part of the input data for the program module (26).

7. Method according to claim 6, wherein the application data (500) can comprise:
o application usage data for the current user, and/or
o connection data for the mobile portable telecommunications device (100) to other devices.

8. Method according to any of the preceding claims, wherein a third of the one or more behavior-based authentication methods is an authentication method for authenticating the current user on the basis of fine-motor movements, wherein the mobile portable telecommunications device (100) comprises a sensor configured to capture fine-motor movement data (500) of a fine-motor movement of the current user of the mobile portable telecommunications device (100), wherein the mobile portable telecommunications device (100) comprises a fine-motor classification module (200), wherein the fine-motor classification module (200) is configured to classify fine-motor movement data (500) and is trained to recognize a fine-motor movement of a registered user, wherein the fine-motor classification module (200) is executed by the processor of the mobile portable telecommunications device (100), wherein the second behavior-based authentication method comprises the following steps:
• repeatedly performing the following:
o capturing the fine-motor movement data (500),
o inputting the fine-motor movement data (500) into the fine-motor classification module (200),
o generating at least one third confidence value (540) by the fine-motor classification module (200), wherein the third confidence value (540) indicates a probability that the fine-motor movement data (500) are data for a fine-motor movement of the registered user,
o storing the at least one third confidence value (540) in the memory of the mobile portable telecommunications device (100),
• upon the authentication request, accessing the memory of the mobile portable telecommunications device (100) in order to read out at least one of the stored third confidence values (540) from the memory,
• reading out the at least one third confidence value (540) and providing it as part of the input data for the program module (26).

9. Method according to any of claims 5 to 8, wherein the behavior-based authentication further comprises training the gross-motor classification module (200) with the gross-motor movement data (500) for the current user, wherein the gross-motor classification module (200) is trained to the user-specific gross-motor movement pattern of the current user on the condition that the current user is the user registered in the mobile portable telecommunications device (100), and/or
training the application classification module (200) with the application data (500) for the current user, wherein the application classification module (200) is trained to the user-specific application-behavior pattern of the current user on the condition that the current user is the user registered in the system, and/or
training the fine-motor classification module (200) with the fine-motor movement data (500) for the current user, wherein the fine-motor classification module (200) is trained to the user-specific fine-motor movement pattern of the current user on the condition that the current user is the user registered in the system.

10. Method according to any of claims 5 to 9, wherein at least one first pattern in the form of a first pattern function (210) and at least one first comparative data set (220) are stored in the memory of the mobile portable telecommunications device (100), wherein the first comparative data set (220) comprises a plurality of the gross-motor movement data (500), wherein at least one first comparative parameter (230) is calculated from the plurality of the gross-motor movement data (500) in the first comparative data set (220), wherein the gross-motor classification module (200) performs the following steps as part of the gross-motor movement data (500) when the gross-motor movement data (500) are input:
• comparing the captured gross-motor movement data (500) with the at least one first pattern function (210),
• assigning the gross-motor movement data (500) to the first pattern assigned to the first pattern function (210) and obtaining at least one first classification parameter (520) corresponding to the first pattern if the gross-motor movement data (500) can be assigned to the at least one first pattern,
• generating one of the first confidence values (540) for each first classification parameter (520) by comparing the at least one first classification parameter (520) with the relevant first comparative parameter (230) in the first comparative data set (220),
and wherein the step of training includes adding the captured gross-motor movement data (500) to the first comparative data set (220).

11. Method according to claims 6 to 10, wherein at least one second pattern in the form of a second pattern function (210) and at least one second comparative data set (220) are stored in the memory of the mobile portable telecommunications device (100), wherein the second comparative data set (220) comprises a plurality of the application data (500), wherein at least one second comparative parameter (230) is calculated from the plurality of the application data (500) in the second comparative data set (220),
wherein the application classification module (200) performs the following steps as part of the evaluation of the application data (500) when the application data (500) are input:
• comparing the captured application data (500) with the at least one second pattern function (210),
• assigning the application data (500) to the second pattern assigned to the second pattern function (210) and obtaining at least one second classification parameter (520) corresponding to the second pattern if the application data (500) can be assigned to the at least one second pattern,
• generating one of the second confidence values (540) for each of the second classification parameters (520) by comparing the second classification parameters (520) with the relevant second comparative parameter (230) in the second comparative data set (220),
and wherein the step of training includes adding the captured application data (500) to the second comparative data set (220).

12. Method according to any of claims 8 to 11, wherein at least one third pattern in the form of a third pattern function (210) and at least one third comparative data set (220) are stored in the memory of the mobile portable telecommunications device (100), wherein the third comparative data set (220) comprises a plurality of the fine-motor movement data (500), wherein at least one third comparative parameter (230) is calculated from the plurality of the fine-motor movement data (500) in the third comparative data set (220), wherein the fine-motor classification module (200) performs the following steps as part of the evaluation of the fine-motor movement data (500) when the fine-motor movement data (500) are input:
• comparing the captured fine-motor movement data (500) with the at least one third pattern function (210),
• assigning the fine-motor movement data (500) to the third pattern assigned to the third pattern function (210) and obtaining at least one third classification parameter (520) corresponding to the third pattern if the fine-motor movement data (500) can be assigned to the at least one third pattern,
• generating one of the third confidence values (540) for each of the third classification parameters (520) by comparing the third classification parameters (520) with the relevant third comparative parameter (230) in the third comparative data set (220),
and wherein the step of training includes adding the captured fine-motor movement data (500) to the third comparative data set (220), and/or
wherein the gross-motor movement data (500) which are part of the first comparative data set (220) and are older than a specified time are removed from the first comparative data set (220) and are deleted from the memory of the mobile portable telecommunications device (100), and the application data (500) which are part of the second comparative data set (220) and are older than the specified time are removed from the second comparative data set (220) and are deleted from the memory of the mobile portable telecommunications device (100), and the fine-motor movement data (500) which are part of the third comparative data set (220) and are older than the specified time are removed from the third comparative data set (220) and are deleted from the memory of the mobile portable telecommunications device (100).

13. Mobile portable telecommunications device (100) for the automatic adaptive calibration of authentication requests for authentication of a current user of the mobile portable telecommunications device (100), wherein the mobile portable telecommunications device (100) comprises a memory and processor, wherein machine-readable program instructions are stored in the memory, wherein the machine-readable program instructions being executed by the processor prompts the processor to control the mobile portable telecommunications device (100) such that the mobile portable telecommunications device (100) performs a method comprising:
• providing a program module (26), which implements a probability-based decision structure (28) and is configured to:
o receive input data, which identify a potential damage scenario, a potential attack scenario, one or more performed authentication methods and a confidence value (540), resulting from the one or more performed authentication methods, for an identity of the current user of the mobile portable telecommunications device (100) with a registered user,
o determine a current damage risk, wherein the damage risk is a value calculated by the probability-based decision structure (28) using a combination of the received confidence value (540), an expectation value for potential damage in the event of incorrect authentication of the current user, said expectation value being determined by the probability-based decision structure (28) for the potential damage scenario, and an attack probability determined by the probability-based decision structure (28) for the potential attack scenario,
o create a prediction of potential damage risks (70) if one or more predefined additional authentication methods are performed using predefined expectation values for potential increases in the confidence value (540) by the one or more predefined additional authentication methods,
o create a prediction of potential authentication efforts if one or more predefined additional authentication methods are performed using predefined expectation values for potential increases in the authentication effort (64) by the one or more authentication methods,
o create a selection of authentication methods which comprises at least the one or more performed authentication methods, taking into consideration the one or more predefined additional authentication methods, wherein the condition that a combination of damage risk (70) and authentication effort (64) is minimized for the selection of authentication methods is used as a selection criterion,
o output output data which identify the selection of authentication methods,
• performing one or more behavior-based authentication methods in order to authenticate the current user,
• receiving the input data by the program module (26), which input data identify the potential damage scenario, the potential attack scenario, the one or more performed behavior-based authentication methods, and the confidence value (540) resulting from the one or more performed behavior-based authentication methods,
• in response to the input data being received, outputting the output data by the program module (26), which output data identify the selection of authentication methods,
• if the selection of authentication methods is identical to the one or more performed behavior-based authentication methods, generating an authentication signal, which confirms successful authentication of the current user,
• if the selection comprises one or more first additional authentication methods of the predefined additional authentication methods, performing the selected one or more first additional authentication methods in order to authenticate the current user.

14. Server (150) for the automatic adaptive calibration of authentication requests for authentication of a current user of a mobile portable telecommunications device (100), wherein the server (150) comprises a memory and processor, wherein machine-readable program instructions are stored in the memory, wherein the machine-readable program instructions being executed by the processor prompts the processor to control the server (150) such that the server (150) performs a method comprising:
• providing a program module (26), which implements a probability-based decision structure (28) and is configured to:
o receive input data, which identify a potential damage scenario, a potential attack scenario, one or more performed authentication methods and a confidence value (540), resulting from the one or more performed authentication methods, for an identity of the current user of the mobile portable telecommunications device (100) with a registered user,
∘ determine a current damage risk (70), wherein the damage risk (70) is a value calculated by the probability-based decision structure (28) using a combination of the received confidence value (540), an expectation value for potential damage in the event of incorrect authentication of the current user, said expectation value being determined by the probability-based decision structure (28) for the potential damage scenario, and an attack probability determined by the probability-based decision structure (28) for the potential attack scenario,
∘ create a prediction of potential damage risks (70) if one or more predefined additional authentication methods are performed using predefined expectation values for potential increases in the confidence value (540) by the one or more predefined additional authentication methods,
∘ create a prediction of potential authentication efforts if one or more predefined additional authentication methods are performed using predefined expectation values for potential increases in the authentication effort (64) by the one or more authentication methods,
∘ create a selection of authentication methods which comprises at least the one or more performed authentication methods, taking into consideration the one or more predefined additional authentication methods, wherein the condition that a combination of damage risk (70) and authentication effort (64) is minimized for the selection of authentication methods is used as a selection criterion,
∘ output output data which identify the selection of authentication methods,
• receiving a confidence value (540) from the mobile portable telecommunications device (100), wherein the confidence value (540) results from one or more behavior-based authentication methods performed by the mobile portable telecommunications device (100) in order to authenticate the current user,
• receiving the input data by the program module (26), which input data identify the potential damage scenario, the potential attack scenario, the one or more performed behavior-based authentication methods, and the confidence value (540) resulting from the one or more performed behavior-based authentication methods,
• in response to the input data being received, outputting the output data by the program module (26), which output data identify the selection of authentication methods,
• if the selection of authentication methods is identical to the one or more performed behavior-based authentication methods, generating an authentication signal, which confirms successful authentication of the current user using the mobile portable telecommunications device (100),
• if the selection comprises one or more first additional authentication methods of the predefined additional authentication methods, transmitting a perform request for performing the selected one or more first additional authentication methods in order to authenticate the current user to the mobile portable telecommunications device (100).

15. System for the automatic adaptive calibration of authentication requests for authentication of a current user of a mobile portable telecommunications device (100), wherein the system comprises a server (150) according to claim 14 and a mobile portable telecommunications device (100).

## Revendications

1. Procédé d'étalonnage adaptatif automatique de demandes d'authentification pour une authentification d'un utilisateur actuel d'un appareil de télécommunication portable mobile (100), le procédé comprenant :
• la mise au point d'un module de programme (26), lequel met en œuvre une structure de décision (28) basée sur une probabilité et lequel est conçu pour :
∘ recevoir des données d'entrée, lesquelles identifient un scénario de dommage potentiel, un scénario d'attaque potentiel, un ou plusieurs procédés d'authentification exécutés ainsi qu'une valeur de confiance (540) résultant d'un ou de plusieurs procédés d'authentification exécutés pour une identité de l'utilisateur actuel de l'appareil de télécommunication portable mobile (100) avec un utilisateur enregistré,
∘ déterminer un risque de dommage (70) actuel, où, dans le cas du risque de dommage (70), il s'agit d'une valeur attendue pour un dommage potentiel déterminée par une structure de décision (28) basée sur une probabilité moyennant l'emploi d'une combinaison d'une valeur de confiance (540) reçue, d'une structure de décision (28) basée sur une probabilité pour le scénario de dommage potentiel dans le cas d'une authentification erronée de l'utilisateur actuel, et d'une valeur calculée à partir de la probabilité d'une attaque déterminée par la structure de décision (28) basée sur une probabilité pour le scénario d'attaque potentiel,
∘ établir un pronostic pour le risque de dommage (70) potentiel dans le cas d'une exécution d'un ou de plusieurs procédés d'authentification complémentaires prédéfinis moyennant l'emploi de valeurs attendues prédéfinies pour des accroissements potentiels de la valeur de confiance (540) par le ou les procédés d'authentification complémentaires prédéfinis,
∘ établir un pronostic pour des efforts d'authentification potentiels dans le cas d'une exécution d'un ou de plusieurs procédés d'authentification complémentaires prédéfinis moyennant l'emploi de valeurs attendues prédéfinies pour des accroissements potentiels de l'effort d'authentification (64) par le ou les procédés d'authentification,
∘ établir une sélection de procédés d'authentification, lesquels comprennent au moins le ou les procédés d'authentification exécutés, en tenant compte du ou des procédés d'authentification complémentaires prédéfinis, où on emploie en tant que critère de sélection, le fait qu'une combinaison à base du risque de dommage (70) et de l'effort d'authentification (64) est rendue minimale pour la sélection des procédés d'authentification,
∘ émettre des données de sortie, lesquelles identifient la sélection de procédés d'authentification,
• l'exécution d'un ou de plusieurs procédés d'authentification basés sur le comportement moyennant l'emploi de l'appareil de télécommunication portable mobile (100) pour l'authentification de l'utilisateur actuel,
• la réception des données d'entrée par le module de programme (26), lesquelles identifient le scénario de dommage potentiel, le scénario d'attaque potentiel, un ou plusieurs procédés d'authentification basés sur le comportement exécutés et la valeur de confiance (540) résultant d'un ou de plusieurs procédés d'authentification basés sur le comportement exécutés,
• en réponse à la réception des données d'entrée, l'édition des données de sortie par le module de programme (26), lesquelles identifient la sélection de procédés d'authentification,
• dans le cas où la sélection de procédés d'authentification est identique avec le ou les procédés d'authentification basés sur le comportement exécutés, l'émission d'un signal d'authentification, lequel confirme une authentification réussie de l'utilisateur actuel moyennant l'emploi de l'appareil de télécommunication portable mobile (100),
• dans le cas où la sélection comprend un ou plusieurs premiers procédés d'authentification complémentaires parmi les procédés d'authentification complémentaires prédéfinis, l'exécution du ou des premiers procédés d'authentification complémentaires sélectionnés moyennant l'emploi de l'appareil de télécommunication portable mobile (100) pour l'authentification de l'utilisateur actuel.

2. Procédé selon la revendication 1, dans lequel le module de programme (26) est en outre conçu pour :
∘ recevoir des données d'entrée complémentaires par le module de programme (26), lesquelles identifient un ou plusieurs premiers procédés d'authentification complémentaires exécutés et un accroissement de la valeur de confiance (540) résultant dans les faits du ou des premiers procédés d'authentification complémentaires exécutés,
∘ dans le cas où l'accroissement de la valeur de confiance (540) résultant dans les faits du ou des premiers procédés d'authentification complémentaires exécutés dévie de la valeur attendue prédéfinie pour un accroissement potentiel de la valeur de confiance (540) par le ou les premiers procédés d'authentification complémentaires exécutés,
∘ l'actualisation du risque de dommage actuel (70) moyennant l'emploi de l'accroissement de la valeur de confiance (540) reçue résultant dans les faits à partir du ou des premiers procédés d'authentification complémentaires exécutés,
∘ l'établissement d'une sélection actualisée de procédés d'authentification, lesquels comprennent au moins le ou les procédés d'authentification exécutés ainsi que le ou les premiers procédés d'authentification complémentaires exécutés, où on emploie en tant que critère de sélection le fait qu'une combinaison du risque de dommage (70) et de l'effort d'authentification (64) est minimisée pour la sélection de procédés d'authentification,
∘ l'émission de données de sortie complémentaires, lesquelles identifient la sélection actuelle de procédés d'authentification,
où le procédé, dans le cas où le ou les premiers procédés d'authentification complémentaires sont exécutés moyennant l'emploi de l'appareil de télécommunication portable mobile (100) pour l'authentification de l'utilisateur actuel, comprend en outre :
• la réception des données d'entrée complémentaires par le module de programme (26), lesquelles identifient le ou les premiers procédés d'authentification complémentaires exécutés et l'accroissement de la valeur de confiance (540) résultant dans les faits à partir des premiers procédés d'authentification complémentaires exécutés,
• en réponse à la réception des données d'entrée, l'émission des données de sortie par le module de programme (26), lesquelles identifient la sélection actualisée de procédés d'authentification,
• dans le cas où la sélection actuelle de procédés d'authentification est identique avec une combinaison à base du ou des procédés d'authentification basés sur le comportement exécutés et le ou les premiers procédés d'authentification complémentaires basés sur le comportement exécutés, l'émission d'un signal d'authentification, lequel confirme une authentification réussie de l'utilisateur actuel moyennant l'emploi de l'appareil de télécommunication portable mobile (100),
• dans le cas où la sélection actuelle comprend un ou plusieurs deuxièmes procédés d'authentification complémentaires, l'exécution du ou des deuxièmes procédés d'authentification complémentaires sélectionnés moyennant l'emploi de l'appareil de télécommunication (100) mobile portable pour l'authentification de l'utilisateur actuel.

3. Procédé selon l'une des revendications précédentes, dans lequel la structure de décision (28) basée sur la probabilité est mise en œuvre sous la forme d'un réseau de Bayes, et/ou
dans lequel, dans le cas de l'au moins un procédé d'authentification complémentaire, il s'agit d'un procédé d'authentification déjà exécuté, lequel est répété, et/ou
dans lequel, dans le cas de l'au moins un procédé d'authentification complémentaire, il s'agit d'un procédé d'authentification alternatif, lequel est exécuté la première fois dans le cadre de l'authentification, et/ou
dans lequel, dans le cas de l'au moins un procédé d'authentification complémentaire, il s'agit d'un procédé d'authentification basé sur le comportement, et/ou
dans lequel, dans le cas de l'au moins un procédé d'authentification complémentaire, il s'agit d'un procédé d'authentification indépendant du comportement, où une caractéristique d'authentification indépendante du comportement prédéfinie de l'utilisateur actuel est détectée, où, dans le cas de la caractéristique d'authentification indépendante du comportement prédéfinie, il s'agit d'une caractéristique d'un savoir caractéristique pour l'utilisateur enregistré, d'une possession caractéristique pour l'utilisateur enregistré et/ou d'une propriété biologique caractéristique pour l'utilisateur enregistré, et/ou
dans lequel le scénario de dommage potentiel est identifié par l'indication d'un objectif d'authentification, et/ou
dans lequel le scénario d'attaque potentiel est identifié par une ou plusieurs indications concernant une situation d'authentification, et/ou
dans lequel les risques de dommage (70 actuels et/ou potentiels sont réduits lorsqu'une authentification précédente pour un risque de dommage (70) actuel identique ou plus important a été effectuée avec succès et qu'un intervalle de temps écoulé depuis l'authentification précédente est inférieur à une valeur de seuil prédéfinie, où la réduction est d'autant plus importante que l'intervalle de temps écoulé est petit et le risque de dommage (70) de l'authentification précédente était d'autant plus important, et/ou
dans lequel, dans le cas de données d'entrée manquantes, des données d'entrée provenant d'une authentification précédente sont employées, dans le cas où un intervalle de temps écoulé depuis l'authentification précédente est inférieur à une valeur de seuil prédéfinie et dans lequel des données d'entrée employées à partir de l'authentification précédente sont adaptées de telle manière qu'elles ont pour résultat des risques de dommage (70) actuels et/ou potentiels plus élevés, où l'adaptation est d'autant plus grande que l'intervalle de temps écoulé est important, et/ou
dans lequel, l'utilisateur actuel s'authentifie vis-à-vis de l'appareil de télécommunication portable mobile (100), où l'appareil de télécommunication portable mobile (100) présente le module de programme (26) et un processeur et où le processeur de l'appareil de télécommunication portable mobile (100) exécute le module de programme (26).

4. Procédé selon l'une des revendications précédentes, dans lequel l'utilisateur actuel s'authentifie vis-à-vis d'un serveur (150) par le biais de l'appareil de télécommunication portable mobile (100), où l'appareil de télécommunication portable mobile (100) présente une interface de communication pour la communication avec le serveur (150) par le biais d'un réseau, où le serveur (150) présente une interface de communication pour la réception de valeurs de confiance (540) de l'appareil de télécommunication portable mobile (100) , un processeur et le module de programme (26), et où le processeur du serveur (150) exécute le module de programme (26).

5. Procédé selon l'une des revendications précédentes, dans lequel, dans le cas d'un premier parmi le ou les procédés d'authentification basés sur le comportement, il s'agit d'un procédé d'authentification permettant l'authentification de l'utilisateur actuel à l'aide de mouvements de motricité grossière, où l'appareil de télécommunication portable mobile (100) présente au moins un capteur (114), un module de classification de motricité grossière (200) et une mémoire interne, où le capteur est conçu pour une détection de données de mouvement de motricité grossière (500) d'un mouvement de motricité grossière de l'utilisateur actuel de l'appareil de télécommunication portable mobile (100), où le module de classification de motricité grossière (200) est conçu pour une classification des données de mouvement de motricité grossière (500) et est entraîné pour une reconnaissance d'un mouvement de motricité grossière d'un utilisateur enregistré, où le module de classification de motricité grossière (200) est exécuté par le processeur de l'appareil de télécommunication portable mobile (100), où le premier procédé d'authentification basé sur le comportement présente les étapes suivantes :
• l'exécution répétée des étapes :
∘ de détection des données de mouvement de motricité grossière (500) par l'au moins un capteur de l'appareil de télécommunication portable mobile (100),
∘ l'entrée des données de mouvement de motricité grossière (500) dans le module de classification de motricité grossière (200),
∘ la génération d'une première valeur de confiance (540) par le module de classification de motricité grossière (200) si l'utilisateur actuel est un utilisateur enregistré dans l'appareil de télécommunication portable mobile (100),
∘ l'enregistrement de la première valeur de confiance (540) dans la mémoire de l'appareil de télécommunication portable mobile (100),
• suite à une demande d'authentification, l'accès à la mémoire de l'appareil de télécommunication portable mobile (100) afin de lire au moins une première valeur de confiance (540) enregistrée à partir de la mémoire,
• la lecture de l'au moins une première valeur de confiance (540) et la préparation en tant que partie des données d'entrée pour le module de programme (26).

6. Procédé selon l'une des revendications précédentes, dans lequel, dans le cas d'un ou de plusieurs deuxièmes parmi le ou les procédés d'authentification basés sur le comportement, il s'agit d'un procédé d'authentification permettant d'authentifier l'utilisateur actuel à l'aide de données d'application (500), où l'appareil de télécommunication portable mobile (100) présente un module de classification d'applications (200), où le module de classification d'applications (200) est exécuté par le processeur de l'appareil de télécommunication portable mobile (100), où le deuxième procédé d'authentification basé sur le comportement présente les étapes suivantes :
• l'exécution répétée des étapes suivantes :
∘ la détection de données d'application (500),
∘ l'entrée des données d'application (500) dans le module de classification d'applications (200),
∘ la génération d'au moins une deuxième valeur de confiance (540) par le module de classification d'applications (200), où la deuxième valeur de confiance (540) indique une probabilité que les données d'application (500) entrées sont des données d'un comportement d'application de l'utilisateur enregistré,
∘ l'enregistrement de l'au moins une deuxième valeur de confiance (540) dans la mémoire de l'appareil de télécommunication portable mobile (100),
• suite à la demande d'authentification, l'accès à la mémoire de l'appareil de télécommunication portable mobile (100) afin de lire au moins une deuxième valeur de confiance (540) enregistrée à partir de la mémoire,
• la lecture de l'au moins une deuxième valeur de confiance (540) et la préparation sous forme de partie des données d'entrée pour le module de programme (26).

7. Procédé selon la revendication 6, dans lequel les données d'application (500) peuvent comprendre :
∘ des données d'utilisation d'application de l'utilisateur actuel, et/ou
∘ des données de connexion de l'appareil de télécommunication portable mobile (100) avec d'autres appareils.

8. Procédé selon l'une des revendications précédentes, dans lequel, dans le cas d'un troisième parmi le ou les procédés d'authentification basés sur le comportement, il s'agit d'un procédé d'authentification permettant l'authentification de l'utilisateur actuel à l'aide de mouvements de motricité fine, où l'appareil de télécommunication portable mobile (100) présente au moins un capteur pour une détection de données de mouvement de motricité fine (500) d'un mouvement de motricité fine de l'utilisateur actuel de l'appareil de télécommunication portable mobile (100), où l'appareil de télécommunication portable mobile (100) présente un module de classification de motricité fine (200), où le module de classification de motricité fine (200) est conçu pour une classification des données de mouvement de motricité fine (500) et est entraîné pour une reconnaissance d'un mouvement de motricité fine d'un utilisateur enregistré, où le module de classification de motricité fine (200) est exécuté par le processeur de l'appareil de télécommunication portable mobile (100), où le deuxième procédé d'authentification basé sur le comportement présente les étapes suivantes :
• l'exécution répétée des étapes :
∘ de détection des données de mouvement de motricité fine (500),
∘ d'entrée des données de mouvement de motricité fine (500) dans le module de classification de motricité fine (200),
∘ de génération d'au moins une troisième valeur de confiance (540) par le module de classification de motricité fine (200), où la troisième valeur de confiance (540) indique une probabilité que les données de mouvement de motricité fine (500) entrées soient des données d'un mouvement de motricité fine de l'utilisateur enregistré,
∘ d'enregistrement de l'au moins une troisième valeur de confiance (540) dans la mémoire de l'appareil de télécommunication portable mobile (100),
• suite à la demande d'authentification, l'accès à la mémoire de l'appareil de télécommunication portable mobile (100) afin de lire au moins une des troisièmes valeurs de confiance (540) enregistrées à partir de la mémoire,
• la lecture de l'au moins une troisième valeur de confiance (540) et la mise à disposition en tant que partie des données d'entrée pour le module de programme (26).

9. Procédé selon l'une des revendications 5 à 8, dans lequel l'authentification basée sur le comportement comprend en outre l'entraînement du module de classification de motricité grossière (200) avec des données de mouvement de motricité grossière (500) de l'utilisateur actuel, où le module de classification de motricité grossière (200) est entrainé sur un modèle de mouvement de motricité grossière spécifique à l'utilisateur de l'utilisateur actuel à la condition que l'utilisateur actuel de l'appareil de télécommunication portable mobile (100) soit l'utilisateur enregistré, et/ou
l'entraînement du module de classification d'applications (200) avec les données d'application (500) de l'utilisateur actuel, où le module de classification d'applications (200) est entraîné sur le modèle de comportement d'application spécifique à l'utilisateur de l'utilisateur actuel à la condition que l'utilisateur actuel soit l'utilisateur enregistré dans le système, et/ou
l'entraînement du module de classification de motricité fine (200) avec les données de mouvement de motricité fine (500) de l'utilisateur actuel, où le module de classification de motricité fine (200) est entraîné sur le modèle de mouvement de motricité fine spécifique à l'utilisateur de l'utilisateur actuel à la condition que l'utilisateur actuel soit l'utilisateur enregistré dans le système.

10. Procédé selon l'une des revendications 5 à 9, dans lequel au moins un premier modèle sous la forme d'une première fonction modèle (210) et au moins un premier ensemble de données de comparaison (220) sont enregistrés dans la mémoire de l'appareil de télécommunication portable mobile (100), où le premier ensemble de données de comparaison (220) comprend une multiplicité des données de mouvement de motricité grossière (500), où on calcule au moins un premier paramètre de comparaison (230) à partir de la multiplicité des données de mouvement de motricité grossière (500) du premier ensemble de données de comparaison (220), où le module de classification de motricité grossière (200) exécute, suite à l'entrée des données de mouvement de motricité grossière (500), les étapes suivantes dans le cadre des données de mouvement de motricité grossière (500) :
• la comparaison des données de mouvement de motricité grossière (500) détectés avec l'au moins une première fonction modèle (210),
• l'association des données de mouvement de motricité grossière (500) avec le premier modèle associé à la première fonction modèle (210) et l'obtention de l'au moins un premier paramètre de classification (520) correspondant au premier modèle dans le cas où les données de mouvement de motricité grossière (500) peuvent être associées à l'au moins un premier modèle,
• la génération d'une des premières valeurs de confiance (540) pour chaque premier paramètre de classification (520) par une comparaison de l'au moins un premier paramètre de classification (520) avec le premier paramètre de comparaison (230) respectif du premier ensemble de données de comparaison (220),
et dans lequel l'étape d'entraînement comprend un ajout des données de mouvement de motricité grossière (500) détectées avec le premier ensemble de données de comparaison (220).

11. Procédé selon l'une des revendications 6 à 10, dans lequel au moins un deuxième modèle sous la forme d'une deuxième fonction modèle (210) et au moins un deuxième ensemble de données de comparaison (220) sont enregistrés dans la mémoire de l'appareil de télécommunication portable mobile (100), où le deuxième ensemble de données de comparaison (220) comprend une multiplicité des données d'application (500), où on calcule au moins un deuxième paramètre de comparaison (230) à partir de la multiplicité des données d'application (500) du deuxième ensemble de données de comparaison (220), où le module de classification d'applications (200) exécute, suite à l'entrée des données d'application (500), les étapes suivantes dans le cadre de l'évaluation des données d'application (500) :
• la comparaison des données d'application (500) détectées avec l'au moins une deuxième fonction modèle (210),
• l'association des données d'application (500) au deuxième modèle associé à la deuxième fonction modèle (210) et l'obtention de l'au moins un deuxième paramètre de classification (520) correspondant au deuxième modèle dans le cas où les données d'application (500) peuvent être associées à l'au moins un deuxième modèle,
• la génération d'une des deuxièmes valeurs de confiance (540) pour chaque deuxième paramètre de classification (520) par une comparaison de l'au moins un deuxième paramètre de classification (520) avec le deuxième paramètre de comparaison (230) respectif du deuxième ensemble de données de comparaison (220),
et dans lequel l'étape d'entraînement comprend un ajout des données d'applications (500) détectées au deuxième ensemble de données de comparaison (220).

12. Procédé selon l'une des revendications 8 à 11, dans lequel au moins un troisième modèle sous la forme d'une troisième fonction modèle (210) et au moins un troisième ensemble de données de comparaison (220) sont enregistrés dans la mémoire de l'appareil de télécommunication portable mobile (100), où le troisième ensemble de données de comparaison (220) comprend une multiplicité des données de mouvement de motricité fine (500), où on calcule au moins un troisième paramètre de comparaison (230) à partir de la multiplicité des données de mouvement de motricité fine (500) du troisième ensemble de données de comparaison (220), où le module de classification de motricité fine (200) exécute, suite à l'entrée des données de mouvement de motricité fine (500), les étapes suivantes dans le cadre de l'évaluation des données de mouvement de motricité fine (500) :
• la comparaison des données de mouvement de motricité fine (500) détectées avec l'au moins une troisième fonction modèle (210),
• l'association des données de mouvement de motricité fine (500) au troisième modèle associé à la troisième fonction modèle (210) et l'obtention de l'au moins un troisième paramètre de classification (520) correspondant au troisième modèle dans le cas où les données de mouvement de motricité fine (500) peuvent être associées à l'au moins un troisième modèle,
• la génération d'une des troisièmes valeurs de confiance (540) pour chaque troisième paramètre de classification (520) par une comparaison de l'au moins un troisième paramètre de classification (520) avec le troisième paramètre de comparaison (230) respectif du troisième ensemble de données de comparaison (220),
et dans lequel l'étape d'entraînement comprend un ajout des données de mouvement de motricité fine (500) détectées avec le troisième ensemble de données de comparaison (220), et/ou
dans lequel les données de mouvement de motricité grossière (500), lesquelles font partie du premier ensemble de données de comparaison (220) et dépassent un âge défini, sont retirées du premier ensemble de données de comparaison (220) et sont effacées de la mémoire de l'appareil de télécommunication portable mobile (100), et les données d'application (500), lesquelles font partie du deuxième ensemble de données de comparaison (220) et dépassent un âge défini, sont retirées du deuxième ensemble de données de comparaison (220) et sont effacées de la mémoire de l'appareil de télécommunication portable mobile (100), et les données de mouvement de motricité fine (500), lesquelles font partie du troisième ensemble de données de comparaison (220) et dépassent un âge défini, sont retirées du troisième ensemble de données de comparaison (220) et sont effacées de la mémoire de l'appareil de télécommunication portable mobile (100).

13. Appareil de télécommunication portable mobile (100) permettant l'étalonnage adaptatif automatique de demandes d'authentification pour une authentification d'un utilisateur actuel de l'appareil de télécommunication portable mobile (100), où l'appareil de télécommunication portable mobile (100) comprend une mémoire et un processeur, où des instructions de programme lisibles par machine sont enregistrées dans la mémoire, où une exécution des instructions de programme lisibles par machine par le processeur fait en sorte que le processeur commande l'appareil de télécommunication portable mobile (100) pour que l'appareil de télécommunication portable mobile (100) exécute un procédé, lequel comprend :
• la mise au point d'un module de programme (26), lequel met en œuvre une structure de décision (28) basée sur une probabilité et lequel est conçu pour :
∘ recevoir des données d'entrée, lesquelles identifient un scénario de dommage potentiel, un scénario d'attaque potentiel, un ou plusieurs procédés d'authentification exécutés ainsi qu'une valeur de confiance (540) résultant d'un ou de plusieurs procédés d'authentification exécutés pour identifier une identité de l'utilisateur actuel de l'appareil de télécommunication portable mobile (100) avec un utilisateur enregistré,
∘ déterminer un risque de dommage actuel, où, dans le cas du risque de dommage, il s'agit d'une valeur attendue pour un dommage potentiel déterminée par une structure de décision (28) basée sur une probabilité moyennant l'emploi d'une combinaison d'une valeur de confiance (540) reçue, d'une structure de décision (28) basée sur une probabilité pour le scénario de dommage potentiel dans le cas d'une authentification erronée de l'utilisateur actuel, et d'une valeur calculée par la structure de décision (28) basée sur la probabilité d'attaque déterminée pour le scénario d'attaque potentiel,
∘ établir un pronostic pour des risques de dommage (70) potentiels dans le cas d'une exécution d'un ou de plusieurs procédés d'authentification complémentaires prédéfinis moyennant l'emploi de valeurs attendues prédéfinies pour des accroissements potentiels de la valeur de confiance (540) par le ou les procédés d'authentification complémentaires prédéfinis,
∘ établir un pronostic pour des efforts d'authentification potentiels dans le cas d'une exécution d'un ou de plusieurs procédés d'authentification complémentaires prédéfinis moyennant l'emploi de valeurs attendues prédéfinies pour des accroissements potentiels de l'effort d'authentification (64) par le ou les procédés d'authentification,
∘ établir une sélection de procédés d'authentification, lesquels comprennent au moins le ou les procédés d'authentification exécutés, en tenant compte du ou des procédés d'authentification complémentaires prédéfinis, où on emploie en tant que critère de sélection, le fait qu'une combinaison à base du risque de dommage (70) et de l'effort d'authentification (64) est rendue minimale pour la sélection des procédés d'authentification,
∘ émettre des données de sortie, lesquelles identifient la sélection des procédés d'authentification,
• l'exécution d'un ou de plusieurs procédés d'authentification basés sur le comportement pour l'authentification de l'utilisateur actuel,
• la réception des données d'entrée par le module de programme (26), lesquelles identifient un scénario de dommage potentiel, un scénario d'attaque potentiel, un ou plusieurs procédés d'authentification basés sur le comportement exécutés et une valeur de confiance (540) résultant d'un ou de plusieurs procédés d'authentification basés sur le comportement exécutés,
• en réponse à la réception des données d'entrée, l'édition des données de sortie par le module de programme (26), lesquelles identifient la sélection de procédés d'authentification,
• dans le cas où la sélection de procédés d'identification est identique avec le ou les procédés d'authentification basés sur le comportement exécutés, l'émission d'un signal d'authentification, lequel confirme une authentification réussie de l'utilisateur actuel,
• dans le cas où la sélection comprend un ou plusieurs premiers procédés d'authentification complémentaires parmi les procédés d'authentification complémentaires prédéfinis, l'exécution du ou des premiers procédés d'authentification complémentaires sélectionnés pour l'authentification de l'utilisateur actuel.

14. Serveur (150) permettant l'étalonnage adaptatif automatique de demandes d'authentification pour une authentification d'un utilisateur actuel d'un appareil de télécommunication portable mobile (100), où le serveur (150) comprend une mémoire et un processeur, où des instructions de programme lisibles par machine sont enregistrées dans la mémoire, où une exécution des instructions de programme lisibles par machine par le processeur fait en sorte que le processeur commande le serveur (150) pour que le serveur (150) exécute un procédé, lequel comprend :
• la mise au point d'un module de programme (26), lequel met en œuvre une structure de décision (28) basée sur une probabilité et lequel est conçu pour :
∘ recevoir des données d'entrée, lesquelles identifient un scénario de dommage potentiel, un scénario d'attaque potentiel, un ou plusieurs procédés d'authentification exécutés ainsi qu'une valeur de confiance (540) résultant d'un ou de plusieurs procédés d'authentification exécutés pour une identité de l'utilisateur actuel de l'appareil de télécommunication portable mobile (100) avec un utilisateur enregistré,
∘ déterminer un risque de dommage (70) actuel, où, dans le cas du risque de dommage (70), il s'agit d'une valeur attendue pour un dommage potentiel déterminé par une structure de décision (28) basée sur une probabilité moyennant l'emploi d'une combinaison d'une valeur de confiance (540) reçue, d'une structure de décision (28) basée sur une probabilité pour le scénario de dommage potentiel dans le cas d'une authentification erronée de l'utilisateur actuel, et d'une valeur calculée par la structure de décision (28) basée sur une probabilité pour le scénario d'attaque potentiel,
∘ établir un pronostic pour des risques de dommage (70) potentiels dans le cas d'une exécution d'un ou de plusieurs procédés d'authentification complémentaires prédéfinis moyennant l'emploi de valeurs attendues prédéfinies pour des accroissements potentiels de la valeur de confiance (540) par le ou les procédés d'authentification complémentaires prédéfinis,
∘ établir un pronostic pour des efforts d'authentification potentiels dans le cas d'une exécution d'un ou de plusieurs procédés d'authentification complémentaires prédéfinis moyennant l'emploi de valeurs attendues prédéfinies pour des accroissements potentiels de l'effort d'authentification (64) par le ou les procédés d'authentification,
∘ établir une sélection de procédés d'authentification, lesquels comprennent au moins le ou les procédés d'authentification exécutés, en tenant compte du ou des procédés d'authentification complémentaires prédéfinis, où on emploie en tant que critère de sélection, le fait qu'une combinaison à base du risque de dommage (70) et l'effort d'authentification (64) est rendue minimale pour la sélection de procédés d'authentification,
∘ émettre des données de sortie, lesquelles identifient la sélection de procédés d'authentification,
• la réception d'une valeur de confiance (540) à partir de l'appareil de télécommunication portable mobile (100), où la valeur de confiance (540) résulte d'un ou de plusieurs procédés d'authentification basés sur le comportement exécutés par l'appareil de télécommunication portable mobile (100) pour l'authentification de l'utilisateur actuel,
• la réception des données d'entrée par le module de programme (26), lesquelles identifient le scénario de dommage potentiel, le scénario d'attaque potentiel, un ou plusieurs procédés d'authentification basés sur le comportement exécutés et une valeur de confiance (540) résultant d'un ou de plusieurs procédés d'authentification basés sur le comportement exécutés,
• en réponse à la réception des données d'entrée, l'édition des données de sortie par le module de programme (26), lesquelles identifient la sélection de procédés d'authentification,
• dans le cas où la sélection de procédés d'authentification est identique avec le ou les procédés d'authentification basés sur le comportement exécutés, l'émission d'un signal d'authentification, lequel confirme une authentification réussie de l'utilisateur actuel moyennant l'emploi de l'appareil de télécommunication portable mobile (100),
• dans le cas où la sélection comprend un ou plusieurs premiers procédés d'authentification complémentaires parmi les procédés d'authentification complémentaires prédéfinis, l'envoi d'une demande d'authentification pour l'exécution du ou des premiers procédés d'authentification complémentaires sélectionnés pour l'authentification de l'utilisateur actuel vis-à-vis de l'appareil de télécommunication portable mobile (100).

15. Système permettant l'étalonnage adaptatif automatique de demandes d'authentification pour une authentification d'un utilisateur actuel d'un appareil de télécommunication portable mobile (100), où le système comprend un serveur (150) selon la revendication 14 et un appareil de télécommunication portable mobile (100).
